# EUROPÄISCHE PATENTSCHRIFT

(11) **EP 3 730 434 B1**
(45) Veröffentlichungstag und Bekanntmachung des Hinweises auf die Patenterteilung: **04.05.2022**
(21) Anmeldenummer: 19208345.9
(22) Anmeldetag: 11.11.2019
(51) Int. Cl.: B65G 47/90, B65G 47/91, B65G 59/02, B65G 61/00

(54) **VERFAHREN UND SYSTEM ZUR KOMMISSIONIERUNG VON AUF ARTIKELPALETTEN IN EINEM PALETTENLAGER IN STAPELBAREN STÜCKGUTGEBINDEN BEREIT GESTELLTER WAREN AUF EINER ZIELPALETTE**
METHOD AND SYSTEM FOR PICKING GOODS IN STACKABLE PIECE GOOD CONTAINERS ON PALLETS IN A PALLET STORAGE ON A TARGET PALLET
PROCÉDÉ ET SYSTÈME DE PRÉPARATION DE COMMANDES DE MARCHANDISES DÉJÀ PLACÉES DANS DES RÉCIPIENTS EMPILABLES SUR DES PALETTES DANS UN ENTREPÔT SUR UNE PALETTE CIBLE

(30) Priorität: 25.04.2019 DE 102019110704; 18.10.2019 DE 102019128197; 18.10.2019 DE 202019105858 U
(43) Veröffentlichungstag der Anmeldung: 28.10.2020
(73) Patentinhaber: Stöcklin Logistik AG, 4242 Laufen (CH)
(72) Erfinder: BEGERT, Urs, 2563 Ipsach (CH)
(74) Vertreter: Söllner, Udo

(56) Entgegenhaltungen:
- EP-A1- 0 849 199
- EP-A1- 2 384 864
- EP-A1- 2 732 926
- EP-A1- 3 020 515
- EP-A1- 3 246 272
- EP-B1- 0 849 199
- CN-U- 205 363 927
- DE-A1- 4 427 488
- DE-A1-102013 005 613
- DE-B4- 19 959 285
- DE-C1- 10 123 081

## Beschreibung

Die vorliegende Erfindung betrifft ein Verfahren zur Kommissionierung von auf Artikelpaletten in einem Palettenlager in stapelbaren Stückgutgebinden bereitgestellter Waren, bei dem Waren auf einer Zielpalette in den stapelbaren Stückgutgebinden zusammengeführt werden, und die Stückgutgebinde mit einem von einer Tragemittel einer automatisierten Vorrichtung zur Depalettierung der Stückgutgebinde von einer Unterlage anhebbaren unteren Auflagebereich und einer Seitenwand versehen sind, nach dem Oberbegriff des Anspruchs 1. Die Erfindung betrifft darüber hinaus ein System zur Durchführung des erfindungsgemäßen Verfahrens nach dem Anspruch 11.

Bei den vorstehend erwähnten stapelbaren Stückgutgebinden kann es sich um Einweggebinde in der Form von beispielsweise Kartons handeln oder auch um Mehrweggebinde, welche aus einem Kunststoffwerkstoff gebildet sind oder auch um Klappboxen, also Gebinden mit einklappbaren Seitenwänden. Die Gebinde können grundsätzlich eine beliebige Art von Artikeln beinhalten, welche beispielsweise zum täglichen Gebrauch oder Verzehr vorgesehen sind.

Die vorstehend erwähnte Vielfalt an Gebinden ist oftmals im Bereich von Obst und Gemüse zu finden, Stückgütern also, die aufgrund ihrer Verderblichkeit im Verteilerzentrum schnell und trotzdem schonend gehandhabt werden müssen.

Der Umschlag oder die Handhabung der mit Obst und Gemüseprodukten oder Salaten befüllten Stückgutgebinden findet oftmals in Palettenlagern statt, dort werden die erwähnten Produkte in den erwähnten Gebinden auf standardisierten Paletten angeliefert und müssen zur weiteren Handhabung der Gebinde von den Paletten entpalettiert oder depalettiert werden. Zu diesem Zweck werden in den erwähnten Palettenlagern oder Verteilerzentren für Obst und Gemüse die Gebinde von Hand depalettiert, also manuell von der Palette abgenommen, und das abgenommene Gebinde sodann auf eine andere Palette abgelegt werden.

Es hat sich auch gezeigt, dass die Obst- und Gemüseprodukte in den Verteilerzentren in hinsichtlich der Abmessungen standardisierten Gebinden angeliefert werden, die üblicherweise eine Grundfläche von 600 mal 400 mm mit unterschiedlichen Höhen aufweisen oder eine Grundfläche von 300 mal 400 mm mit ebenfalls unterschiedlichen Höhen besitzen.

Einweggebinde besitzen dabei oftmals im Bereich der Seiten oder Querkanten angeordnete Zentrierlaschen oder auch Stapelnasen, welche jeweils im Eckbereich oder in der Mitte einer jeweiligen Seitenkante der Oberkanten der oftmals aus Kartonmaterial gebildeten Einweggebinde angeordnet sind.

Die Mehrweggebinde und Klappboxen besitzen dahingehend oftmals in den Seitenwänden oder Querwänden ausgebildete Handgriffausnehmungen oder Griffmulden, mit denen diese Mehrweggebinde und Klappboxen manuell angehoben werden können.

Eine zusätzliche Problematik besteht bei den erwähnten Obst- und Gemüseprodukten darin, dass diese oftmals einen hohen Feuchteanteil aufweisen, was dafür sorgt, dass aus Kartonmaterial gebildete Gebinde beim Depalettieren von der Unterseite her unterstützt werden müssen, um eine Beschädigung des Gebindes zu vermeiden.

Aber auch andere, in den Stückgutgebinden mit auch von den genannten Abmessungen abweichenden Abmessungen enthaltene Artikel, wie beispielsweise Schokolade, Fleisch, Fisch und Wurstwaren oder andere Lebensmittel oder auch Drogerieartikel oder dergleichen müssen bei der Handhabung der Stückgutgebinde mit Vorsicht behandelt werden, um die Inhalte nicht zu beschädigen, was auch voraussetzt, dass die Beschädigung des Gebindes an sich vermieden werden muss.

Anhand der DE 199 59 285 B4 , welche die Merkmale der Oberbegriffe der Ansprüche 1 und 11 offenbart, sind ein Vakuum-Greifsystem zum Greifen eines Objekts und Handhabungsgerät zum Handhaben des Objekts bekannt geworden. Bei dem hier beschriebenen bekannten Vakuumgreifsystem ist an einem Ausleger eines Manipulators in der Form eines Industrieroboters ein Saugkopf mit mehreren Saugmitteln beschrieben, der an einer Seitenwand eines zu manipulierenden Objekts angesetzt wird und dieses mittels einer durch die Erzeugung von Unterdruck herbeigeführten Haltekraft fixieren kann. Zur weiteren Stabilisierung und Fixierung des zu manipulierenden Objekts besitzt dieses bekannte Vakuumgreifsystem im rechten Winkel zu dem Saugkopf angeordnet einen zweiten Saugkopf, der an der Oberseite oder Deckseite des zu manipulierenden Objekts in Anlage gebracht werden kann, um durch die Erzeugung von Unterdruck im Bereich des zweiten Saugkopfes eine Hebekraft auszuüben.

Das so angehobene Objekt kann dann stabilisiert werden, indem ein mechanischer Untergreifer in den Zwischenraum zwischen dem angehobenen Objekt und dem darunter befindlichen Objekt geschoben wird.

Dieses bekannte Vakuumgreifsystem eignet sich nicht zum Depalettieren von Gebinden mit Obst- und Gemüseprodukten, da die Gebinde, in denen die Obst- und Gemüseprodukte in den Verteilerzentren auf Paletten angeliefert werden, keine Oberseiten aufweisen, an denen der zweite Saugkopf angeordnet werden könnte, sondern die Obst- und Gemüseprodukte aufnehmenden Gebinde oben beziehungsweise an der Oberseite regelmäßig offen sind.

Anhand der EP 2 874 925 B1 ist ein Greiferkopf zum Transport von Stückgutgebinden bekannt geworden, der eine Saugleiste aufweist, die mit einer Seitenwand des zu manipulierenden Gebindes in Kontakt gebracht werden kann, um durch die Erzeugung von Unterdruck eine Hebekraft auf das Stückgutgebinde auszuüben, um einen Zwischenraum zwischen dem Stückgutgebinde und dem darunterliegenden Gebinde zu schaffen, in den eine Trageplatte zur Unterstützung des zu manipulierenden Gebindes von unten her eingebracht werden kann.

Anhand eines ebenfalls bekannt gewordenen Greifersystems mit einem Industrieroboter mit Ausleger, an dem seitlich verstellbare Druckplatten angeordnet sind, ist bereits versucht worden, Stückgutgebinde zu depalettieren. Dieses bekannte Greifersystem ist aber aufgrund der Tatsache, dass das Stückgutgebinde über eine auf die Seitenwände des Gebindes von den Druckplatten ausgeübte Klemmkraft gehalten wird, nicht zum Depalettieren von Obst- und Gemüseprodukte enthaltenden Gebinden geeignet, da durch die Druckplatten die Einweggebinde gequetscht werden würden, was zu Druckstellen an den Obst- und Gemüseprodukten führen würde und diese dadurch beschädigt werden.

Schließlich ist anhand der EP 2 154 088 B1 ein Verfahren und System zur Kommissionierung von in einem Palettenlager gelagerter Waren bekannt geworden. Bei diesem bekannten Verfahren und System wird in der zur oben beschriebenen Weise ähnlichen Art und Weise manuell depalettiert und palettiert, die Waren werden also einer mit dem Kommissionierauftrag beauftragten Person auf der Artikelpalette oder Quellpalette zur Verfügung gestellt, die Person nimmt dann die zu kommissionierende Ware manuell von der Quellpalette und legt sie auf der Zielpalette ab. Die Stückgutgebinde werden dabei zu beiden Seiten des Kanals, in dem sich die Bedienperson befindet, in Hochregallagern gelagert oder zwischengelagert.

In ähnlicher Weise werden solche Artikelpaletten bei einem mit einem Greifersystem versehenen System in Regalreihen zu beiden Seiten der Lagergasse gelagert, wobei das Greifersystem oder der Manipulator von der Lagergasse ausgehend auf beide Regalreihen zugreifen kann.

Ausgehend hiervon liegt der vorliegenden Erfindung die Aufgabe zugrunde, ein Verfahren zur Kommissionierung von auf Artikelpaletten in einem Palettenlager in stapelbaren Stückgutgebinden bereit gestellter Waren zu schaffen, bei dem unterschiedliche Waren auf der Zielpalette in den stapelbaren Stückgutgebinden zusammengeführt werden, wobei hierzu ein automatisiertes System zum Einsatz kommen soll. Auch soll ein solches System bereitgestellt werden.

Die Erfindung weist zur Lösung dieser Aufgabe hinsichtlich des Verfahrens die im Anspruch 1 angegebenen Merkmale auf, vorteilhafte Ausgestaltungen des Verfahrens sind in den weiteren Ansprüchen beschrieben. Darüber hinaus weist die Erfindung hinsichtlich des zu schaffenden Systems die im Anspruch 11 angegebenen Merkmale auf, wobei vorteilhafte Ausgestaltungen des Systems in den weiteren Ansprüchen beschrieben sind.

Die Erfindung schafft ein Verfahren zur Kommissionierung von auf Artikelpaletten in einem Palettenlager in stapelbaren Stückgutgebinden bereitgestellter Waren, bei dem Waren auf einer Zielpalette in den stapelbaren Stückgutgebinden zusammengeführt werden und die Stückgutgebinde mit einem von einem Tragemittel einer automatisierten Vorrichtung zur Depalettierung der Stückgutgebinde von einer Unterlage anhebbaren unteren Auflagebereich und einer Seitenwand versehen sind, mit folgenden Schritten:
- Herbeiführen eines lösbaren Eingriffs einer Halteeinrichtung der Vorrichtung zur Depalettierung mit einer Ausnehmung der Seitenwand des Stückgutgebindes
- Anheben des Stückgutgebindes mittels der Halteeinrichtung zur Trennung des Auflagebereichs des Stückgutgebindes zumindest entlang eines Teilbereichs von der Unterlage zur Herbeiführung eines Zwischenraums zwischen dem Auflagebereich und der Unterlage
- Einführen des Tragemittels in den Zwischenraum
- Trennen des angehobenen Stückgutgebindes von der Unterlage mittels des in den Zwischenraum eingeführten Tragemittels
- Übergeben des getrennten Stückgutgebindes von dem Tragemittel an eine Fördereinrichtung
- Transportieren des getrennten Stückgutgebindes mittels der Fördereinrichtung zu einer automatisierten Vorrichtung zur Palettierung des Stückgutgebindes in der Form eines getrennten Stückgutgebindes oder eines mindestens zwei Stückgutgebinde aufweisenden Stückgutgebindestapels
- Positionieren des getrennten Stückgutgebindes oder des Stückgutgebindestapels auf der Zielpalette mittels der automatisierten Vorrichtung zur Palettierung des Stückgutgebindes als Stückgutgebinde oder Stückgutgebindestapel.

Das Tragemittel kann eine Trageplatte sein oder eine andere Trageeinrichtung.

Im Gegensatz zu den bekannten Verfahren und Systemen schafft die Erfindung ein Verfahren und ein System zur automatisierten Kommissionierung von in dem Palettenlager auf Artikelpaletten bereit gestellter Waren, welches dazu in der Lage ist, unterschiedliche Waren auf der Zielpalette oder Kundenpalette zusammenzuführen, ohne dass hierzu eine oftmals belastende und anstrengende und arbeitsaufwändige manuelle Tätigkeit durch einen Kommissionierer erforderlich ist.

Bei dem erfindungsgemäßen Verfahren wird dem Umstand Rechnung getragen, dass die vorstehend erwähnten Stückgutgebinde, die insbesondere zum Transport von Obst- und Gemüseprodukten von Hersteller bis in eine Verkaufsfiliale eingesetzt werden, mit Ausnehmungen oder Handgriffausnehmungen an einer Seitenwand des Gebindes versehen sind.

Diese Stückgutgebinde werden beim Hersteller der umzuschlagenden Produkte manuell gehandhabt, also beispielsweise in der Gärtnerei oder beim Obst- und Gemüseerzeuger und mit den rasch verderblichen Produkten befüllt. Diese rasch verderblichen Produkte müssen im Verteilerzentrum sehr sorgsam und sorgfältig gehandhabt werden, es ist also beispielsweise nicht möglich, diese Stückgutgebinde mit einer auf die Seitenwände des Gebindes wirkenden Klemmkraft zu beaufschlagen, da hierdurch die empfindlichen Produkte in den Stückgutgebinden beschädigt werden würden.

In ähnlicher Weise darf auf die Stückgutgebinde auch von oben her keine Kraft einwirken, da die Stückgutgebinde oben regelmäßig offen sind und selbst dann, wenn bei einem Karton ein Deckel vorhanden sein sollte, darf auf das Gebinde von oben her keine Klemmkraft ausgeübt werden, da dies wieder zur Beschädigung der empfindlichen Waren führen würde.

Das erfindungsgemäße Verfahren umfasst daher die Herbeiführung eines lösbaren Eingriffs einer Halteeinrichtung der Vorrichtung zur Depalettierung - welche nachstehend noch ausführlicher dargestellt werden wird - und zwar mit der bereits erwähnten Ausnehmung der Seitenwand des Stückgutgebindes.

Auch umfasst das erfindungsgemäße Verfahren das Anheben des Stückgutgebindes mittels der Halteeinrichtung zur Trennung des unteren Auflagebereichs des Stückgutgebindes zumindest entlang eines Teilbereichs von der Unterlage des Stückgutgebindes zur Herbeiführung eines Zwischenraums zwischen dem Auflagebereich und der Unterlage.

Das erfindungsgemäße Verfahren umfasst weiterhin das Einführen der Tragemittels in der Form beispielsweise einer Trageplatte der automatisierten Depalettierungsvorrichtung in den Zwischenraum und das Trennen des angehobenen Stückgutgebindes von der Unterlage mittels der in den Zwischenraum eingeführten Trageplatte.

Bei der Trageplatte oder dem Tragemittel kann es sich um einen plattenförmige Tragekörper handeln oder auch um einen Tragekörper, der in der Form einzelner Gabeln ausgebildet ist, auf denen das zu separierende Stückgutgebinde mit dem unteren Auflagebereich aufliegen kann und mit dem Tragekörper das angehobene Stückgutgebinde von Gebindestapel getrennt werden kann.

Die Erfindung umfasst auch das Übergeben des getrennten Stückgutgebindes von der Trageplatte oder dem Tragemittel an eine Fördereinrichtung sowie den Schritt des Transportierens des getrennten Stückgutgebindes mittels der Fördereinrichtung zu einer automatisierten Vorrichtung zur Palettierung des Stückgutgebindes in der Form eines getrennten Stückgutgebindes oder eines mindestens zwei Stückgutgebinde aufweisenden Stückgutgebindestapels.

Mit der automatisierten Vorrichtung zur Palettierung können also einzelne Stückgutgebinde oder auch Stückgutgebindestapel auf der Zielpalette abgesetzt oder platziert werden, welche mindestens zwei Stückgutgebinde aufweist, die so aufeinander angeordnet werden können, dass diese mit der Fördereinrichtung des erfindungsgemäßen Systems problemlos transportiert werden können.

Die Erfindung umfasst daher den Schritt der Handhabung eines einzelnen Stückgutgebindes oder auch eines Stückgutgebindestapels mittels der automatisierten Vorrichtung zur Palettierung der Gebinde und/oder Gebindestapel zur vorbestimmten Anordnung auf der Zielpalette oder Kundenpalette oder Filialpalette.

Schließlich umfasst das erfindungsgemäße Verfahren auch das Positionieren des getrennten Stückgutgebindes und/oder des Stückgutgebindestapels auf der Zielpalette mittels der automatisierten Vorrichtung zur Palettierung des Stückgutgebindes als Stückgutgebinde oder Stückgutgebindestapel.

Das erfindungsgemäße Verfahren zeichnet sich dadurch aus, dass damit alle Gebindetypen oder Gebindesorten bei der Kommissionierung automatisiert verarbeitet werden können und das kurze Durchlaufzeiten von der Artikelpalette zur Filialpalette möglich sind, was insbesondere bei rasch verderblichen Produkten, wie beispielsweise Obst- und Gemüseprodukten von wesentlicher Bedeutung ist.

Der Vorgang des Depalettierens der Stückgutgebinde findet von Artikelpaletten statt, welche im Regallager bereitgestellt werden und die demgemäß eine große Zahl von unterschiedlichen Waren umfassen können, sodass mit dem erfindungsgemäßen Verfahren der Vorteil erzielt wird, dass die auf der Zielpalette oder Filialpalette oder Kundenpalette bereitzustellenden Waren von vielfältigster Natur sein können und selektiv entsprechend den Anforderungen oder Bestellungen zusammengestellt werden können.

Mit dem erfindungsgemäßen Verfahren werden sehr kurze Durchlaufzeiten erzielt, da eine bei bekannten Verfahren übliche Zwischenlagerung der von der Artikelpalette separierten Gebinde nach dem erfindungsgemäßen Verfahren und nicht notwendig ist.

Das erfindungsgemäße Verfahren zeichnet sich mit den vorstehend erwähnten Schritten dadurch aus, dass zwischen der Artikelpalette und der Filialpalette nur wenige Teilprozesse in der Prozesskette stattfinden, nämlich die Entnahme des Gebindes aus dem Palettenlager mittels eines Depalettiervorgangs und die anschließende Beförderung des Gebindes zur Palettierstation und die dortige automatisierte Palettierung der Gebinde entsprechend einem vorbestimmten Palettierplan oder Sortierreihenfolge, welche den einzelnen Artikeln Rechnung trägt.

Wie es vorstehend bereits erwähnt wurde, umfasst das erfindungsgemäße Verfahren auch die Handhabung von Stückgutgebindestapeln, die mindestens zwei Stückgutgebinde umfassen. Die Bildung eines solchen Stückgutgebindestapels ist von Vorteil, wenn zwei oder mehr Stückgutgebinde mit einem artikelgleichen Inhalt bereitgestellt werden sollen, also beispielsweise gleichen Obst- und Gemüseprodukten, da ein solcher Gebindestapel dann auf der Filialpalette als einheitlicher Stapel bereitgestellt werden kann.

Es ist hierzu nach einer Weiterbildung der Erfindung vorgesehen, dass das getrennte Stückgutgebinde von der Fördereinrichtung zu einer automatisierten Stapeleinrichtung befördert wird, welche mittels einer an einem Träger bewegbar angeordneten Hubfördereinrichtung das getrennte Stückgutgebinde aufnimmt und das getrennte Stückgutgebinde mittels der Hubfördereinrichtung in eine Höhe angehoben wird, welche ausreichend ist, dass unter das getrennte Stückgutgebinde ein weiteres getrenntes Stückgutgebinde plazierbar ist, und das angehobene Stückgutgebinde mittels einer am Träger bewegbar angeordneten Halte- und Ausrichteinrichtung im Bereich des Auflagebereichs lösbar gehalten wird und die Hubfördereinrichtung abgesenkt wird und das weitere getrennte Stückgutgebinde aufnimmt und das lösbar gehaltene Stückgutgebinde mittels der Halte- und Ausrichteinrichtung in einer zum platzierten, weiteren getrennten Stückgutgebinde ausgerichteten Lage an der Oberseite des weiteren getrennten Stückgutgebindes zur Bildung eines Stückgutgebindestapels angeordnet wird.

Auf diese Weise kann ein Stückgutgebindestapel mit zwei oder mehr als zwei Stückgutgebinden bereitgestellt werden, wobei die Stückgutgebinde zueinander ausgerichtet zu einem Stückgutgebindestapel zusammengestellt werden und zwar mittels der automatisierten Stapeleinrichtung, sodass der so gebildete Stückgutgebindestapel dann mittels des erfindungsgemäßen Verfahrens und erfindungsgemäßen Systems weiterverarbeitet werden kann.

Mit diesem Schritt des erfindungsgemäßen Verfahrens kann die Bildung präziser und genau ausgerichteter Teilstapel aus depalettierten Stückgutgebinden erreicht werden und damit eine genaue Gebindezentrierung beim Stapeln realisiert werden, welche vor allem bei Einweggebinden mit Stapelnasen von Relevanz ist.

Der Stückgutgebindestapel wird an oder auf der Stapeleinrichtung beziehungsweise der Hubfördereinrichtung der Stapeleinrichtung gebildet und nach einer Weiterbildung des erfindungsgemäßen Verfahrens beziehungsweise des erfindungsgemäßen Systems ist es vorgesehen, dass der so gebildete Stückgutgebindestapel an eine Fördereinrichtung übergeben wird, die den Stückgutgebindestapel an die oder in Richtung der Vorrichtung zur Palettierung weiter befördert.

Bei den in den Stückgutgebinden aufgenommenen Artikel oder Waren in der Form von beispielsweise Obst- und Gemüseprodukten oder auch bei anderen in den Stückgutgebinden aufgenommenen empfindlichen Produkten kann es erforderlich sein, diese auf der Zielpalette getrennt von anderen Produkten anzuordnen, so beispielsweise um eine gegenseitige Beeinflussung der Produkte zu vermeiden.

Eine weitere Weiterbildung des erfindungsgemäßen Verfahrens und des erfindungsgemäßen Systems trägt diesem Umstand Rechnung.

Es ist nach dieser Weiterbildung der Erfindung vorgesehen, dass getrennte Stückgutgebinde und/oder Stückgutgebindestapel mittels der Fördereinrichtung zu einer Sequenziervorrichtung befördert werden, welche mindestens zwei Sequenzierbahnen und eine Sequenziereinrichtung aufweist, welche eingangsseitig der Sequenzierbahnen vorsehbar ist und Stückgutgebinde und/oder Stückgutgebindestapel mittels der Sequenziereinrichtung in einer vorbestimmten Reihenfolge auf den Sequenzierbahnen angeordnet werden.

Mit dieser Weiterbildung der Erfindung wird also erreicht, dass die Stückgutgebinde und/oder Stückgutgebindestapel auf den Sequenzierbahnen, welche beispielsweise Fördermittel oder Fördereinrichtungen aufweisen können, in einer Reihenfolge angeordnet werden können, welche der späteren Positionierung oder Anordnung der Stückgutgebinde und/oder Stückgutgebindestapel auf der Zielpalette Rechnung trägt.

Die mittels der Fördereinrichtung zur Sequenziereinrichtung beförderten Stückgutgebinde und/oder Stückgutgebindestapel werden von der eingangsseitig der Sequenziervorrichtung vorgesehenen Sequenziereinrichtung in einer vorbestimmter Reihenfolge auf den Sequenzierbahnen verteilt, sodass die so verteilten Stückgutgebinde und/oder Stückgutgebindestapel dann aus der Sequenziervorrichtung wieder ausgetragen werden können, also beispielsweise auf eine weitere Fördereinrichtung übergeben werden können, welche die zu palettierenden Stückgutgebinde und/oder Stückgutgebindestapel dann in der erforderlichen Reihenfolge zur automatisierten Vorrichtung zur Palettierung der Gebinde und/oder Gebindestapel weiter befördert.

Es ist nach einer Weiterbildung der Erfindung auch vorgesehen, dass auf den Sequenzierbahnen angeordnete Stückgutgebinde und/oder Stückgutgebindestapel mittels einer Sequenziereinrichtung, welche ausgangsseitig der Sequenzierbahnen angeordnet sein kann, in einer vorbestimmten Reihenfolge auf die Fördereinrichtung abgegeben werden und die Fördereinrichtung die Stückgutgebinde und/oder Stückgutgebindestapel zur automatisierten Vorrichtung zur Palettierung des Stückgutgebindes als Stückgutgebinde und/oder Stückgutgebindestapel befördert.

Nach einer Weiterbildung des erfindungsgemäßen Verfahrens und erfindungsgemäßen Systems ist es vorgesehen, dass die automatisierte Vorrichtung zur Palettierung die Stückgutgebinde und/oder Stückgutgebindestapel in einer vorbestimmten Reihenfolge auf der Zielpalette anordnet. Die vorbestimmte Reihenfolge kann beispielsweise einer etwaigen gegenseitigen Beeinflussung der Produkte in den Stückgutgebinden und/oder Stückgutgebindestapeln Rechnung tragen.

Es ist nach einer Weiterbildung der Erfindung auch vorgesehen, dass die automatisierte Vorrichtung zur Palettierung die Stückgutgebinde und/oder Stückgutgebindestapel beim Transport von der Fördereinrichtung zur Zielpalette mittels eines den Auflagebereich des Stückgutgebindes und/oder Stückgutgebindestapels halternden Tragemittels aufnimmt und mittels eines zum lösbaren Saugeingriff mit der Seitenwand des Gebindes ausgebildeten Saugmittels haltert.

Damit wird erreicht, dass die Palettierungsvorrichtung den Auflagebereich des Stückgutgebindes oder Auflagebereich des unteren Stückgutgebindes des Stückgutgebindestapels mittels des Tragemittels von unten her abstützt und mittels des Saugeingriffs mit der Seitenwand des Gebindes das Stückgutgebinde oder das untere Stückgutgebinde oder ein anderes Stückgutgebinde des Stückgutgebindestapels beim Transport auf die Zielpalette fixiert und somit eine Lagesicherung erreicht wird, der auch ein Umkippen oder Verrutschen des Stückgutgebindestapels während der Handhabung eines solchen Stückgutgebindestapels durch die automatisierte Palettierungsvorrichtung sicher verhindert.

Es ist nach einer Weiterbildung der Erfindung auch vorgesehen, dass die automatisierte Vorrichtung zur Palettierung an der Oberseite eines Stückgutgebindes und/oder Stückgutgebindestapels einen Klappbehälter mit Boden und klappbaren Seitenwänden im zusammengeklappten Zustand positioniert oder eine andere Einrichtung auf der Oberseite des Stückgutgebindes und/oder Stückgutgebindestapels anbringt, welche es ermöglicht, dass ein Stückgutgebinde und/oder Stückgutgebindestapel mit einer kleineren Auflagefläche im Auflagebereich auf einem Stückgutgebinde und/oder Stückgutgebindestapel mit einer größeren Oberseite positioniert werden kann.

Bei dem Klappbehälter kann es sich um einen handelsüblichen Klappbehälter handeln, der oftmals in der Lebensmittellogistik anzutreffen ist und somit in dem hier beschriebenen Anwendungsfall der Logistik betreffend Obst- und Gemüseprodukte ohnehin zum Einsatz kommt.

Es ist nach einer Weiterbildung der Erfindung auch vorgesehen, dass die Stückgutgebinde und/oder Stückgutgebindestapel mittels einer eine Mattenkette als Fördermittel aufweisenden Fördereinrichtung befördert werden und die Position der auf der Mattenkette positionierten Stückgutgebinde und/oder Stückgutgebindestapel bei der jeweiligen Positionierung des Stückgutgebindes und/oder Stückgutgebindestapels auf die Mattenkette erfasst wird.

Damit ermöglicht das erfindungsgemäße Verfahren auch die Verfolgung der Stückgutgebinde und/oder Stückgutgebindestapel von der Depalettierung über die Stapelbildung und die Sequenzierung bis zur Palettierung, sodass das erfindungsgemäße Verfahren auch Kenntnis über die aktuelle Position der jeweiligen Gebinde liefert und somit die Verfolgung der Echtzeitposition der jeweiligen Gebinde durch eine Steuervorrichtung ermöglicht.

Es ist nach einer Weiterbildung der Erfindung auch vorgesehen, dass die schon besprochenen Stückgutgebindestapel aus Stückgutgebinden mit gleichen Waren gebildet werden und die Position der auf der Fördereinrichtung übergebenen Stückgutgebinde mit gleichen Waren auch erfasst wird. Damit kann eine gegenseitige und etwaige unerwünschte Beeinflussung von Artikeln untereinander vermieden werden und dies gilt sowohl für die Positionierung der jeweiligen Stückgutgebinde und/oder Stückgutgebindestapel auf den Fördereinrichtungen als auch die Positionierung der Stückgutgebinde und/oder Stückgutgebindestapel auf der Zielpalette oder Filialpalette.

Die Erfindung schafft auch ein System zur Kommissionierung von auf Artikelpaletten in einem Palettenlager in stapelbaren Stückgutgebinden bereit gestellter Waren, bei dem Waren auf einer Zielpalette in den stapelbaren Stückgutgebinden zusammengeführt werden, mit einer automatisierten Vorrichtung zur Depalettierung der Stückgutgebinde von der Artikelpalette, wobei die Vorrichtung eine Eingriffseinrichtung aufweist, die zum lösbaren Eingriff mit einer Ausnehmung einer Seitenwand des Stückgutgebindes ausgebildet ist, und die Vorrichtung ein Tragemittel zur Aufnahme des Stückgutgebindes aufweist, und das System eine Fördereinrichtung zur Beförderung des depalettierten Stückgutgebindes zu einer automatisierten Stapeleinrichtung zur Bildung von Stückgutgebindestapel sowie eine automatisierte Vorrichtung zur Palettierung des depaletierten Stückgutgebindes in der Form eines getrennten Stückgutgenbindes oder eines mindestens zwei Stückgutgebinde aufweisenden Stückgutgebindestapels auf der Zielpalette besitzt.

Damit weist das System Komponenten oder Einrichtungen auf, die es ermöglichen, Stückgutgebinde von den Artikelpaletten automatisiert zu separieren und zu einer Stapeleinrichtung zu befördern und auch separierte Stückgutgebinde ohne eine vorherige Beförderung zur Stapeleinrichtung direkt in Richtung zur Palettierungsvorrichtung zu befördern.

Das erfindungsgemäße System weist nach einer Weiterbildung auch eine Sequenziervorrichtung auf und eine Stückgutgebinde und/oder Stückgutgebindestapel von der Vorrichtung zur Depalettierung oder der Stapeleinrichtung zur Sequenziervorrichtung befördernde Fördereinrichtung auf.

Damit können depalettierte oder separierte Stückgutgebinde und/oder Stückgutgebindestapel zur Sequenziervorrichtung befördert werden, sodass diese dort beispielsweise in einer gewünschten Reihenfolge zur Weiterbeförderung zur automatisierten Palettierungsvorrichtung angeordnet werden können.

Die Erfindung weist auch eine automatisierte Vorrichtung zur Palettierung des Stückgutgebindes als Stückgutgebinde oder Stückgutgebindestapel auf der Zielpalette und eine Fördereinrichtung auf, welche Stückgutgebinde und/oder Stückgutgebindestapel zwischen der Depalettierungsvorrichtung und der Stapeleinrichtung und/oder Sequenziervorrichtung befördernde kann.

Es ist nach einer Weiterbildung des erfindungsgemäßen Systems auch vorgesehen, dass die Fördereinrichtung eine Stückgutgebinde und/oder Stückgutgebindestapel aufnehmende Mattenkette als Fördermittel aufweist und das System eine Steuervorrichtung aufweist, welche zur Erfassung der jeweiligen Position des Stückgutgebindes und/oder Stückgutgebindestapels auf der Mattenkette eingerichtet ist und die Steuervorrichtung zur Überwachung der Position der Stückgutgebinde und/oder Stückgutgebindestapel von der Übergabe des getrennten Stückgutgebindes von der Trageplatte an die Fördereinrichtung bis zur Positionierung auf der Zielpalette eingerichtet ist.

Damit ist eine ständige Überwachung der Position der depalettierten Stückgutgebinde bis zu deren Palettierung auf der Zielpalette möglich.

Nach dem erfindungsgemäßen Verfahren und dem erfindungsgemäßen System werden die Stückgutgebinde von der Artikelpalette mittels einer automatisierten Vorrichtung zur Depalettierung entnommen. Bei dieser Depalettierungsvorrichtung oder Depalettieranordnung handelt es sich um eine die Durchführung des erfindungsgemäßen Verfahrens oder die Bereitstellung des erfindungsgemäßen Systems relevante Komponente, die nachfolgend näher beschrieben wird.

Die Depalettieranordnung ist versehen mit einem, eine Tragstruktur aufweisenden Manipulator und einer an der Tragstruktur relativ zum Manipulator bewegbar angeordneten Vorrichtung zum Depalettieren von stapelbaren Stückgutgebinden, wobei die Vorrichtung eine Halteeinrichtung mit daran angeordneten und zum lösbaren Saugeingriff mit einer Seitenwand des Gebindes ausgebildete Saugmittel und eine relativ zur Halteeinrichtung bewegbare Trageplatte zur Unterstützung des Gebindes aufweist und eine Aufnahme mit mindestens einem Träger besitzt, an der die Halteeinrichtung angeordnet ist, wobei die Vorrichtung eine Eingriffseinrichtung aufweist, die zum lösbaren Eingriff mit einer Ausnehmung einer Seitenwand des Gebindes ausgebildet ist und die Vorrichtung an einer relativ zur Tragstruktur drehbar angeordneten Drehaufnahme angeordnet ist.

Die Depalettieranordnung besitzt also eine Tragstruktur in der Form beispielsweise eines Gestells, einer Aufnahme oder eines Aufbaus oder eines Rahmens oder eines Portals oder einer Gitterstruktur oder einer anderen Lastaufnahmestruktur, die ein Teil eines Manipulators in der Form eines Roboters, eines Portalroboters oder einer anderen steuerbaren Einheit sein kann, welche in einer Lagergasse einer Lageranordnung betrieben werden kann.

Die Tragstruktur ist also ganz allgemein zur Aufnahme einer nachfolgend noch näher beschriebenen Vorrichtung zum Depalettieren von stapelbaren Stückgutgebinden vorgesehen und kann Teil oder Einheit oder Bauteil eines Manipulators sein, wie vorstehend beschrieben worden ist.

Über die Anordnung der Vorrichtung zum Depalettieren von stapelbaren Stückgutgebinden an einer Aufnahme, welche eine Drehaufnahme oder ein Drehkopf sein kann, und zwar in einer Art und Weise, dass die Vorrichtung relativ zur Tragstruktur drehbar angeordnet ist, wird erreicht, dass die Vorrichtung zum Depalettieren von stapelbaren Stückgutgebinden beidseits der Lagergasse angeordnete, gelagerte oder zwischengelagerte Produktreihen mit den Stückgutgebinden erreichen kann und auf diese Weise an der Depalettieranordnung nicht beidseits der Tragstruktur eine Vorrichtung zum Depalettieren der stapelbaren Stückgutgebinde oder Vorrichtungen zum Depalettieren der stapelbaren Stückgutgebinde vorgesehen sein müssen, sondern mit einer Einheit oder einer Baugruppe, welche die Vorrichtung zum Depalettieren der Stückgutgebinde oder Vorrichtungen zum Depalettieren der Stückgutgebinde umfasst, die Lagerreihen mit Stückgutgebinden beidseits der Lagergasse von der einen Einheit oder Baugruppe erreicht oder erfasst oder bedient werden können.

Um zu erreichen, dass die Vorrichtung zum Depalettieren der Stückgutgebinde oder die Vorrichtungen zum Depalettieren der Stückgutgebinde die Stückgutgebinde jeweils von der Zugriffsseite aus erreichen können, kann die an der Drehaufnahme vorgesehene Vorrichtung zum Depalettieren der Stückgutgebinde beziehungsweise können die an der Drehaufnahme vorgesehenen Vorrichtungen zum Depalettieren der Stückgutgebinde mittels der Drehaufnahme zu den Stückgutgebinden hin gedreht werden.

Wenn also zunächst erste Stückgutgebinde auf einer ersten Seite der Lagergasse depalettiert werden und zu diesem Zweck die Drehaufnahme mit der Vorrichtung zum Depalettieren der Stückgutgebinde beziehungsweise den Vorrichtungen zum Depalettieren der Stückgutgebinde zu dieser ersten Seite der Lagergasse hin ausgerichtet ist, kann die Drehaufnahme zu einer zweiten Seite der Lagergasse hin um 180 Grad gedreht werden, um die Vorrichtung zum Depalettieren der Stückgutgebinde oder die Vorrichtungen zum Depalettieren der Stückgutgebinde zur zweiten Seite der Lagergasse hin auszurichten, so dass dann zweite Stückgutgebinde auf der zweiten Seite der Lagergasse mit der Vorrichtung zum Depalettieren der Stückgutgebinde oder den Vorrichtungen zum Depalettieren der Stückgutgebinde erreicht und depalettiert werden können.

Es ist auch vorgesehen, dass die Tragstruktur einen in Hochachsrichtung der Tragstruktur bewegbaren Träger aufweist, an dem ein in Längsrichtung des Trägers bewegbarer Tragarm angeordnet ist und die Drehaufnahme mit der Vorrichtung relativ zum Tragarm drehbar angeordnet ist.

Über den in Hochachsrichtung bewegbaren Träger kann ein von der Vorrichtung zum Depalettieren der Stückgutgebinde aufgenommenes Stückgutgebinde in Hochachsrichtung der Tragstruktur des Manipulators bewegt werden, um nach dem Depalettieren beispielsweise auf einer Fördereinrichtung abgelegt zu werden, um von dieser Fördereinrichtung zu einem anderen Handhabungsort befördert zu werden.

Über den in Längsrichtung des Trägers bewegbaren Tragarm kann die Drehaufnahme mit der Vorrichtung oder den Vorrichtungen aus der Lagergasse in Richtung zu den ersten oder zweiten Lagerreihen mit den Stückgutgebinden bewegt werden, sodass die Vorrichtung beziehungsweise die Vorrichtungen die Stückgutgebinde auf beiden Seiten der Lagergasse erreichen können, um diese von den Paletten abzunehmen und beispielsweise der vorstehend erwähnten Fördereinrichtung zuzuführen.

Es ist auch vorgesehen, dass die Drehaufnahme mit der Vorrichtung oder den Vorrichtungen relativ zur Tragstruktur in Längsrichtung der Tragstruktur bewegbar ausgebildet ist.

Damit wird erreicht, dass die Drehaufnahme mit den an der Vorrichtung beziehungsweise den Vorrichtungen angeordneten Stückgutgebinden von den beidseits der Lagergasse angeordneten Lagerreihen, von denen die Stückgutgebinde soeben abgenommen worden sind, also depalettiert worden sind, beispielsweise in die Mitte der Lagergasse bewegt werden kann, also relativ zum Tragarm und auch relativ zum Träger, sodass dann über eine Vertikalbewegung des Trägers mit dem Tragarm und der Drehaufnahme mit der Vorrichtung oder den Vorrichtungen und den depalettierten Stückgutgebinden die Stückgutgebinde von der Vorrichtung oder den Vorrichtungen auf die vorstehend erwähnte Fördereinrichtung abgegeben werden können, um zu dem ebenfalls erwähnten anderen Handhabungsort weiter bewegt werden zu können.

Zu diesem Zweck ist es von Vorteil und nach einer Weiterbildung der Erfindung vorgesehen, dass die Drehaufnahme mit der Vorrichtung relativ zum Tragarm in Längsrichtung des Tragarms bewegbar ausgebildet ist. Damit kann die Drehaufnahme mit der Vorrichtung oder den Vorrichtungen unabhängig von der Längsbewegung des Tragarms relativ zum Träger bewegt werden, sodass also eine Relativbewegung der Drehaufnahme relativ zur Tragstruktur und auch relativ zum Tragarm möglich ist.

Auch ist es nach einer Weiterbildung der Erfindung vorgesehen, dass die Tragstruktur wenigstens zwei benachbart zueinander angeordnete Vorrichtungen aufweist, welche gemeinsam oder getrennt voneinander betätigbar ausgebildet sind.

Es können also an der Tragstruktur zwei oder auch mehr als zwei Vorrichtungen zum Depalettieren von Stückgutgebinden benachbart zueinander angeordnet sein, welche also auch an der Drehaufnahme angeordnet sein können und diese Vorrichtungen können zum Depalettieren der Stückgutgebinde gemeinsam oder getrennt voneinander betätigt werden. Damit kann erreicht werden, dass beispielsweise bei zwei benachbart zueinander angeordneten Vorrichtungen zum Depalettieren der Stückgutgebinde beide Vorrichtungen gemeinsam betätigt werden können, um gleichzeitig zwei Stückgutgebinde oder auch mehrere nebeneinander angeordnete Stückgutgebinde zu depalettieren oder auch erreicht werden, dass von den beiden oder mehreren benachbarten Vorrichtungen zum Depalettieren der Stückgutgebinde nur eine einzelne oder einzelne der mehreren Vorrichtungen zum Depalettieren der Stückgutgebinde betätigt werden, also eine gezielte Auswahl der Vorrichtungen zum Depalettieren der Stückgutgebinde ermöglicht ist.

Es ist nach einer Weiterbildung der Erfindung auch vorgesehen, dass der Manipulator relativ zu einer den Manipulator tragenden Aufnahme bewegbar ausgebildet ist. Damit wird erreicht, dass der beispielsweise entlang einer Lagergasse bewegbare Manipulator in dieser mit einem Hallenboden als Aufnahme ausgestatteten Lagergasse entlang der Lagerreihe oder entlang der Lagerreihen verfahren werden kann, um Stückgutgebinde mit unterschiedlichen Inhalten oder Artikeln depalettieren zu können, und zwar aufgrund der Drehaufnahme zu beiden Seiten der Lagergasse.

Auch ist es nach einer Weiterbildung der Erfindung vorgesehen, dass der Tragarm und die Drehaufnahme unabhängig voneinander in Längsrichtung des Trägers bewegbar ausgebildet sind. Damit ist eine gezielte Ansteuerung der Drehaufnahme mit der Vorrichtung zum Depalettieren oder den Vorrichtungen zum Depalettieren der Stückgutgebinde möglich, und zwar unabhängig von der Längsbewegung des Tragarms am Träger der Tragstruktur des Manipulators.

Über die an der Vorrichtung zum Depalettieren vorgesehenen Saugmittel kann ein Saugeingriff mit einer Seitenwand eines Gebindes herbeigeführt werden, indem die Saugmittel an die Seitenwand herangeführt werden, bei der es sich um eine längs verlaufende oder auch um eine quer verlaufende Wand des Gebindes handeln kann, sodass die Saugmittel mit der Seitenwand in Kontakt kommen und über eine Unterdruckbeaufschlagung der Saugmittel eine Haltekraft zwischen der Seitenwand und den Saugmitteln aufgebaut wird, die ausreichend dimensioniert ist, sodass über eine Verlagerung der Saugmittel in Hochachsrichtung der Seitenwand betrachtet das Gebinde soweit einseitig angehoben wird, dass zwischen dem angehobenen Gebinde und dem darunter angeordneten Gebinde ein Zwischenraum ausgebildet wird.

Über dieses Anheben des Gebindes, bei dem es sich beispielsweise um ein Einweggebinde in der Form eines oben offenen Kartons handeln kann, in dem sich Obst oder Gemüse als Stückgut angeordnet befindet, wird ein Zwischenraum ausgebildet, der ausreichend dimensioniert ist, sodass die Trageplatte relativ zum angehobenen Gebinde verlagert werden kann, bis sie zumindest einen Teilbereich der Bodenfläche der Unterseite des Gebindes überlagert und auf diese Weise das Gebinde von unten her abstützt.

Eine translatorische Bewegung der Trageplatte mit dem darauf angeordneten Gebinde sorgt so dafür, dass das Gebinde von der gestapelten Anordnung der verbliebenen Gebinden separiert und beispielsweise auf einer Bandeinrichtung zum weiteren Transport abgelegt werden kann.

Wie es vorstehend bereits erwähnt wurde, können in dem Verteilerzentrum auch Stückgutgebinde in der Form von Mehrweggebinden oder von Klappboxen vorliegen, welche mit der Depalettieranordnung ebenfalls automatisch depalettiert werden können.

Zu diesem Zweck besitzt die Vorrichtung eine Eingriffseinrichtung, die zum lösbaren Eingriff mit einer Ausnehmung einer Seitenwand des Gebindes ausgebildet ist.

Bei der Ausnehmung kann es sich um eine Vertiefung in einer Seitenwand des Gebindes handeln, welche üblicherweise zur manuellen Handhabung des Gebindes vorgesehen ist, da das Gebinde bei der Befüllung des Gebindes vor Ort mit Obst- oder Gemüseprodukten oder Salaten, beispielsweise auf dem Feld oder im Gewächshaus, üblicherweise von Hand gehandhabt wird und somit solche Gebinde sowohl an den Längsseiten als an den Querseiten Ausnehmungen in der Form von Handgriffausnehmungen besitzen.

Die somit befüllten Gebinde werden im Verteilerzentrum als gestapelte Stückgutgebinde angeliefert, und zwar auf einer üblichen Palette angeordnet, wie dies vorstehend erläutert wurde, so dass die Palette beispielsweise mit einem Gabelstapler transportiert werden kann.

Die auf diese Weise in Stapelanordnung vorliegenden Stückgutgebinde können mit der nach dem hier vorgesehenen Verfahren und System ebenfalls automatisch depalettiert werden. Zu diesem Zweck kann die Eingriffseinrichtung einen lösbaren Eingriff mit einer Ausnehmung einer Seitenwand herbeiführen.

Die Eingriffseinrichtung kann beispielsweise an der Aufnahme angeordnet sein und relativ zur Trageplatte in Hochachsrichtung bewegbar ausgebildet sein, sodass die Eingriffseinrichtung unter Aufrechterhaltung des lösbaren Eingriffs mit der Ausnehmung des Gebindes mit einer vorbestimmten Bewegung in Hochachsrichtung dafür sorgt, dass sich das Gebinde um eine der vorbestimmten Bewegung entsprechende Wegstrecke von dem darunter angeordneten Gebinde einseitig anheben lässt und auf diese Weise ein Zwischenraum zwischen der Unterseite des angehobenen Gebindes und der Oberseite des darunter befindlichen Gebindes ausgebildet wird.

In zu vorstehend bereits beschriebener Weise ähnlicher Weise kann dann eine Trageplatte in den Zwischenraum bewegt werden, sodass das angehobene Gebinde auf der Trageplatte zu liegen kommt beziehungsweise die Trageplatte das angehobene Gebinde von unten her unterstützt und so eine Trennung zwischen dem angehobenen Gebinde und dem vormals darunter angeordneten Gebinde herbeigeführt wird.

Nach einer Weiterbildung der Erfindung ist es vorgesehen, dass die Eingriffseinrichtung in mindestens eine Ebenenrichtung einer sich weitgehend im rechten Winkel zum Träger erstreckenden Ebene bewegbar ausgebildet ist. Auf diese Weise kann die Eingriffseinrichtung zum Eingriff mit der Ausnehmung der Seitenwand des Gebindes relativ zur Seitenwand bewegt werden. Auch ist die Eingriffseinrichtung in Hochachsrichtung bewegbar ausgebildet, so dass sie in Ausnehmungen von Gebinden mit unterschiedlicher Höhenerstreckung eingreifen kann. Die jeweilige Ausnehmung kann über eine Sensoreinrichtung erfasst werden.

Bei der Ausnehmung kann es sich um eine mit einem die Seitenwand vollständig durchsetzenden Durchlass versehene Handgriffausnehmung handeln, sodass die Eingriffseinrichtung die Handgriffausnehmung durchsetzen kann und eine beispielsweise in vertikaler Richtung erfolgende Verlagerungsbewegung der Eingriffseinrichtung zum Anheben des sich mit der Eingriffseinrichtung in Eingriff befindendem zu depalettierenden Gebinde führt. Durch dieses Anheben des entsprechenden Gebindes wird der bereits erläuterte Zwischenraum zwischen der Unterseite des angehobenen Gebindes und der Oberseite des darunter befindlichen Gebindes ausgebildet, in welchen die Trageplatte eingeführt werden kann.

Es ist nach einer Weiterbildung der Erfindung vorgesehen, dass die Eingriffseinrichtung ein Eingriffsmittel aufweist, welches zum lösbaren Eingriff mit einer Handgriffausnehmung einer Seitenwand des Gebindes ausgebildet ist. Bei dem Eingriffsmittel kann es sich beispielsweise um einen Greiffinger handeln, der in die Handgriffausnehmung eingeführt werden kann, sodass ein Anheben des Greiffingers zu einem einseitigen Anheben des Gebindes führt und auf diese Weise ein in einer Seitenansicht dreieckförmiger Zwischenraum ausgebildet wird, in den die Trageplatte eingeführt werden kann.

Im Gegensatz zu der vorstehend beschriebenen bekannten Vorrichtung mit seitlich relativ zum Gebinde verlagerbaren Druckplatten wird von der Depalettiervorrichtung keinerlei Seitenkraft auf das Gebinde ausgeübt, sodass es auch nicht zu einer Druckbeaufschlagung der im Gebinde befindlichen Obst- und Gemüseprodukte kommen kann und diese empfindlichen Waren daher auch keine Druckstellen bekommen. Dies gilt auch insbesondere bei Klappboxen als Gebinde, da ansonsten die Gefahr eines unbeabsichtigten Einklappens der Seitenwände dieser Gebinde besteht mit der Folge einer Beschädigung der in den Gebinden aufgenommenen Artikel.

Das von der Trageplatte von unten her unterstützte depalettierte Gebinde kann beispielsweise zu einem Transportband befördert werden und an dieses übergeben werden. Bereits während der Verlagerungsbewegung des Gebindes zum Transportband oder auch nach der Positionierung des Gebindes über dem Transportband kann das Eingriffsmittel aus dem lösbaren Eingriff mit der Ausnehmung der Seitenwand des Gebindes gelöst werden und sodann das depalettierte Gebinde auf dem Transportband abgesetzt werden.

Die Depalettiervorrichtung ist auf diese Weise zur automatischen Depalettierung sowohl von Einweggebinden als auch von Mehrweggebinden ausgebildet und ebenso zur automatischen Depalettierung von Klappboxen, welche ebenfalls Ausnehmungen zur manuellen Handhabung besitzen, mit denen die Eingriffseinrichtung einen lösbaren Eingriff einnehmen kann. Auch Klappboxen können daher mit der Vorrichtung automatisiert depalettiert werden und zwar auf die gleiche Weise, wie dies vorstehend bereits mit Mehrweggebinden ausführlich erläutert wurde.

Auf diese Weise können nach dem Verfahren und dem System alle bekannten Gebindearten automatisiert depalettiert werden, welche zum Transport von Obst- und Gemüseprodukten und zur Verteilung in Verteilerzentren und Weitertransport zur Verkaufsfiliale Verwendung finden, ohne die Depalettiervorrichtung an die jeweiligen Gebindearten laufend anpassen zu müssen.

Es ist nach einer Weiterbildung der Erfindung auch vorgesehen, dass die Depalettiervorrichtung ein Haltemittel aufweist, welches zur lösbaren Anordnung an einem oberen Randbereich des Gebindes ausgebildet ist. Mit diesem Haltemittel kann das Gebinde für beispielsweise den Transport von der Palette zum Förderband zwischen dem die Handgriffausnehmung durchsetzenden Greiffinger und dem darüber befindlichen Randbereich des Gebindes in der Form eines beispielsweise Mehrweggebindes oder einer Klappbox fixiert werden. Zu diesem Zweck übt der Greiffinger auf den unteren Randbereich der Handgriffausnehmung eine geringe Hubkraft aus und das Haltemittel übt auf den oberhalb der Handgriffausnehmung befindlichen Randbereich des Gebindes eine geringe Haltekraft aus, sodass auf diese Weise das Gebinde im Bereich des Randbereichs ähnlich einem Zangengriff geklemmt wird und während des Transports auf der Trageplatte zum Förderband auf der Trageplatte nicht verrutschen kann und somit eine Lagesicherung des Gebindes relativ zur Trageplatte oder Unterfahrplatte erreicht wird.

Es ist nach einer Weiterbildung der Erfindung vorgesehen, dass das Haltemittel eine streifenförmige oder leistenförmige Konfiguration aufweist und an einem zum Kontakt mit dem oberen Randbereich des Gebindes ausgebildeten Bereich mit einem elastisch ausgebildeten Auflagemittel versehen ist.

Der Randbereich des Gebindes in der Form beispielsweise einer Mehrwegbox oder einer Klappbox oder eines anderen Mehrweggebindes oberhalb der Handgriffausnehmungen weist regelmäßig eine streifenförmige oder leistenförmige Konfiguration auf und das Haltemittel besitzt daher ebenfalls eine streifenförmige oder leistenförmige Konfiguration, um mit dem Gebinderandbereich in Klemmeingriff oder Halteeingriff gebracht werden zu können.

Das elastisch ausgebildete Auflagemittel am Haltemittel greift daher von oben auf den Randbereich des Gebindes zu und sorgt aufgrund seiner elastisch nachgiebigen Konfiguration dafür, dass auch bei einer geringen Differenz zwischen der Sollposition und der Istposition des Haltemittels relativ zum oberen Randbereich ein sicheres Klemmen des Randbereichs des Gebindes zwischen der Eingriffseinrichtung in der Form beispielsweise des bereits erwähnten Greiffingers und des Haltemittels erreicht wird.

Es ist nach einer Weiterbildung der Erfindung auch vorgesehen, dass das Haltemittel an einem an der Aufnahme insbesondere in Hochachsrichtung bewegbar vorgesehenen Querträger angeordnet ist und mittels eines Aktuators zur lösbaren Anordnung an dem streifenförmigen oder leistenförmigen Randbereich des Gebindes betätigbar ist.

Durch die Anordnung des Haltemittels an dem in Hochachsrichtung der Aufnahme bewegbar vorgesehenen Querträger wird erreicht, dass unterschiedliche Gebindehöhen berücksichtigt werden können, indem die Höhe des jeweiligen Gebindes beispielsweise mittels einer Sensoreinrichtung erfasst wird oder aufgrund einem Steuerrechner bekannter vorbestimmter Höhe des Gebindes entsprechend positioniert wird und der Querträger demgemäß mit dem daran angeordneten Haltemittel entsprechend relativ zur Höhe der Seitenwand positioniert wird und sodann über ein Absenken des Haltemittels auf den oberen Randbereich des Gebindes ein sicheres Klemmen des Gebindes zwischen dem die Handgriffausnehmung durchsetzenden Greiffinger und dem mit dem elastisch ausgebildeten Auflagemittel versehenen Haltemittel erreicht wird.

Nach einer Weiterbildung der Erfindung ist es vorgesehen, dass das Haltemittel entlang einer weitgehend quer zur Aufnahme vorgesehenen Schwenkachse angeordnet ist und mittels eines Aktuators zur lösbaren Anordnung an dem streifenförmigen oder leistenförmigen Randbereich des Gebindes an der Schwenkachse verschwenkbar betätigbar ist.

Ähnlich wie dies soeben bereits erläutert wurde, kann auch auf diese Weise mit dem schwenkbar betätigbaren Haltemittel ein sicheres Klemmen des oberen Randbereichs des Gebindes zwischen dem Eingriffsmittel in der Form beispielsweise eines in der Ausnehmung des Gebindes angeordneten Greiffingers und dem leistenförmigen oder streifenförmigen Haltemittel erreicht werden, sodass das Gebinde während der Bewegung auf der Unterfahrplatte oder Trageplatte zum Transportband sicher gehaltert ist.

Bei dem Aktuator kann es sich beispielsweise um einen Elektromotor, einen Pneumatikzylinder oder eine andere Betätigungseinrichtung handeln, welche zum Absenken des Haltemittels auf den oberen Randbereich des Gebindes und zum Anheben des Haltemittels vom Randbereich ausgebildet ist.

Es ist nach einer Weiterbildung der Erfindung vorgesehen, dass das Haltemittel eine sich von der Aufnahme weg erstreckende Aufnahmeplatte aufweist, an welcher das Auflagemittel angeordnet ist. Über ein Absenken der Aufnahmeplatte mittels einer Vertikalbewegung oder einer Schwenkbewegung relativ zum Träger der Vorrichtung kann somit das Auflagemittel auf den oberen Randbereich des Gebindes abgesenkt werden und über eine Hubbewegung beziehungsweise Schwenkbewegung kann das Auflagemittel vom Randbereich wieder abgehoben werden, wenn das vereinzelte oder depalettierte Gebinde zum Weitertransport auf dem Bandförderer wieder freigegeben wird.

Als eine vorteilhafte Ausführungsform des Aktuators kann beispielsweise eine pneumatisch betätigbare Kolbenzylindereinheit vorgesehen sein, mittels der das Haltemittel an dem streifenförmigen oder leistenförmigen Randbereich des Gebindes lösbar in Anlage gebracht werden kann. Dadurch findet ein Klemmen des Randbereichs zwischen dem Eingriffsmittel und dem Haltemittel statt, ohne aber das Gebinde im Bereich der Seitenwand mit einer Druckkraft zu beaufschlagen, welche zu Druckstellen an dem im Gebinde befindlichen Obst oder Gemüse führen kann.

Die Depalettierung der stapelbaren Stückgutgebinden kann so erfolgen, dass ein einen unteren Auflagebereich aufweisendes Gebinde mittels einer Halteeinrichtung entlang mindestens eines Teilbereichs des Auflagebereichs von einer Unterlage abgehoben wird und eine Trageplatte unter den abgehobenen Teilbereich bewegt wird und ein körperlicher Kontakt des Teilbereichs zur Unterstützung des auf der Trageplatte mit dem Teilbereich aufliegenden Gebindes mit der Trageplatte herbei geführt wird, wobei dies nach folgenden Schritten erfolgt:
- Herbeiführen eines lösbaren Eingriffs der Halteeinrichtung mit einer Ausnehmung einer Seitenwand des Gebindes
- Anheben des Gebindes mittels der Halteeinrichtung zur Trennung des Auflagebereichs des Gebindes zumindest entlang eines Teilbereichs von der Unterlage zur Herbeiführung eines Zwischenraums zwischen dem Auflagebereich und der Unterlage.

Bei der Unterlage kann es sich beispielsweise um ein unterhalb des zu depalettierenden Gebindes weiteres Gebinde handeln oder auch um eine andere Unterlage in der Form beispielsweise einer Palette oder ganz einfach einer Auflagefläche.

Über das Herbeiführen eines lösbaren Eingriffs der Halteeinrichtung mit der Ausnehmung einer Seitenwand des Gebindes wird erreicht, dass ein nachfolgendes Anheben des Gebindes mittels der Halteeinrichtung zur Trennung des Auflagebereichs des Gebindes zumindest entlang eines Teilbereichs von der Unterlage führt, wodurch ein Zwischenraum herbeigeführt wird und zwar zwischen dem Auflagebereich und der Unterlage, sodass dann eine Trageplatte oder Unterfahrplatte in diesem Zwischenraum bewegt werden kann, und sodann das zu depalettierende Gebinde auf der Trageplatte oder Unterfahrplatte aufliegt.

Es ist dabei nach einer Weiterbildung der Erfindung vorgesehen, dass die Halteeinrichtung in die Ausnehmung diese zumindest teilweise durchsetzend eingeführt wird derart, dass das Gebinde mittels der Halteeinrichtung mindestens entlang des Teilbereichs von der Unterlage anhebbar ist.

Über dieses Anheben des Gebindes entlang des Teilbereichs wird ein zum Einführen der Trageplatte oder Unterfahrplatte ausreichender Zwischenraum zwischen der Unterseite des zu depalettierenden Gebindes und der Oberseite eines darunter angeordneten anderen Gebindes oder einer anderen Unterlage geschaffen.

Es ist nach einer Weiterbildung der Erfindung vorgesehen, dass ein Haltemittel mit einem oberen Randbereich des Gebindes in lösbaren Kontakt gebracht wird. Dadurch kann ein Klemmen des oberen Randbereichs des Gebindes und damit des zu depalettierenden Gebindes zwischen der Halteeinrichtung, bei der es sich um eine Eingriffseinrichtung mit einem Greiffinger oder dergleichen handeln kann, und dem Haltemittel bewerkstelligt werden und auf diese Weise das Gebinde eine Lagesicherung erfahren, die in vorteilhafterweise während einer Bewegung des Gebindes zu einer Transporteinrichtung in der Form beispielsweise eines Bandförderers aufrechterhalten wird.

Der vorstehend erwähnte Greiffinger kann daher in eine am Gebinde vorgesehene Ausnehmung in der Form beispielsweise einer Handgriffausnehmung eingeführt werden und sodann das Haltemittel von oben auf den oberen Randbereich des Gebindes abgesenkt werden, wodurch ein Klemmen des oberen Randbereichs des Gebindes zwischen dem Greiffinger und dem Haltemittel herbeigeführt wird, ohne mit dem im Gebinde befindlichen Obst oder Gemüse in Kontakt zu kommen und auch ohne eine Druckkraftbeaufschlagung von Obst oder Gemüse durchzuführen.

Das so geklemmte Gebinde kann über eine Hubbetätigung der Halteeinrichtung in der Form beispielsweise des erwähnten Greiffingers zusammen mit dem auf dem Randbereich in Anlage befindlichen Haltemittel von der Unterlage getrennt werden und in den so geschaffenen Zwischenraum die Unterfahrplatte oder Trageplatte eingeführt werden. Alternativ hierzu kann die Unterfahrplatte oder Trageplatte auch in den durch Anheben der Halteeinrichtung geschaffenen Zwischenraum zwischen dem angehobenen Gebinde und dem darunter befindlichen Gebinde oder der Unterlage eingeführt werden und erst in einem Folgeschritt das Haltemittel auf den oberen Randbereich des Gebindes abgesenkt werden.

Sodann wird das auf der Trageplatte oder der Unterfahrplatte aufliegende Gebinde von der Unterlage separiert und kann in einem weiteren Schritt in auf der Trageplatte oder der Unterfahrplatte aufliegender Weise weitertransportiert werden.

Die Erfindung wird im Folgenden anhand der Zeichnung näher erläutert, diese zeigt in:
Fig. 1 vier Ansichten von unterschiedlichen Gebinden, welche zur Aufnahme von Obst- und Gemüseprodukten üblicherweise verwendet werden und mit der erfindungsgemäßen Depalettieranordnung und nach dem erfindungsgemäßen Verfahren automatisch depalettiert werden können;
Fig. 2 eine schematische Darstellung einer als Portalroboter ausgebildeten Ausführungsform der erfindungsgemäßen Depalettieranordnung in einem Verteilerzentrum mit jeweiligen Lagerplätzen mit unterschiedlichen Gebinden, wie sie in Fig. 1 der Zeichnung dargestellt wurden;
Fig. 2A eine detailliertere Darstellung der Depalettieranordnung nach Fig. 2 in einer Regalgasse mit beidseits der Regalgasse angeordneten Lagerreihen mit Stückgutgebinden;
Fig. 2B eine vergrößerte Darstellung eines Ausschnitts der Depalettieranordnung nach Fig. 2A;
Fig. 2C eine perspektivische Darstellung der Depalettieranordnung beim Depalettieren von Stückgutgebinden, die in einer hinteren Reihe eines Palettenstapels mit Stückgutgebinden angeordnet sind;
Fig. 2D eine Darstellung ähnlich derjenigen nach Fig. 2C, bei der die Vorrichtung zum Depalettieren mit der Drehaufnahme aus der auskragenden Stellung nach Fig. 2C bereits zurückgezogen worden ist;
Fig. 2E eine Darstellung ähnlich derjenigen nach Fig. 2D, bei der der Träger mit der Drehaufnahme zur Ablage der depalettierten Stückgutgebinde auf eine Fördereinrichtung abgesenkt wurde;
Fig. 3 eine perspektivische Darstellung einer schematisch dargestellten Ausführungsform einer Vorrichtung zum Depalettieren nach der vorliegenden Erfindung;
Fig. 4 eine Abfolge von acht schematischen Darstellungen 4.1, 4.2, 4.3, 4.4, 4.5, 4.6, 4.7 und 4.8, welche die Vorrichtung beim Depalettieren von Einweggebinden mit Stapelnasen im jeweiligen Eckbereich der Gebinde zeigt;
Fig. 5 eine Abfolge von acht schematischen Darstellungen 5.1, 5.2, 5.3, 5.4, 5.5, 5.6, 5.7 und 5.8, welche die Vorrichtung beim Depalettieren von Mehrweggebinden mit Handgriffausnehmungen an den Längswänden und an den Querwänden zeigt;
Fig. 6 eine schematische und perspektivische Darstellung einer Klappbox mit der erfindungsgemäßen Vorrichtung und sich mit der Handgriffausnehmung der Klappbox in Eingriff befindendem Greiffinger sowie mit am oberen Randbereich der Klappbox aufliegenden Haltemittel;
Fig. 7 eine schematische Darstellung eines Mehrweggebindes mit dem bereits in Eingriff mit der Handgriffausnehmung befindendem Eingriffsmittel in einer Stellung, bevor sich das Haltemittel auf den oberen Randbereich absenkt;
Fig. 8 eine schematische perspektivische Darstellung eines Verteilerzentrums für die Kommissionierung von Frischwaren und hier beispielsweise Obst- und Gemüseprodukten;
Fig. 9 eine schematische Darstellung des Eingangsbereichs des Verteilerzentrums mit dort ankommenden Artikelpaletten oder Quellpaletten mit Stückgutgebinden, welche jeweils mit gleichen Artikeln befüllt sind;
Fig. 10 eine schematische Darstellung des Kommisionierbereichs des Verteilerzentrums mit einer Vielzahl von automatisierten Vorrichtungen zur Palettierung der Stückgutgebinde und einer Vielzahl von Zwischenförderstrecken zur Beförderung von Stückgutgebinden in der Form einzelner Gebinde oder Stückgutgebindestapel zum Palettierbereich;
Fig. 11 eine Darstellung einer Förderstrecke, welche Stückgutgebinde oder Stückgutgebindestapel zu den Zwischenförderstrecken befördert;
Fig. 12 eine perspektivische Darstellung der Zwischenförderstrecken;
Fig. 13 eine perspektivische Darstellung einer Sequenziervorrichtung mit Sequenziereinrichtung und Sequenzierbahnen;
Fig. 14 eine Darstellung einer automatisierten Vorrichtung zur Palettierung, die sich an eine Sequenziervorrichtung anschließt;
Fig. 15 eine Darstellung zur Erläuterung einer Stapeleinrichtung zur Bildung von Stückgutgebindestapel;
Fig. 16 eine der Darstellung nach Fig. 15 ähnliche Darstellung, welche ein auf einer Hubfördereinrichtung der Stapeleinrichtung platziertes Stückgutgebinde zeigt;
Fig. 17 eine Darstellung ähnlich der Darstellung nach Fig. 16, welche einen Teil des Ausrichtvorgangs des auf der Hubfördereinrichtung platzierten Stückgutgebindes zeigt;
Fig. 18 eine Darstellung ähnlich derjenigen nach Fig. 17, welche einen Teil des Ausrichtvorgangs des auf der Hubfördereinrichtung platzierten Stückgutgebindes zeigt;
Fig. 19 eine Darstellung ähnlich derjenigen nach Fig. 18, welche einen weiteren Teil des Ausrichtvorgangs und der Bildung des Stückgutgebindestapels zeigt;
Fig. 20 eine Darstellung ähnlich derjenigen nach Fig. 19, welche zeigt, dass die beiden Stückgutgebinde bereits zur Bildung eines Stückgutgebindestapels aufeinander platziert worden sind;
Fig. 21 eine Darstellung ähnlich derjenigen nach Fig. 20, welche den bereits fertig gebildeten Stückgutgebindestapel mit zwei Stückgutgebinden zeigt;
Fig. 22 eine Darstellung ähnlich derjenigen nach Fig. 21, welche zeigt, dass der Stückgutgebindestapel an der Stapeleinrichtung in die Höhe einer benachbarten Fördereinrichtung angehoben wurde;
Fig. 23 eine perspektivische Darstellung einer Palettiervorrichtung des erfindungsgemäßen Systems;
Fig. 24 bis 32 Darstellungen zur Erläuterung des Palettiervorgangs zur Anordnung von unterschiedlichen Stückgutgebinden an einer Zielpalette oder Filialpalette.

Nachfolgend wird zunächst das System zur Kommissionierung anhand einzelner Figuren näher erläutert.

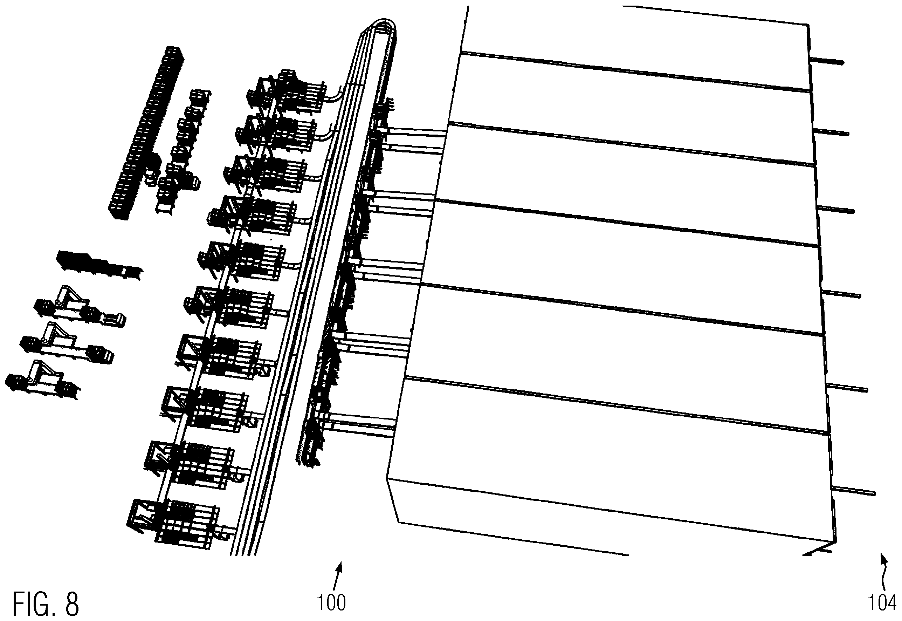

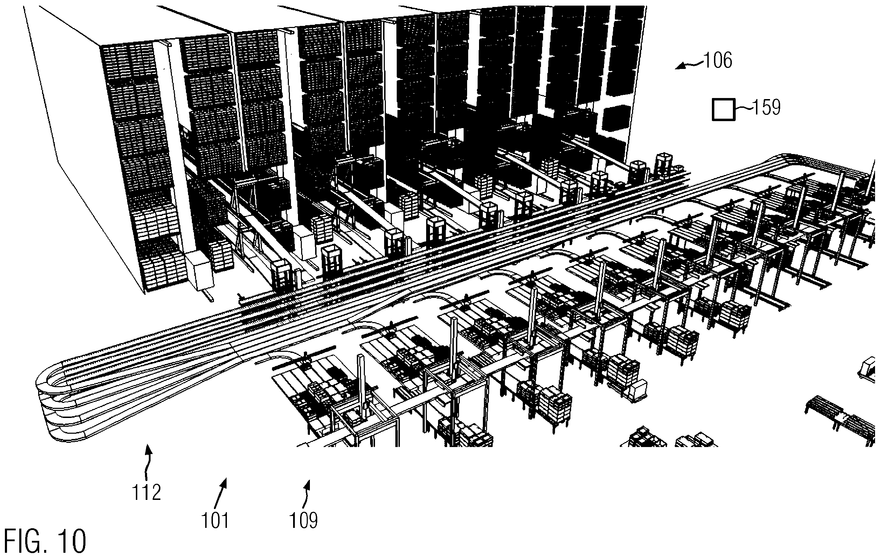

Anhand von Fig. 8 der Zeichnung ist eine schematische perspektivische Darstellung eines Verteilerzentrums 100 für Frischwaren in der Form von beispielsweise Obst- und Gemüseprodukten ersichtlich, welches das erfindungsgemäße System 101 umfasst, wie es sich anhand von Fig. 10 der Zeichnung zeigt.

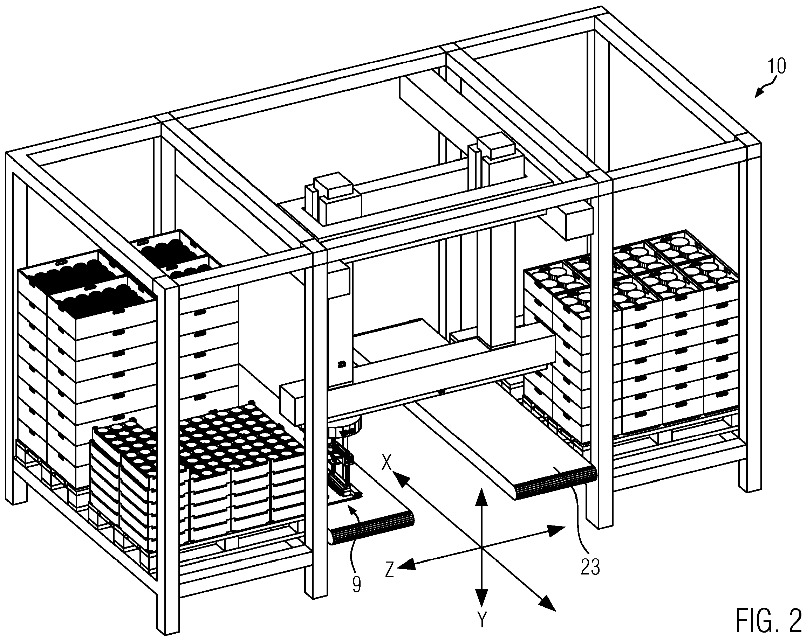

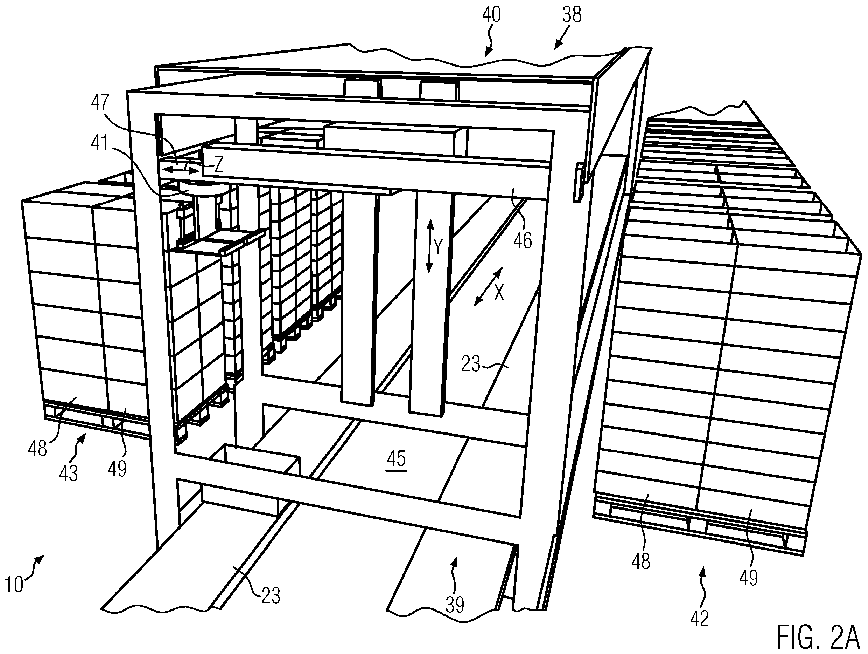

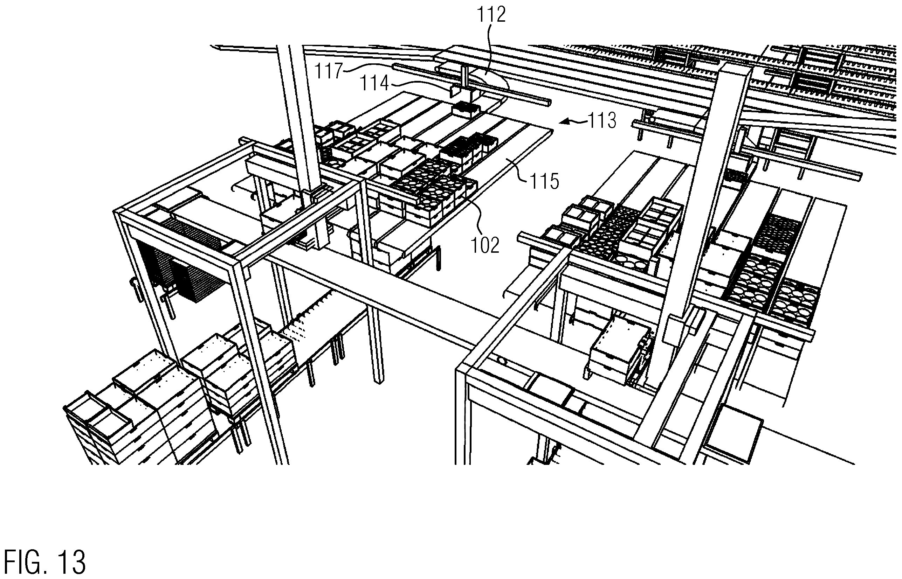

Das System 101 umfasst eine automatisierte Vorrichtung 9 zur Depalettierung der Stückgutgebinde oder Depalettieranordnung 38, wie sie anhand von Fig. 2A ersichtlich ist und nachfolgend noch detailliert erläutert werden wird. Das System 101 umfasst auch eine automatisierte Stapeleinrichtung 125 zur Bildung von Stückgutgebindestapel 102, wie sie beispielsweise anhand von Fig. 13 der Zeichnung ersichtlich sind und eine Steuervorrichtung 159, die dazu eingerichtet ist, die Position der Stückgutgebinde zu erfassen und zu überwachen, so dass die Position der Stückgutgebinde oder von Stückgutgebindestapeln festgestellt und bekannt ist.

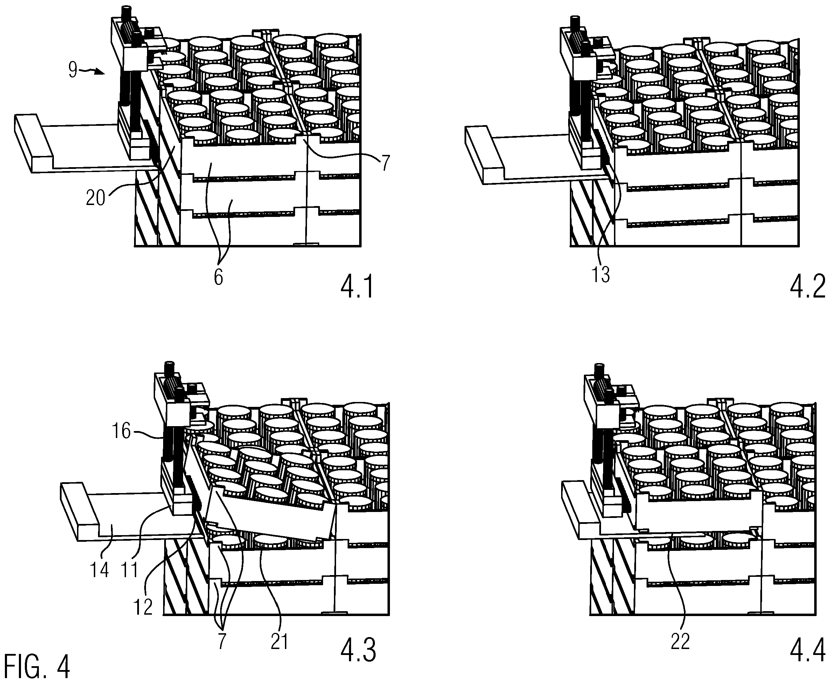

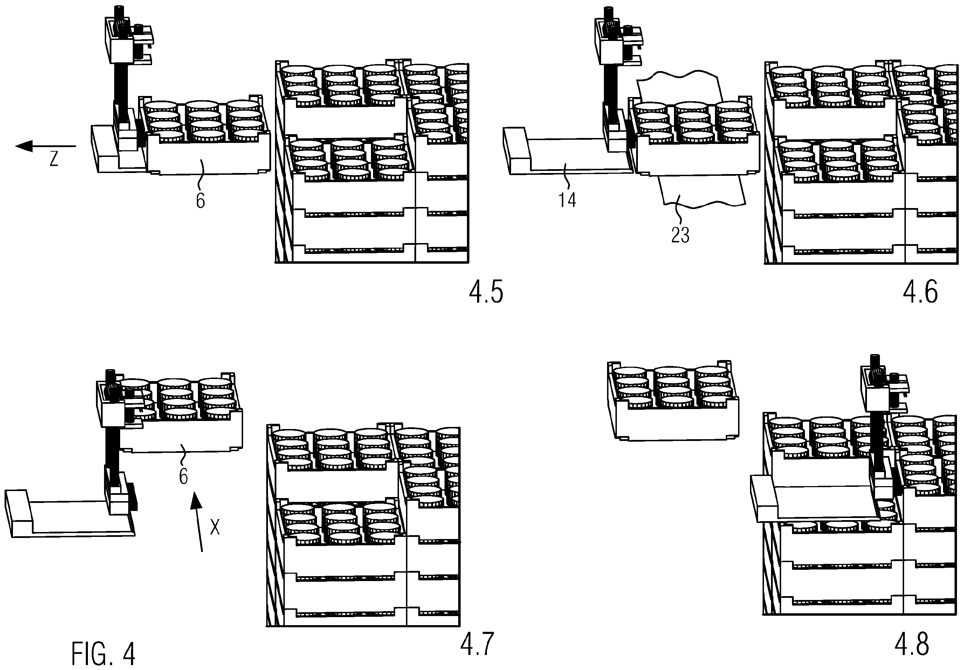

Diese Stückgutgebindestapel 102 in der Form von zwei oder auch mehr übereinander gestapelter Stückgutgebinde stellen artikelgleiche Gebinde dar, also solche Gebinde, welche einen jeweils gleichen Inhalt aufweisen und daher auf der Zielpalette auch als Gebindestapel angeordnet werden. Hierzu werden depalettierte Stückgutgebinde mittels der automatisierten Stapeleinrichtung zu einem Stückgutgebindestapel zusammengesetzt und zwar in einer solchen Weise, dass etwaige Zentriereinrichtungen an den Gebinden, wie beispielsweise Stapelnasen 7 oder dergleichen, wie sie beispielsweise anhand von Fig. 4.1 der Zeichnung ersichtlich sind, zueinander ausgerichtet verbleiben, also die Stückgutgebinde so aufeinander positioniert werden, dass Stapelnasen 7 des Gebindes oder Einweggebindes 6 in entsprechende Stapelnasenausnehmungen des darüber angeordneten Gebindes eingreifen und so der Stückgutgebindestapel in sich stabil ist und auch die Gefahr vermieden ist, dass einzelne Stückgutgebinde bei deren Manipulation oder bei der Manipulation der Stückgutgebindestapel aus dem im Stückgutgebinde gebildeten Gefügeverbund verrutschen und beispielsweise von Stückgutgebindestapel herunterfallen.

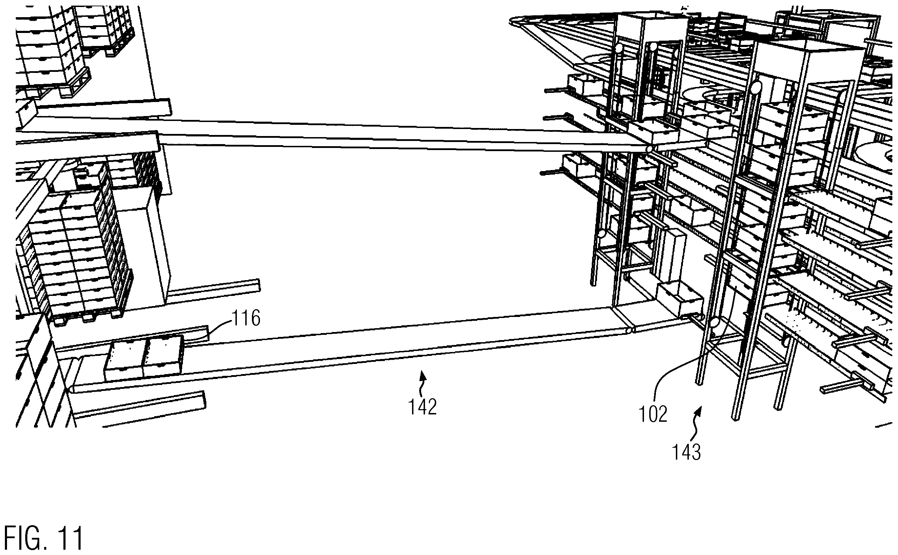

Das System 101 umfasst darüber hinaus automatisierte Fördereinrichtungen 112 in der Form von beispielsweise Rollenförderern oder Bandförderern, welche auch als beispielsweise anhand von Fig. 11 der Zeichnung dargestellte Mattenketten 103 ausgebildet sein können, auf denen die zu transportierenden Stückgutgebinde nicht verrutschen können, wobei dies sowohl für einzelne Stückgutgebinde, als auch für Stückgutgebindestapel gilt.

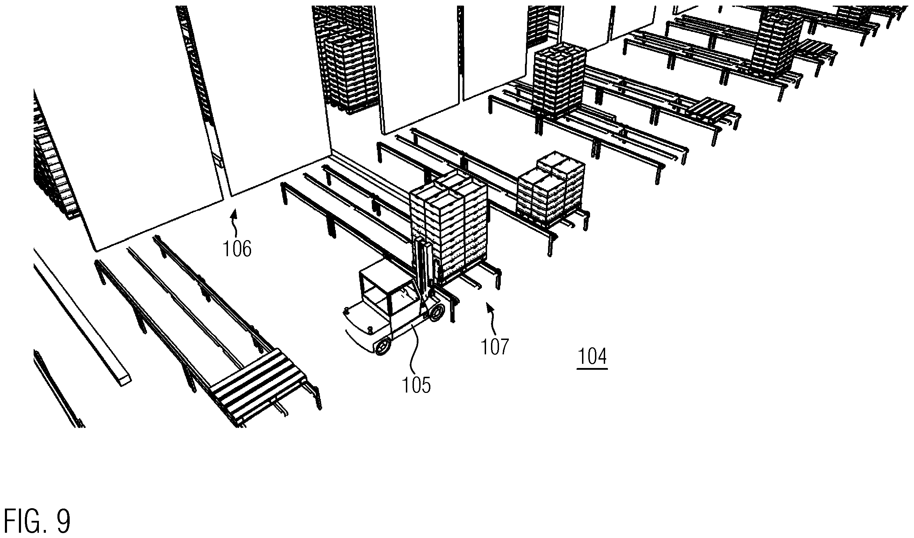

Wie es sich anhand von Fig. 8 der Zeichnung darüber hinaus ergibt, besitzt das Verteilerzentrum 100 einen Anlieferungsbereich oder Eingangsbereich 104, welcher näher noch anhand von Fig. 9 der Zeichnung dargestellt ist, wobei die vorstehend bereits erwähnten Artikelpaletten 107 mittels beispielsweise eines Gabelstaplers 105 in den Eingangsbereich 104 befördert werden und von dort in das Hochregallager 106 befördert werden, welches beispielsweise auch anhand von Fig. 10 der Zeichnung ersichtlich ist.

In dem Hochregallager 106 befindet sich auf der untersten Ebene 108, wie dies anhand von Fig. 10 der Zeichnung ersichtlich ist, eine auch anhand von Fig. 2A ersichtliche Lagergasse 45, in der die Depalettieranordnung 38 angeordnet ist, wobei das in Fig. 10 der Zeichnung ersichtliche Hochregallager 106 eine Mehrzahl von solchen Lagergasse 45 mit einer jeweiligen Depalettieranordnung 38 aufweist.

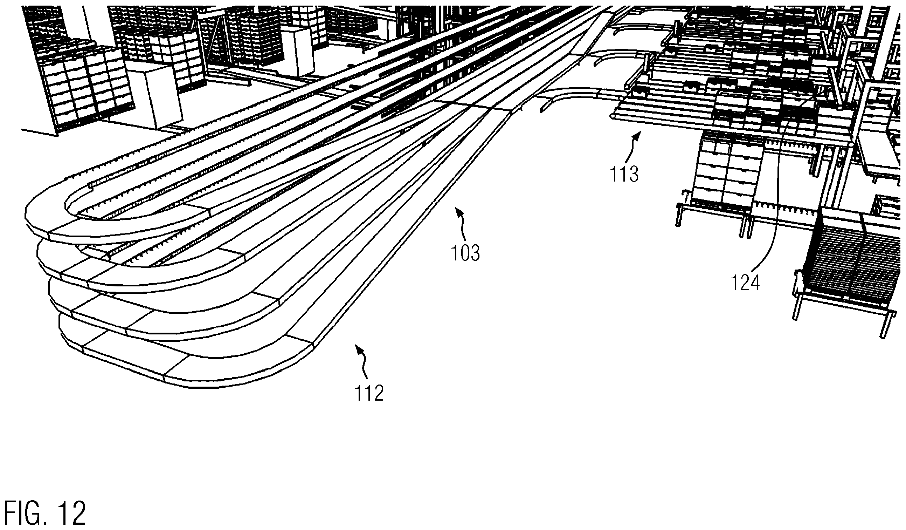

Die Artikelpaletten 107 sind im Bereich der Lagergasse 45 beidseits der Depalettieranordnung 38 angeordnet und zwar jeweils einfachtief, wie sich dies beispielsweise anhand von Fig. 12 der Zeichnung zeigt.

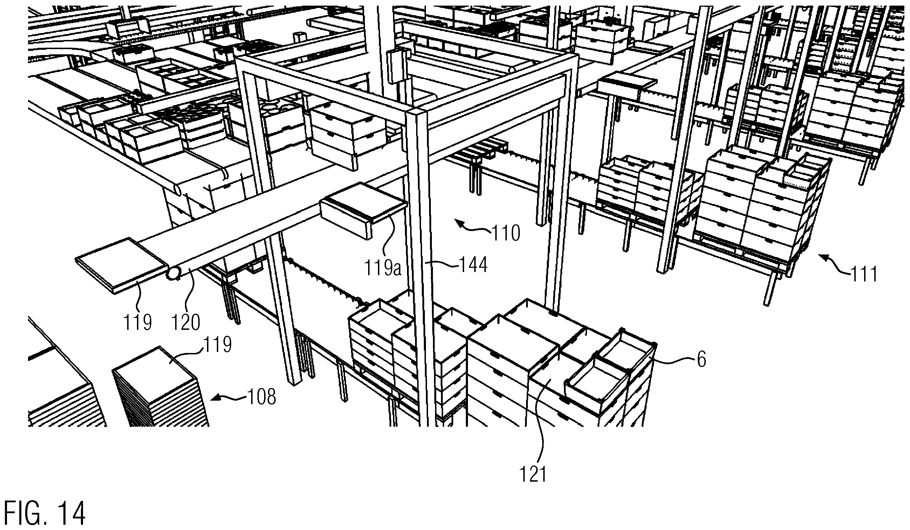

Fig. 10 der Zeichnung zeigt Darstellung des Kommisionierbereichs 109 des Verteilerzentrums 100 mit einer Vielzahl von automatisierten Vorrichtungen 110 oder Palettiervorrichtungen 110 zur Palettierung der Stückgutgebinde auf den Zielpaletten 111, die beispielsweise anhand von Fig. 14 der Zeichnung ersichtlich sind. Wie sich dies anhand der Zielpaletten oder Filialpaletten 111 zeigt, sind auf den Zielpaletten eine Vielzahl von unterschiedlichen Stückgutgebinden angeordnet, welche unterschiedliche Waren oder Artikel beinhalten können und zur späteren Versendung in die jeweilige Filiale vorgesehen sind.

Über beispielsweise anhand von Fig. 10 und 12 der Zeichnung ersichtliche Fördereinrichtungen 112 in der Form der bereits erwähnten Mattenketten 103 werden die depalettierten Stückgutgebinde oder Stückgutgebindestapel anhand von Fig. 13 der Zeichnung ersichtlichen Sequenziervorrichtungen 113 gefördert.

Die Sequenziervorrichtung 113 weist eine Sequenziereinrichtung 114 und eine Mehrzahl von parallel zueinander angeordneten Sequenzierbahnen 115 auf, wobei bei der dargestellten Ausführungsform der Sequenziervorrichtung 113 sieben parallel zueinander angeordnete Sequenzierbahnen 115 vorgesehen sind, auf denen die mittels der Fördereinrichtung 112 zur Sequenziervorrichtung 113 beförderten Stückgutgebinde 116 oder Stückgutgebindestapel 102 über die Sequenziereinrichtung 114, welche an einem Träger 117 in Querrichtung zu den Sequenzierbahnen 115 bewegt werden kann und in Hochachsrichtung auf die jeweiligen Stückgutgebinde 116 beziehungsweise Stückgutgebindestapel 102 abgesenkt werden kann, um diese in einer vorbestimmter Reihenfolge auf die Sequenzierbahnen 115 zu verteilen.

Ausgangsseitig der Sequenziervorrichtung 113 ist, wie dies anhand von Fig. 12 der Zeichnung ersichtlich ist, eine weitere Sequenziereinrichtung 114 vorgesehen, welche in der vorbestimmten Reihenfolge Stückgutgebindestapel 102 oder Stückgutgebinde 116 der nachfolgend noch näher erläuterten Palettiervorrichtung 110 zuführt, welche dann die Stückgutgebinde 116 oder Stückgutgebindestapel 102 auf der Zielpalette 111 anordnet, die beispielsweise anhand von Fig. 14 der Zeichnung ersichtlich ist.

Fig. 14 der Zeichnung zeigt auch am linken unteren Rand des Bildes einen Stapel 118 mit zusammengelegt den Klappbehälter 119, bei denen es sich um Klappboxen 8 handeln kann, die bei der Kommissionierung derartiger Produkte oftmals zum Einsatz kommen. Diese Klappboxen 8 können im zusammengelegten Zustand mittels einer nicht näher dargestellten Hubvorrichtung von einer Palette mit Klappboxen ausgehend vereinzelt und auf die Höhe der Fördereinrichtung 120 angehoben werden, welche den Klappbehälter 119 dann zur Palettiervorrichtung 110 befördert und die Palettiervorrichtung 110 den Klappbehälter 119, der in Fig. 14 der Zeichnung mit dem Bezugszeichen 119a dargestellt ist, auf eine obere Lage 121 anordnen kann, damit beispielsweise kleine Einweggebinde 6, die ebenfalls in Fig. 14 der Zeichnung dargestellt sind, auf der oberen Lage 121, welche dann von dem Klappbehälter 119a gebildet wird, abgesetzt werden können.

Damit können durch die Zwischenlage der Klappbehälter 119a als obere Lage oder Zwischenlage 121 auch Einweggebinde 6 oder andere Stückgutgebinde 116 auf größeren Stückgutgebinden 116 angeordnet werden, ohne dass die Gefahr besteht, dass Artikel, welche sich in unterhalb des Klappbehälters 119a angeordneten Stückgutgebinden 116 befinden, von darüber liegenden oder darüber positionierten Stückgutgebinden 116 beschädigt werden, da die darüber liegenden Stückgutgebinde 116 dann auf den Klappbehältern 119a aufliegen und nicht auf den Artikeln in den Stückgutgebinden 116.

Im Verteilerzentrum 100 ankommende Gebinde mit Obst- und Gemüseprodukten werden auf Artikelpaletten 107 angeliefert, die Gebinde aufweisen, welche mit jeweils gleichem Artikel befüllt sind, also beispielsweise Früchten oder auch Gemüseprodukten oder Salaten, wobei die Gebinde oben offen ausgebildet sind.

Diese Gebinde müssen aufgrund der Verderblichkeit der Waren rasch und ohne Beschädigung der Waren von den Artikelpaletten 107, bei denen es sich um standardisierte Paletten handeln kann, abgenommen werden, um in so vereinzelter Weise über einen Bandförderer oder dergleichen in ein Zwischenlager transferiert werden zu können.

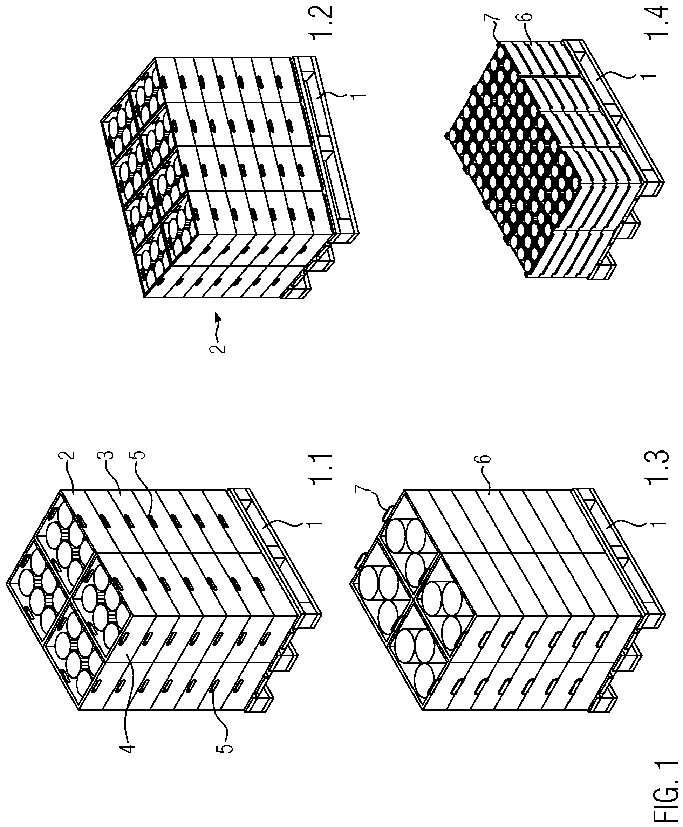

Fig. 1 der Zeichnung zeigt in vier Ansichten eine Vielzahl von Gebindetypen, die im Verteilerzentrum 100 zu einer jeweiligen Artikelpalette 107 zusammengefasst angeliefert werden und depalettiert werden müssen.

Die Darstellung 1.1 der Fig. 1 zeigt eine standardisierte Palette 1 mit daran angeordneten Mehrweggebinden 2, welche sowohl an der jeweiligen Längsseitenwand 3 als auch an der jeweiligen Querseitenwand 4 eine jeweilige Handgriffausnehmung 5 aufweisen, da die Gebinde beim Produzenten der Obst- und Gemüseprodukte befüllt und auf den Paletten 1 in Stapelanordnung angeordnet werden und dies manuell stattfindet.

Während die Darstellung 1.1 Gebinde mit einer Grundfläche von beispielsweise 600 mal 400 mm zeigt, die in unterschiedlichen Höhen vorliegen können, je nachdem welche Produkte in den Gebinden aufgenommen werden, zeigt die Darstellung 1.2 eine Palette 1 mit Gebinden 2 mit einer Grundfläche von jeweils 300 mal 400 mm, und in einer von den Gebinden 2 nach der Darstellung 1.1 abweichender Höhe des jeweiligen Gebindes 2.

Die Darstellung 1.3 der Fig. 1 zeigt wiederum eine Palette 1 mit Einweggebinden 6 mit Stapelnasen 7 an der jeweiligen Querseite des Gebindes 6 und einer Grundfläche von 600 mal 400 mm. Die Darstellung 1.4 der Fig. 1 zeigt eine Palette 1 mit Einweggebinden 1 mit einer jeweiligen Grundfläche von 300 mal 400 mm und geringerer Höhe als die Einweggebinde 6 nach der Darstellung 1.3 und Stapelnasen 7 im jeweiligen Eckbereich der Gebinde 6.

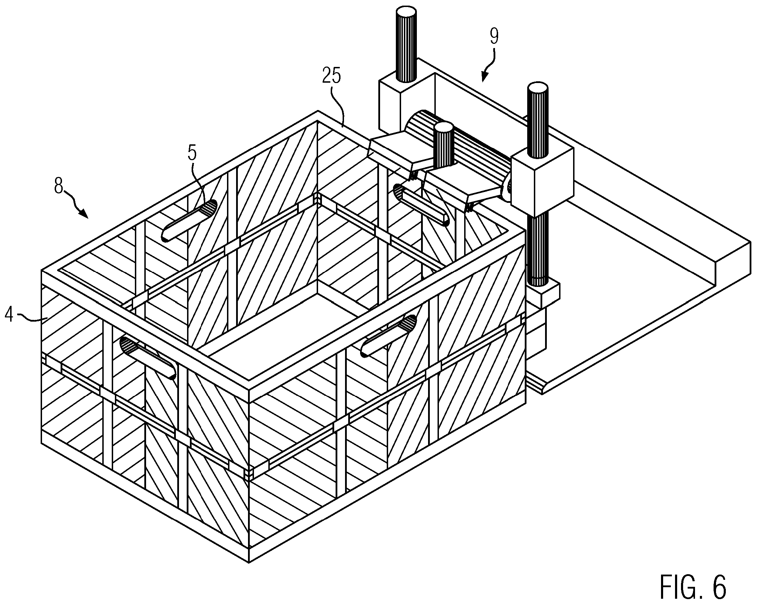

Fig. 6 der Zeichnung schließlich zeigt ein Mehrweggebinde in der Form einer Klappbox 8, sodass ersichtlich ist, dass im Verteilerzentrum unterschiedliche Gebindetypen mit Obst- und Gemüseprodukten angeliefert werden und es erheblichen Bedarf für eine Vorrichtung gibt, die zur automatisierten Handhabung der Depalettierung aller dargestellten Gebindetypen ausgebildet ist.

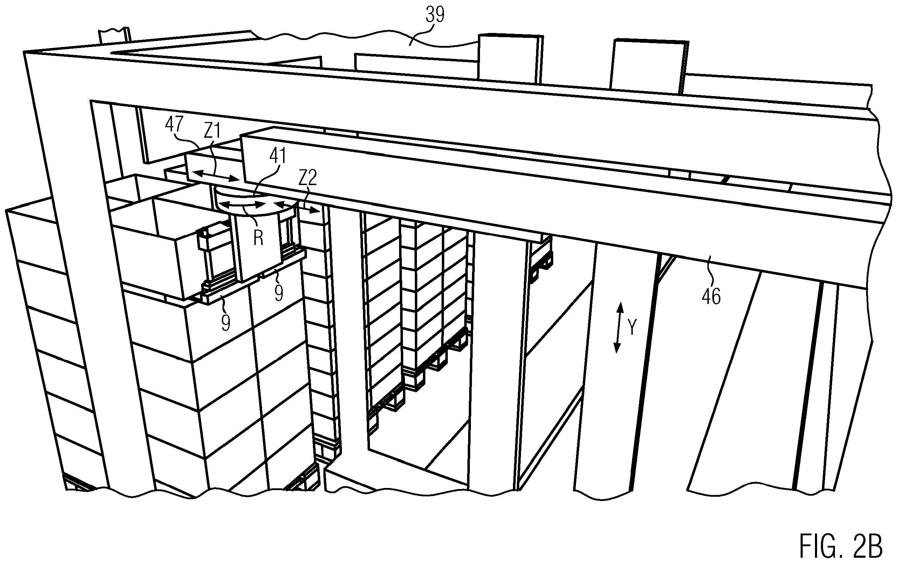

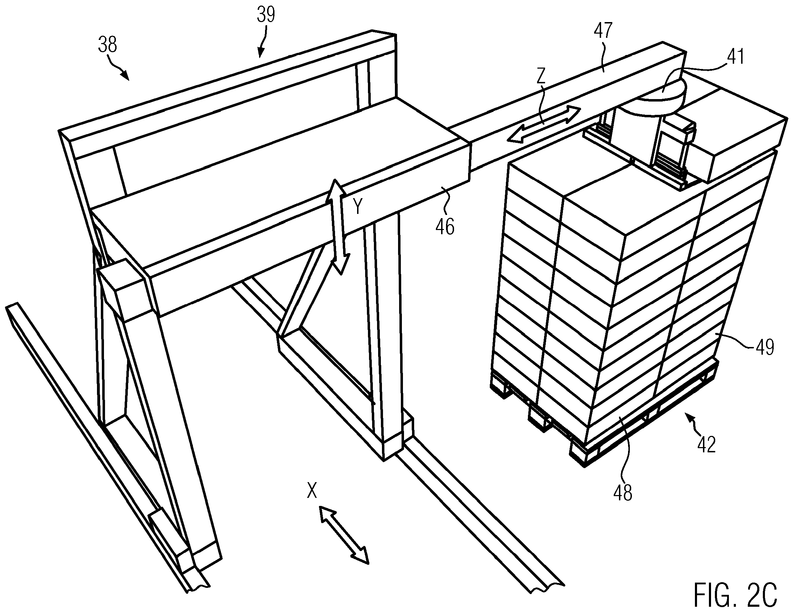

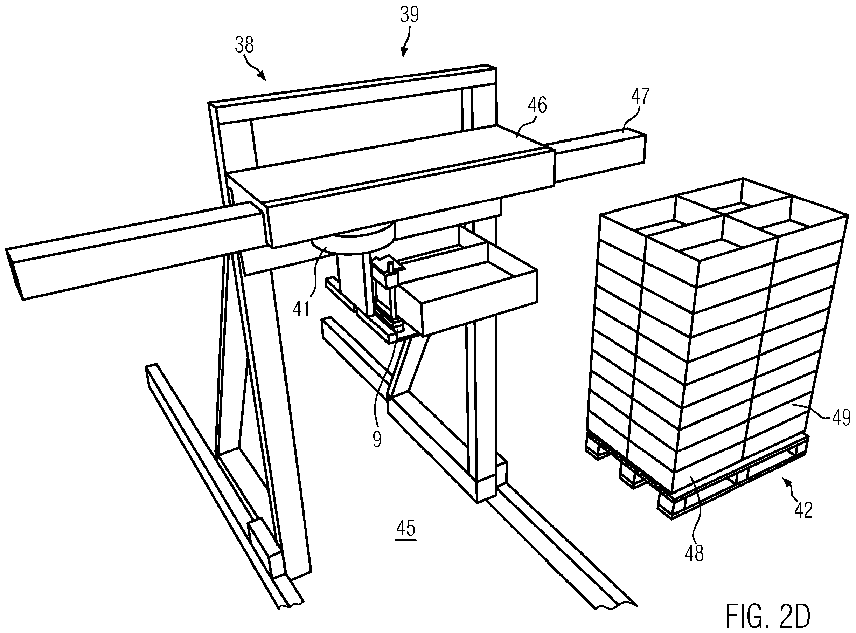

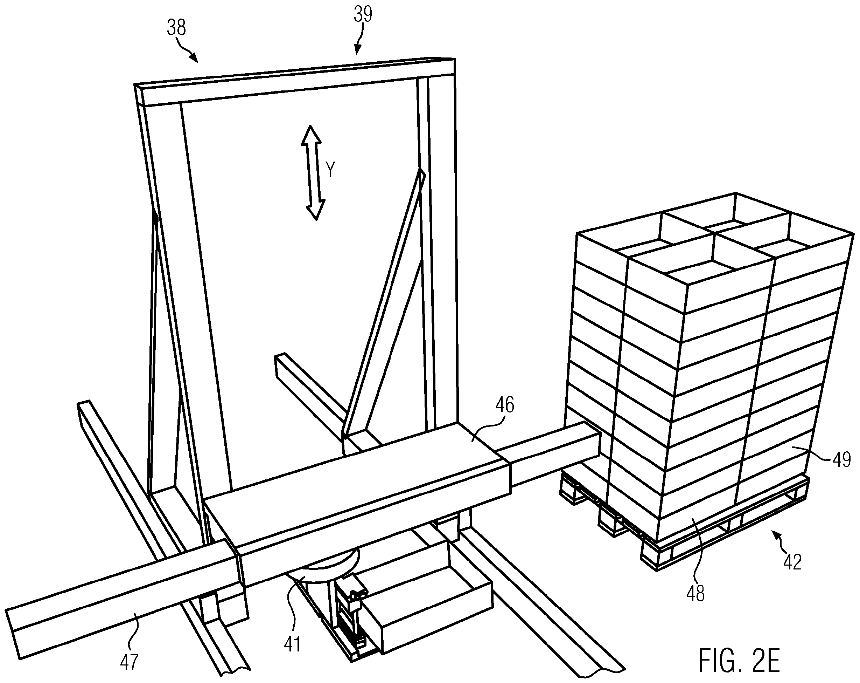

Fig. 2 der Zeichnung zeigt eine Ausführungsform einer Depalettieranordnung 38 mit einer Vorrichtung 9 zum Depalettieren, die in ein Portalrobotersystem 10 integriert ist, welches in einem in Fig. 2A ersichtlichen Verteilerzentrum 100 mit Lagerreihen mit beidseitigen Palettenstapeln angeordnet werden kann und sowohl in Hochachsrichtung Y als auch in Querrichtung Z als auch in hierzu orthogonaler Richtung X entlang der Lagergasse 45 verfahren werden kann, um Zugriff zu haben auf die dort zwischengelagerten Paletten mit den unter Bezugnahme auf die Fig. 1 erläuterten unterschiedlichen Gebindetypen.

Das Portalrobotersystem 10 nach Fig. 2 ist näher anhand von Fig. 2A dargestellt, sodass das Portalrobotersystem 10 die Depalettieranordnung 38 umfasst, welche eine Tragstruktur in der Form eines Portals 39 aufweist, wobei das Portalrobotersystem 10 als steuerbarer Roboter ganz allgemein als Manipulator 40 bezeichnet ist, der demgemäß die Depalettieranordnung 38 umfasst.

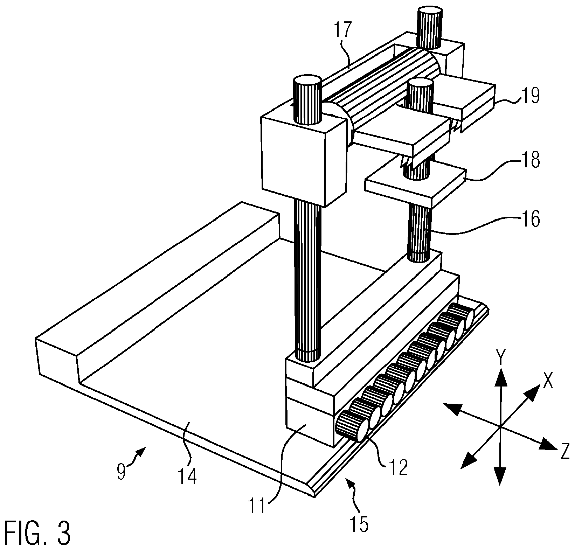

Wie es anhand von Fig. 2A der Zeichnung ersichtlich ist, ist die näher anhand von Fig. 3 der Zeichnung ersichtliche Vorrichtung 9 zum Depalettieren der Stückgutgebinde 2, 6, 8 an einer Drehaufnahme 41 angeordnet, sodass über die Drehbetätigung der Drehaufnahme 41 mit bei der dargestellten Ausführungsform zwei an der Drehaufnahme 41 angeordneten Vorrichtungen 9 zum Depalettieren der Stückgutgebinde beide Regalreihen 42, 43 mit Palettenstapeln 44 mit den Stückgutgebinden, welche sich entlang der Lagergasse 45 erstrecken, erreicht werden können.

Fig. 2B zeigt eine vergrößerte Darstellung eines Ausschnitts aus Fig. 2A mit der Drehaufnahme 41 mit den zwei daran angeordneten Vorrichtungen 9 zum Depalettieren der Stückgutgebinde.

Wie es ohne weiteres ersichtlich ist, ist an der Tragstruktur 39 in der Form des Portals ein in Hochachsrichtung Y der Tragstruktur 39 bewegbarer Träger 46 vorgesehen, der sich in Querrichtung der Tragstruktur 39 erstreckt und an dem ein Tragarm 47 vorgesehen ist, der in Z-Richtung relativ zum Träger 46 und damit relativ zur Tragstruktur 39 bewegbar ist, und, wie dies beispielsweise anhand von Fig. 2A der Zeichnung ersichtlich ist, ausgefahren werden kann, damit die Drehaufnahme 41 und damit die beiden Vorrichtungen 9 zum Depalettieren der Stückgutgebinde die Gebinde beidseits der Lagergasse 45 erreichen kann und zwar so, dass die in der ersten Reihe 48 angeordneten Gebinde der Regalreihe 42 und auch die in der zweiten Reihe 49 angeordneten Gebinde der Regalreihe 42 erreicht werden können und auch die Gebinde der beiden Reihen 48, 49 der zweiten Regalreihe 43 von der Drehaufnahme beziehungsweise dem Drehkopf 41 mit den beiden Vorrichtungen 9 zum Depalettieren der Stückgutgebinde erreicht werden können. Der Drehkopf beziehungsweise die Drehaufnahme 41 ist mittels eines am Drehkopf angeordneten Elektromotors und eines davon angetriebenen Zahnriemens um eine vertikale Achse an dem Tragarm 47 drehbar, wie dies durch den Pfeil R in Fig. 2B gezeigt ist.

Über eine axiale Bewegung des Tragarms 47 relativ zum Träger 46, also eine Bewegung des Tragarms 47 mit dem daran angeordneten Drehkopf 41 mit den Vorrichtungen 9 in Z-Richtung nach Fig. 2 der Zeichnung können also die Vorrichtungen 9 der Depalettieranordnung 38 alle Stückgutgebinde der Regalreihen 42, 43 erreichen und über eine Drehbetätigung des Drehkopfes 41 um 180 Grad relativ zum Tragarm 47 beziehungsweise zum Träger 46 können die Vorrichtungen 9 zum Depalettieren der Stückgutgebinde jeweils relativ zu den Stückgutgebinden ausgerichtet werden.

Wie es anhand von Fig. 2B der Zeichnung ersichtlich ist, ist die Verfahrrichtung des Tragarms 47 in Z-Richtung in beide Richtungen mit Z1 bezeichnet. Zum Verfahren des Tragarms 47 in beide Richtungen ist ein Antrieb mit einer Zahnstange mit einem Antriebsritzel vorgesehen.

Der Drehkopf 41 mit den beiden Vorrichtungen 9 kann relativ zum Tragarm 47 ebenfalls in Z-Richtung bewegt werden und zwar ebenfalls in beide Richtungen, welche in Fig. 2B mit Z2 bezeichnet ist. Die Verfahrbewegung des Drehkopfes 41 in Z2 Richtung kann also als Relativbewegung der Führungsbewegung des Tragarms 47 in Z1 Richtung überlagert werden und die Verfahrbewegung des Drehkopfes 41 ist auch unabhängig von der Verfahrbewegung des Tragarms in Z1 Richtung möglich. Zur Verfahrbewegung des Drehkopfes in Z2 Richtung ist ein Zahnriementrieb mit Elektromotor und Zahnriemen vorgesehen.

Fig. 2C der Zeichnung zeigt, dass der am Träger 46 in Z-Richtung bewegbare Tragarm 47 in Richtung zur Regalreihe 42 ausgefahren wurde und demgemäß auch der Drehkopf 41 mit den beiden Vorrichtungen 9 zum Depalettieren der Stückgutgebinde. Die in der ersten Reihe 48 der Regalreihe 42 platzierten Stückgutgebinde wurden bereits depalettiert und Fig. 2C der Zeichnung zeigt die Vorrichtungen 9 beim Depalettieren der in der zweiten Reihe 49 der Regalreihe 42 angeordneten Stückgutgebinde.

Fig. 2D der Zeichnung zeigt, dass der Drehkopf 41 mit den beiden Vorrichtungen 9 und den depalettierten Stückgutgebinden relativ zum Tragarm 47 und auch der Tragarm 47 selbst in die Richtung zur Regalgasse 45 verfahren worden ist und sich der Träger 46 in Y-Richtung noch in der Höhe gemäß Fig. 2C befindet.

In einem nächsten Schritt wird dann der Träger 46 mit dem Tragarm 47 und dem Drehkopf 41 und den Vorrichtungen 9 in Y-Richtung abgesenkt, sodass die depalettierten Stückgutgebinde auf die Förderbänder 23 abgesenkt werden können, und auf die Förderbänder 23 übergeben werden können, wie dies anhand von Fig. 2E der Zeichnung ersichtlich ist. Die Förderbänder 23 sind in Fig. 2 und Fig. 2A der Zeichnung ersichtlich.

Fig. 3 der Zeichnung zeigt eine schematische perspektivische Darstellung der Vorrichtung 9 mit dem bereits in Fig. 2 erläuterten Koordinatensystem.

Die Vorrichtung 1 weist eine Halteeinrichtung 11 auf, an dem eine Saugeinrichtung 12 in der Form von im Abstand zueinander angeordneter Saugmittel 13 vorgesehen sind, welche an eine Seitenwand eines Einweggebindes 6 herangeführt werden können, dort in Anlage gebracht werden können und über die Erzeugung von Unterdruck mittels einer nicht näher dargestellten Saugpumpe eine Saugkraft auf die Seitenwand des Einweggebindes 6 ausüben können, welche ausreichend dafür ist, dass das Einweggebinde unter Aufrechterhaltung der Saugkraft zur Herbeiführung eines Zwischenraums zwischen dem angehobenen Einweggebinde und dem darunter angeordneten Einweggebinde oder einer Unterlage in vorbestimmter Weise angehoben werden kann, sodass die Trageplatte oder Unterfahrplatte 14 in den Zwischenraum verfahren werden kann.

Darüber hinaus weist die Vorrichtung 1 auch eine Aufnahme 15 auf, an der zwei sich von der Trageplatte 14 im Winkel dazu weg erstreckende Träger 16 angeordnet sind, an denen ein Querträger 17 in Hochachsrichtung Y verschiebbar angeordnet ist.

An der Aufnahme 15 ist auch eine Eingriffseinrichtung 18 angeordnet, welche zur Herbeiführung einer lösbaren Eingriffsstellung mit einer Handgriffausnehmung eines Gebindes ausgebildet ist, wie dies nachfolgend noch erläutert werden wird.

Darüber hinaus besitzt die Vorrichtung 9 auch ein Haltemittel 19, welches zur lösbaren Anordnung oder Auflage an einem oberen Randbereich eines jeweiligen Gebindes ausgebildet und vorgesehen ist, wie dies nachfolgend noch näher erläutert werden wird.

Fig. 4 zeigt in mehreren Darstellungen die Vorrichtung 9 beim Depalettieren von Einweggebinden 6 mit jeweiligen Stapelnasen 7 im Eckbereich der Einweggebinde 6.

Wie es anhand der Darstellung 4.1 ersichtlich ist, wird die Vorrichtung 9 so an eine Seitenwand 20 des Einweggebindes 6 herangeführt, dass die Saugmittel 13 an der Seitenwand 20 zur Anlage kommen. Mittels einer nicht näher dargestellten Pumpe kann zwischen den Saugmitteln 13 und der Seitenwand 20 Unterdruck erzeugt werden, sodass die Seitenwand 20 und damit das Einweggebinde 6 ohne die Ausbildung einer Druckkraft auf die Seitenwand 20 mit einer Haltekraft beaufschlagt werden kann die ausreichend groß ist, sodass über ein Anheben der Halteeinrichtung 11 mit der daran ausgebildeten Saugeinrichtung 12 mit den Saugmitteln 13 ein Zwischenraum 21 zwischen dem zu depalettierenden Einweggebinde 6 und dem darunter angeordneten weiteren Einweggebinde 6 ausgebildet werden kann.

Wie es anhand der Darstellung 4.3 ersichtlich ist, gelangen dabei die der Vorrichtung zugewandten vorderen Stapelnasen 7 außer Eingriff und die Unterfahrplatte oder Trageplatte 14 kann in den Zwischenraum 21 verschoben werden, bis das zu depalettierende Einweggebinde 6 an der Unterfahrplatte oder Trageplatte 14 aufliegt, wie dies in der Darstellung 4.4 der Fig. 4 ersichtlich ist. Die Platte 14 wird dabei so weit unter die Unterseite oder untere Fläche 22 des Einweggebindes 6 geschoben, bis der Schwerpunkt des Einweggebindes 6 mit den darin befindlichen Obst- oder Gemüseprodukten auf der Platte 14 zu liegen kommt, dabei gelangen auch die hinteren Stapelnasen 7 außer Eingriff.

Wie es anhand der Darstellung 4.3 ersichtlich ist, nimmt die Saugeinrichtung 12 zur Seitenwand 20 des Einweggebindes 6 eine zusammen mit der Seitenwand 20 schräggestellte Konfiguration ein, d. h. die Saugeinrichtung 12 kann zusammen mit der sich durch das Anheben des Einweggebindes 6 winkeligen einstellenden Konfiguration der Seitenwand 20 mit bewegen, sich also im Winkel relativ zur Hochachsrichtung der Träger 16 verändern, sodass weiterhin trotz der Winkelveränderung der Seitenwand 20 relativ zur Hochachsrichtung der Träger 16 eine geringe Unterdruckbeaufschlagung zum Halten der Seitenwand 20 ausreichend ist.

Sobald sich das Gebinde 6 auf der Trageplatte 14 angeordnet befindet, kann die Vorrichtung 9 in Z-Richtung verlagert werden und zwar so, dass das Einweggebinde 6 über einem in der Darstellung 4.6 schematisch mit dem Bezugszeichen 23 dargestellten Förderband 23 zu liegen kommt. Sodann kann die Trageplatte 14 unter dem Einweggebinde 6 weggezogen werden und zwar wieder in Z-Richtung und die Unterdruckbeaufschlagung der Saugeinrichtung 12 aufgehoben werden, das depalettierte Einweggebinde 6 wird, wie dies in der Darstellung 4.7 der Fig. 4 ersichtlich ist, in X-Richtung weg befördert und die Vorrichtung 9 ist, wie dies in der Darstellung 4.8 ersichtlich ist, zum nächsten Depalettiervorgang bereit und kann mit der Saugeinrichtung 12 in Richtung zur Seitenwand eines dem soeben depalettierten Gebinde 6 benachbarten weiteren Gebinde 6 bewegt werden und der Vorgang des Depalettierens dieses nächsten Gebindes 6 durchgeführt werden.

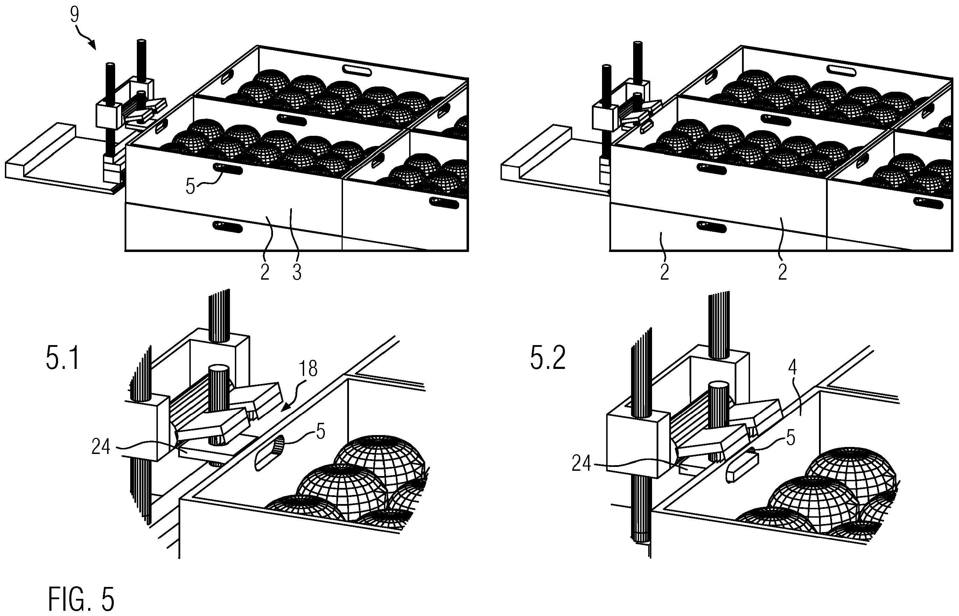

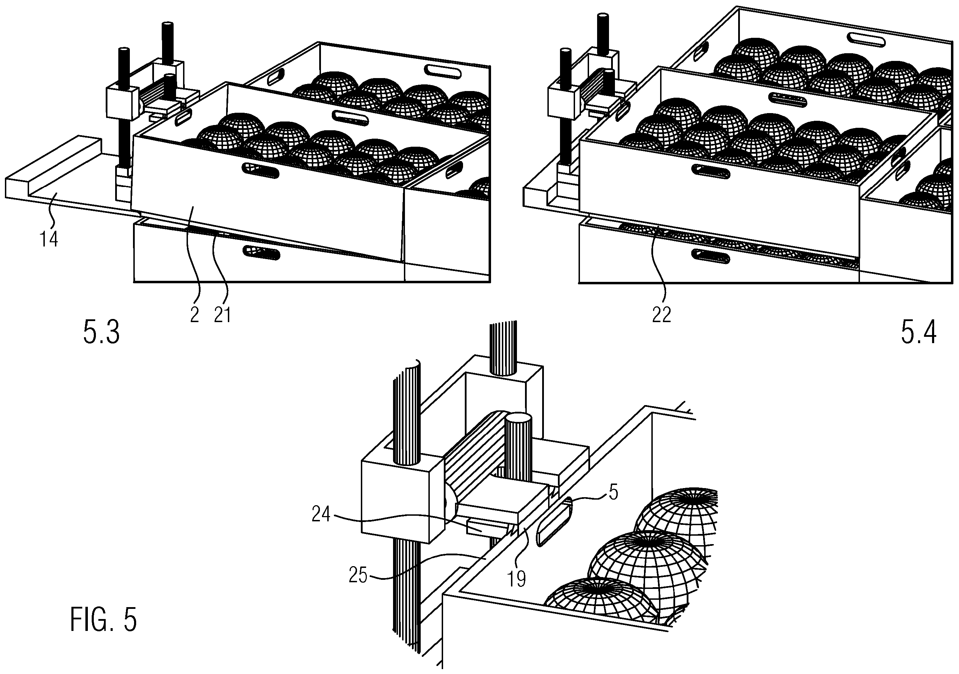

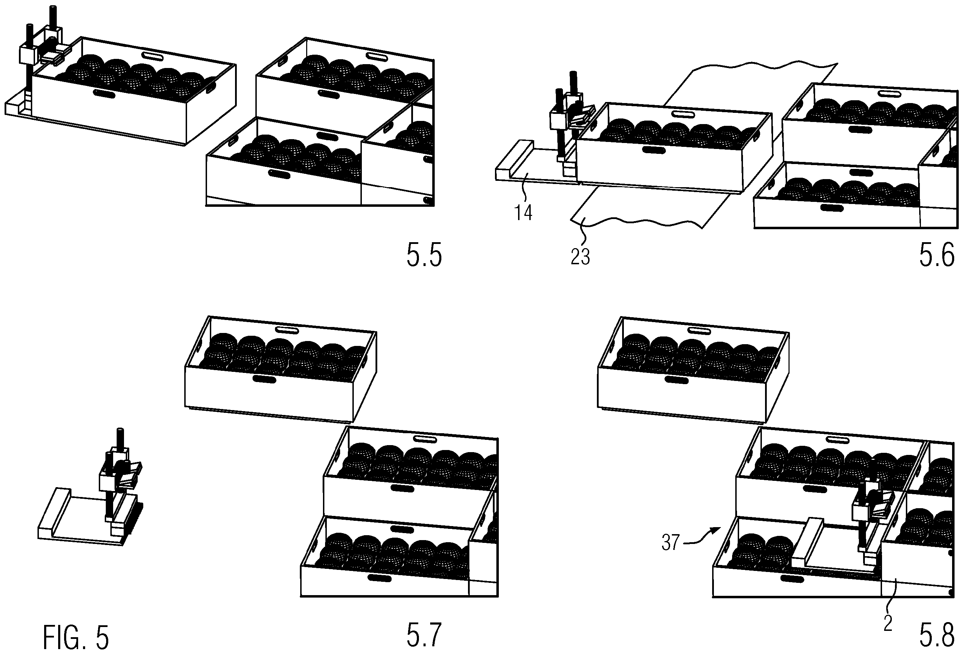

Fig. 5 der Zeichnung zeigt in mehreren Darstellungen den Vorgang des Depalettierens von Mehrweggebinden 2, welche jeweils Querseitenwände 4 mit Handgriffausnehmungen 5 aufweisen. Wie es anhand der Darstellungen der Fig. 5 ersichtlich ist, besitzen die Mehrweggebinden 2 auch an den Längsseitenwänden 3 entsprechende Handgriffausnehmungen 5, sodass mit der erfindungsgemäßen Vorrichtung 9 auch ein Depalettieren der Mehrweggebinde 2 von den Längsseitenwänden 3 aus möglich ist.

Wie es anhand der Darstellung 5.1 ersichtlich ist, wird die Vorrichtung 9 an die Querseitenwand 4 des Gebindes 3 in der oberen Gebindelage heran bewegt und dabei über eine Sensoreinrichtung die Position der Handgriffausnehmung 5 erfasst und die Eingriffseinrichtung 18 mit dem Greiffinger 24 in einer solchen Höhe in Y-Richtung positioniert, dass der Greiffinger 24 über eine translatorische Bewegung in Z-Richtung in die Handgriffausnehmung 5 hinein bewegt werden kann, bis der Greiffinger 24 die Handgriffausnehmung 5 durchsetzt, wie dies anhand der Darstellung 5.2 der Fig. 5 ersichtlich ist.

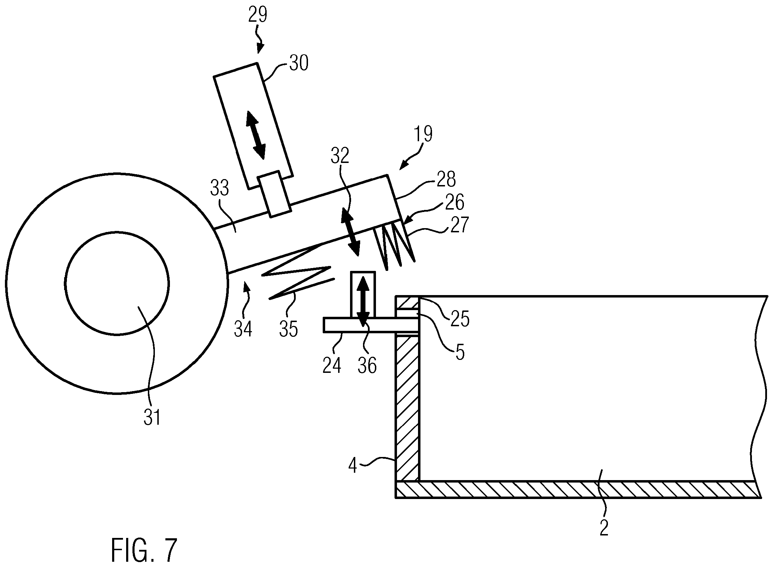

In einem nächsten Schritt wird, wie dies anhand der Darstellung 5.3 der Fig. 5 ersichtlich ist, das Haltemittel 19 auf den oberen Rand 25 der Querseitenwand 4 abgesenkt, bis das anhand von Fig. 7 der Zeichnung ersichtliche elastisch ausgebildete Auflagemittel 26 in der Form einer Gummilippe 27 am oberen Rand 25 aufliegt.

Die Gummilippe 27 kann den Rand 25 von oben her mit einer Haltekraft beaufschlagen, wobei etwaige vorhandene Verformungen des Randbereichs des Rands 25 durch die Elastizität der Gummilippe 27 ausgeglichen werden können.

Wie es anhand von Fig. 7 der Zeichnung weiter ersichtlich ist, wird hierzu das mit der Gummilippe 27 versehene Haltemittel 19 in der Form eines Schwenkhalters 28 über einen Aktuator 29 in der Form eines Pneumatikzylinders 30 in einer Schwenkbewegung an der Schwenkachse 31 auf den Rand 25 des Mehrweggebindes 2 abgesenkt, wie dies anhand des Doppelpfeils 32 ersichtlich ist.

Das Haltemittel 19 der in Fig. 7 dargestellten Vorrichtung 9 besitzt eine Aufnahmeplatte 34 in der Form eines Auslegers 33, an dem am vorderen Randbereich die Gummilippe 27 angeordnet ist und an einer unteren Seite 35 des Auslegers 33 ist eine schematisch dargestellte Federeinrichtung 35 vorgesehen, welche als Anschlagdämpfer und an dem sich in der Handgriffausnehmung 5 befindlichen Greiffinger 24 von oben her sanft zur Auflage kommen kann, sodass der Rand 25 zwischen dem in Y-Richtung zum Anheben des Gebindes 2 bewegbaren Gebinde, wie dies anhand des Doppelpfeils 36 ersichtlich ist, und der Gummilippe 27 geklemmt werden kann, ohne dass auf die Querseitenwand 4 eine Druckkraft ausgeübt wird, und somit auch keine Beschädigung der im Gebinde 2 befindlichen Obst- und Gemüseprodukte stattfinden kann.

Die Darstellung 5.3 zeigt, dass in den durch das Anheben des Gebindes 2 relativ zu dem darunter angeordneten Gebinde 2 ein Zwischenraum 21 ausgebildet wird, in den die Trageplatte oder Unterfahrplatte 14 bewegt werden kann, bis diese die in der Darstellung 5.4 ersichtliche Lage relativ zur Unterseite 22 des Gebindes einnimmt und das Gebinde so vollständig von dem darunter befindlichen weiteren Gebinde abgehoben ist.

In einem nächsten Schritt kann das sich auf der Trageplatte 14 befindliche Gebinde durch eine Verlagerungsbewegung der das Gebinde tragenden Vorrichtung 9 vom Gebindestapel separiert werden, wie dies anhand der Darstellung 5.5 der Fig. 5 ersichtlich ist und sodann die Trageplatte 14 durch eine entsprechende Verlagerungsbewegung gemäß der Darstellung 5.6 nach links von der Unterseite 22 des Gebindes 2 weggezogen werden, sodass das Gebinde 2 an dem Förderband 23 zur Auflage kommt und von diesem zur weiteren Handhabung befördert wird, wie dies anhand der Darstellung 5.7 der Fig. 5 der Zeichnung ersichtlich ist.

Die Darstellung 5.8 der Fig. 5 schließlich zeigt, dass nun eine nächste Depalettierung stattfinden kann und zwar hinsichtlich des zum soeben depalettierten Gebinde 2 benachbarten Gebinde 2, wozu die Vorrichtung den durch das Depalettieren des soeben depalettierten Gebindes 2 freigewordenen Raum 37 nutzt und in Z-Richtung bis zur Erfassung der Handgriffausnehmung 5 des benachbarten Gebindes 2 verfahren werden kann.

Fig. 6 der Zeichnung zeigt eine schematisch dargestellte Klappbox 8 mit darin befindlichen Obst- und Gemüseprodukten und einer sich in Klemmstellung mit dem oberen Rand 25 und der Handgriffausnehmung 5 befindlichen Vorrichtung 9 nach der vorliegenden Erfindung. Da die Querseitenwände 4 der Klappbox 8 einklappbar ausgebildet sind, ist es von wesentlicher Bedeutung, dass diese Querseitenwände 4 nicht mit einer Druckkraft beaufschlagt werden, wie dies bei der eingangs erläuterten bekannten Vorrichtung der Fall ist, sodass die Gebindeart Klappbox von der bekannten Vorrichtung nicht gehandhabt werden kann. Im Gegensatz hierzu kann mit der erfindungsgemäßen System auch die zum Transport von Obst- und Gemüseprodukten üblicherweise verwendete Klappbox mit der hier beschriebenen Depalettieranordnung und nach dem hier beschriebenen Verfahren depalettiert werden.

Die Erfindung zeichnet sich dadurch aus, dass mit dem erfindungsgemäßen System und nach dem erfindungsgemäßen Verfahren alle bekannten Gebindetypen automatisch depalettiert und ohne laufende Änderungen an der Depalettieranordnung des Systems einschließlich der Palettierung weiter verarbeitet werden können, welche zum Transport von Obst- und Gemüseprodukten in Verteilerzentren und zum Weitertransport zum Verkauf an den Abnehmer der Obst- und Gemüseprodukten Verwendung finden.

Da diese Gebinde, je nachdem mit welchen Produkt sie befüllt sind, eine Eigenmasse von bis zu 20 kg aufweist können, sorgen das erfindungsgemäße System und das erfindungsgemäße Verfahren für eine wesentliche Erleichterung bei der Depalettierung der Gebinde und für ein schnelles Umsetzen und sehr kurze Verweilzeiten in den Verteilerzentren.

Dadurch, dass die Seitenwände der Gebinde durch die Depalettieranordnung nicht mit einer in Richtung zum Innenraum des Gebindes gerichteten Klemmkraft oder Seitenkraft beaufschlagt werden, ist auch die Gefahr einer Beschädigung der empfindlichen Obst- und Gemüseprodukte beim Depalettieren beseitigt. Ebenso ist die Gefahr eines Aufreissens oder Eindrückens der Seitenwände des Gebindes beseitigt. Die jeweilige Lage der Handgriffausnehmungen des Gebindes können über eine Sensoreinrichtung exakt erfasst werden und der Greiffinger somit exakt in der Handgriffausnehmung positioniert werden.

Über das Anheben des Greiffingers mit dem auf dem oberen Rand des Gebindes aufliegenden Haltemittel kann das Gebinde ohne Seitenkraftbeaufschlagung der Gebindewände geklemmt werden und wird über die Unterfahrplatte von der Unterseite her abgestützt. In ähnlicher Weise werden Einweggebinde über die Unterfahrplatte von der Unterseite her abgestützt, sodass an den Gebinden vorhandene Zentrierlaschen oder Zentrierecken nicht beschädigt werden. Solche Einweggebinde werden durch die von der Saugeinrichtung aufgebrachten Saugkraft angehoben, indem die Saugeinrichtung zusammen mit dem Gebinde einseitig angehoben werden kann, bis die Trageplatte oder Unterfahrplatte in den Zwischenraum eingeführt wird und somit das Gebinde auf der Trageplatte oder Unterfahrplatte aufliegt. Durch das Lösen der Saugkraft und der Herausbewegung der Trageplatte oder Unterfahrplatte kann das Gebinde dann auf dem Wegfuhrband abgesetzt werden und ein etwaiger kurzer Blasimpuls kann eventuelle Verunreinigungen von der Saugeinrichtung entfernen.

Die auf diese Weise depalettierten Gebinde, seien dies Einweggebinde oder Mehrweggebinde oder auch Klappboxen mit den darin befindlichen Obst- und Gemüseprodukten werden zu einem Wegfuhrband oder einer Fördereinrichtung bewegt und auf diesem oder dieser abgesetzt, um zur weiteren Verteilung im Verteilerzentrum transportiert werden zu können.

Mit der Saugeinrichtung oder dem Greiffinger müssen die jeweiligen Gebinde nur um etwa 25 mm in Y Richtung angehoben werden und der sich somit einstellende Zwischenraum ist ausreichend, um die Unterfahrplatte oder Trageplatte in den Zwischenraum zur Abstützung des zu depalettierenden Gebindes von unten her einzuführen.

Die Unterfahrplatte wird über den Schwerpunkt des Gebindes hinaus in Z-Richtung bewegt und auf diese Weise wird das Gebinde einerseits von unten her abgestützt und andererseits ein unbeabsichtigtes Lösen des Gebindes von der Unterfahrplatte während des Transports zum Wegfuhrband beseitigt.

Obwohl vorstehend von Stückgutgebinden gesprochen wurde, welche mit verderblichen Waren, wie insbesondere Obst- und Gemüseprodukten befüllt sind, ist dies nicht als Beschränkung auszulegen, da mit dem erfindungsgemäßen System und dem erfindungsgemäßen Verfahren auch leere Stückgutgebinde depalettiert werden können, genauso wie auch Stückgutgebinde, die mit anderen Waren befüllt sind, wie beispielsweise Drogerieartikel oder Körperpflegeprodukte oder Waren aller anderer Art, wie beispielsweise Fleisch- oder Milchprodukte.

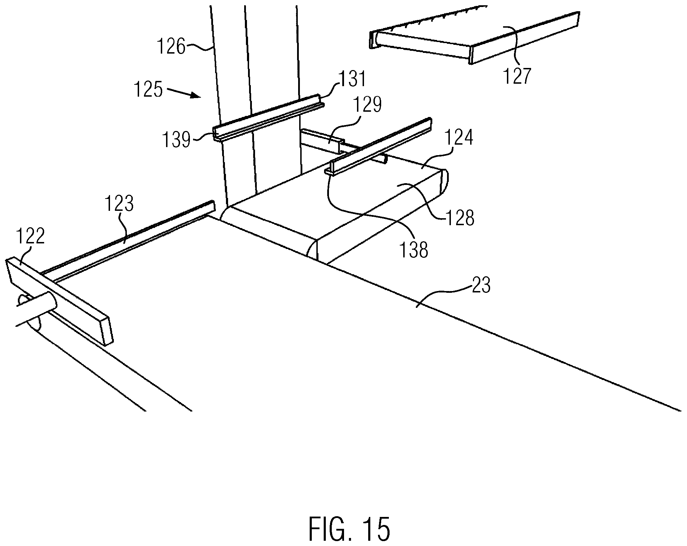

Das mittels der Depalettieranordnung 38 depalettierte Gebinde, bei dem es sich um ein Einweggebinde 6, ein Mehrweggebinde 2, eine Klappbox 8 oder auch einen anderen Gebindetypen handeln kann, wird auf dem Förderband 23 abgesetzt und von diesem auch in Fig. 15 der Zeichnung ersichtlichen Förderband 23 bis zu einem am Ende der Förderstrecke angeordneten Pusher 122 befördert.

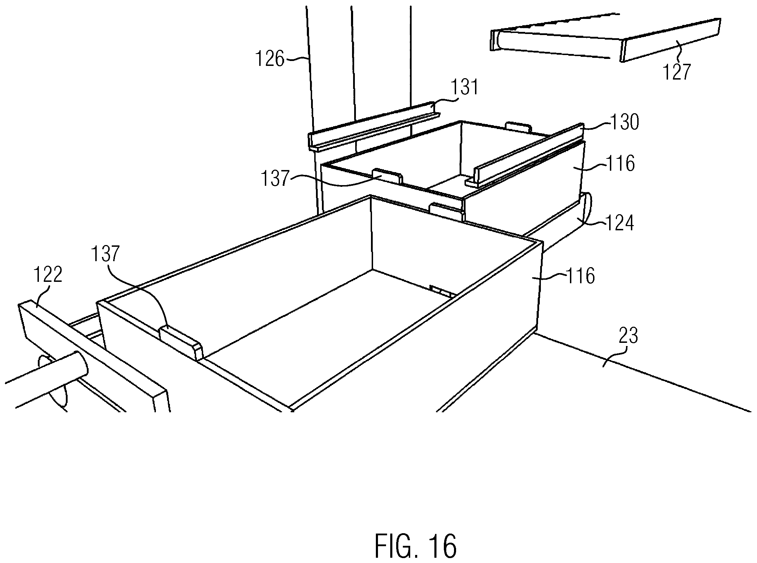

Das so depalettierte Gebinde kommt am Ende der Förderstrecke an einem Widerlager 123 zur Anlage und wird von dem Pusher 122 auf die Hubfördereinrichtung 124 geschoben, wie dies anhand von Fig. 16 der Zeichnung ersichtlich ist, die bereits ein weiteres Stückgutgebinde 116, welches wiederum ein Einweggebinde 6, ein Mehrweggebinde 2, eine Klappbox 8 oder ein Gebinde von einem anderen Gebindetypen sein kann, in Position liegend zeigt.

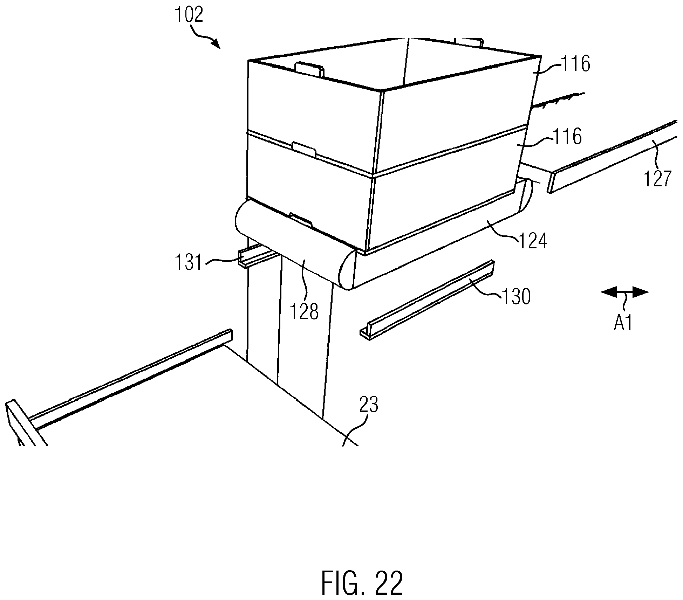

Die Hubfördereinrichtung 124 ist eine Komponente einer automatisierten Stapeleinrichtung 125, die auch als Vorstapler bezeichnet werden kann und die einen Träger 126 umfasst, an dem die Hubfördereinrichtung 124 entlang der Längserstreckung des Trägers 126 in Hochachsrichtung bewegbar angeordnet ist, um von der Stapeleinrichtung 125 zu einem Stückgutgebindestapel 102 gebildet auf eine höhere Ebene befördert werden zu können, um von der Hubfördereinrichtung 124 dann auf eine Fördereinrichtung 127 abgegeben zu werden, die beispielsweise in Fig. 15 und Fig. 22 der Zeichnung ersichtlich ist.

Die Hubfördereinrichtung 124 umfasst ein Förderband 128 und die Stapeleinrichtung 125 umfasst einen Zentrierwinkel 129, an dem das vom Pusher 122 auf das Förderband 128 geschobene Gebinde zur Anlage kommt und damit zentriert ausgerichtet wird und eine erste Zentrierleiste 130 sowie eine zweite Zentrierleiste 131, welche zusammen mit dem Zentriermittel 129 Komponenten der am Träger 126 höhenverstellbar und in der Ebene der ersten 130 und zweiten 131 Zentrierleiste verstellbar angeordnet ausgebildeten Halte- und Ausrichteinrichtung 132 sind.

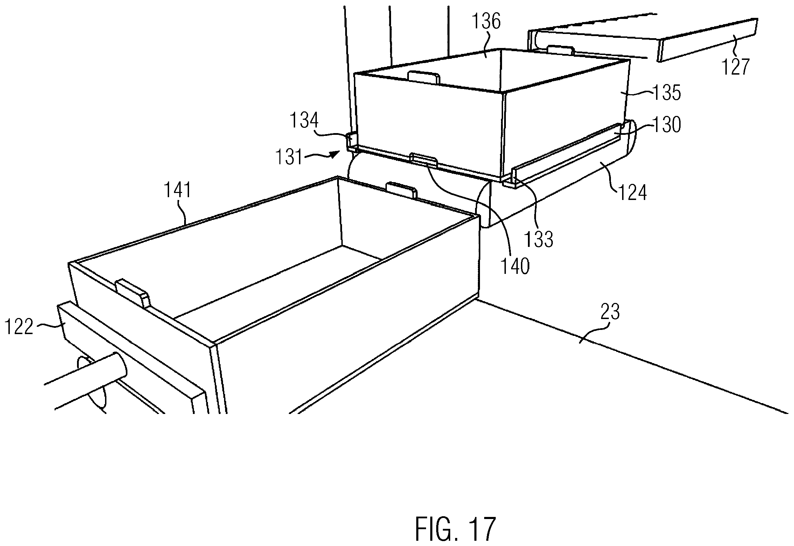

Fig. 16 der Zeichnung zeigt, dass das Stückgutgebinde 116 bereits auf das Förderband 128 geschoben wurde und zwar mittels des Pushers 122. die beiden Zentrierleiste 130 und 131 werden in Richtung des Doppelpfeiles A1 auseinander bewegt, sodass der lichte Abstand zwischen den beiden Zentrierleisten 130,131 ausreichend ist, dass die Hubfördereinrichtung 124 am Träger 126 angehoben werden kann und zwar zusammen mit dem Stückgutgebinde 116, wie dies anhand von Fig. 17. Zeichnung ersichtlich ist.

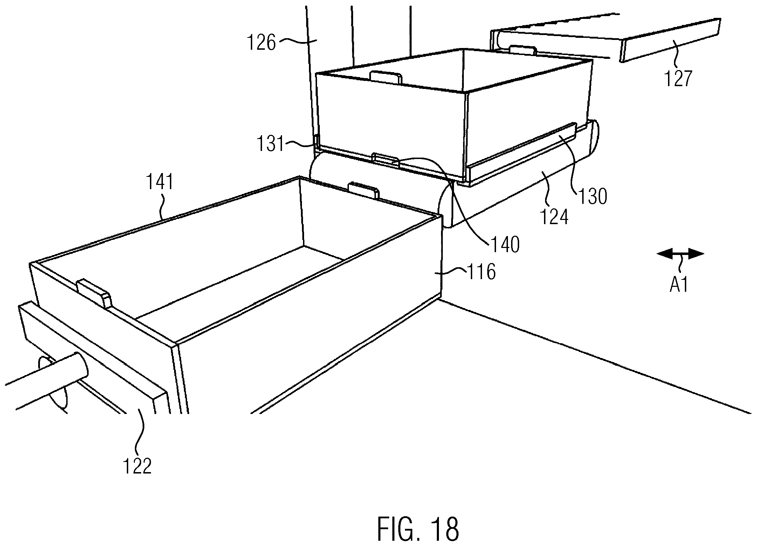

Fig. 18 der Zeichnung zeigt, dass die beiden Zentrierleisten 130, 131 dann in Richtung des Doppelpfeils A1 zur Verringerung des lichten Abstands zwischen den beiden Zentrierleisten 130, 131 bewegt werden, sodass die Innenkanten 133 und 134 der Zentrierleisten 130, 131 an den Seitenwänden 135, 136 zur Anlage kommen und dabei das Stückgutgebinde 116 auf dem Förderband 128 der Hubfördereinrichtung 124 exakt zentriert ausrichten, wie dies anhand von Fig. 18 der Zeichnung ersichtlich ist, wobei das Stückgutgebinde 116 zusätzlich an dem Zentriermittel 129 anliegt.

Fig. 18 der Zeichnung zeigt, dass das Stückgutgebinde 116 somit exakt zentriert vorliegt und insbesondere die Stapelnasen oder Zentrierlaschen 137 des Stückgutgebindes 116 auf dem Förderband 128 exakt ausgerichtet vorliegt.

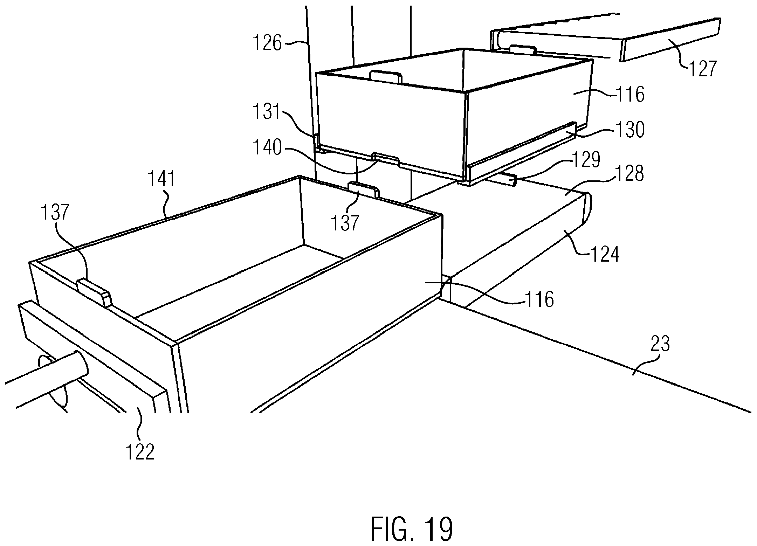

Fig. 19 der Zeichnung zeigt, dass das Gebinde 116 von der ersten Zentrierleiste 130 und der zweiten Zentrierleiste 131 auch gehaltert werden kann und zwar so, dass das Gebinde 116 auf der Halteleiste 138 der Zentrierleiste 130 und der Halteleiste 139 der Zentrierleiste 131 aufliegt und somit die Hubfördereinrichtung 124 mit dem Förderband 128 abgesenkt werden kann und zwar auf eine solche Höhe, dass das nächste Gebinde 116 von dem Pusher 122 auf das Förderband 128 geschoben werden kann, bis es an dem Zentrierwinkel 129 zur Anlage kommt und dabei schon ausgerichtet wird.

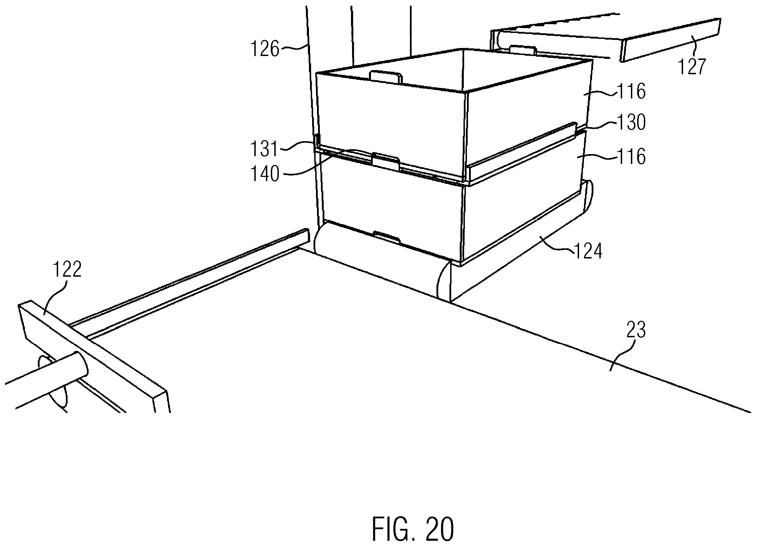

Fig. 20 der Zeichnung zeigt, dass sodann das obere Gebinde 116 auf das untere Gebinde 116 mittels einer Bewegung der beiden Zentrierleisten 130, 131 in Hochachsrichtung des Trägers 126 abgesenkt werden kann und zwar so, dass die Zentrierlaschen 137 an beiden Stirnseiten des unteren Gebindes 116 in Zentrierausnehmungen 140, die an beiden Stirnseiten des oberen Gebindes 116 im Bereich des Auflagebereichs oder des Bodens des Gebindes 116 vorgesehen sind, zum Eingriff kommen, wie dies anhand von Fig. 20 der Zeichnung ohne weiteres ersichtlich ist.

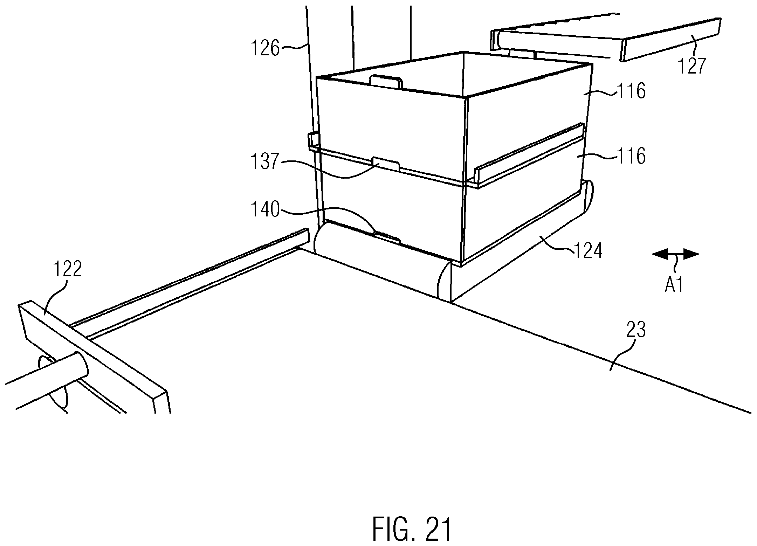

Sodann wird der lichte Abstand zwischen den beiden Zentrierleisten 130, 131 vergrößert, wie dies anhand von Fig. 21 der Zeichnung ersichtlich ist und die Zentrierlaschen 137 kommen in den Zentrierausnehmungen 140 vollständig zum Eingriff, wie dies anhand von Fig. 21 der Zeichnung ersichtlich ist.

In einem nächsten Schritt, wird, wie dies anhand von Fig. 22 der Zeichnung ersichtlich ist, der lichte Abstand zwischen den beiden Zentrierleisten 130, 131 weiter erhöht und die Hubfördereinrichtung 124 kann mit den beiden darauf angeordneten Stückgutgebinden 116, die somit zu einem Stückgutgebindestapel 102 vereint worden sind, bis in die Abgabehöhe der Fördereinrichtung 127 befördern. Dann kann der Stückgutgebindestapel 102 über das Förderband 128 auf die Fördereinrichtung 127 befördert werden und von dieser kann dann der Stückgutgebindestapel 102 weiter befördert werden. Auf diese Weise können Stückgutgebinde 116 zu die Stückgutgebindestapel 102 vereint werden, wobei der Stückgutgebindestapel auch mehr als zwei übereinandergestapelte Stückgutgebinde 116 aufweisen kann, also beispielsweise drei oder vier Stückgutgebinde 116, die auch bei einer weiteren Beförderung des Stückgutgebindestapel 102 auf der Fördereinrichtung 127 nicht der Gefahr unterliegen, dass sie sich voneinander trennen, da die Zentrierlaschen 137 in den Zentrierausnehmungen 140 im Eingriff stehen und somit verhindern, dass sich die Stückgutgebinde 116 voneinander trennen.

Die Stapeleinrichtung 125 zeichnet sich also dadurch aus, dass sie einen Träger 126 umfasst, an dem die Hubfördereinrichtung 124 angeordnet ist, die das durch die Depalettieranordnung 38 getrennte Stückgutgebinde 116 aufnehmen kann. Über die Hubfördereinrichtung 124 kann das Stückgutgebinde in eine Höhe angehoben werden, welche ausreichend ist, dass unter das getrennte Stückgutgebinde 116 ein weiteres getrenntes Stückgutgebinde 116 platziert werden kann.

Das am Träger 126 angehobene Stückgutgebinde 116 wird somit mittels der am Träger 126 bewegbar angeordneten Halte- und Ausrichteinrichtung 132, welche den Zentrierwinkel 129 und die erste Zentrierleiste 130 sowie die zweite Zentrierleiste 131 umfasst, lösbar gehalten und ausgerichtet und die Hubfördereinrichtung 124 kann wieder abgesenkt werden und das weitere getrennte Stückgutgebinde 116 aufnehmen. Das lösbar gehaltene Stückgutgebinde 116 wird mittels der Halte-und Ausrichteinrichtung 132 in einer zum platzierten, zweiten getrennten Stückgutgebinde 116 ausgerichteten Lage an der Oberseite 141 zur Bildung eines Stückgutgebindestapels 102 abgesenkt und zwar so, dass die Zentrierlaschen 137 des unteren Stückgutgebindes 116 in den Zentrierausnehmungen 140 des oberen Stückgutgebindes 116 zum Eingriff kommen und somit eine feste, aber lösbare Verbindung zwischen den beiden Stückgutgebinden 116 im Verbund des Stückgutgebindestapel 102 hergestellt wird.

Der so gebildete Stückgutgebindestapel 102 kann mittels der Fördereinrichtung 127 problemlos weiter befördert werden konnte ohne dass die Gefahr besteht, dass sich die Stückgutgebinde 116 aus dem Stückgutgebindestapel 102 lösen.

Mittels der Fördereinrichtung 127 kann der Stückgutgebindestapel 102 zu der in Fig. 11 der Zeichnung gezeigten Fördereinrichtung 142 befördert werden, welche dort ersichtliche Stückgutgebinde 116 und/oder Stückgutgebindestapel 102 zu einer Hubeinrichtung oder einem Hublift 143 befördert, mittels dem die Stückgutgebinde 116 und/oder Stückgutgebindestapel 102 angehoben werden können, um auf die in Fig. 10 der Zeichnung ersichtlichen, in unterschiedlichen Höhen angeordneten Fördereinrichtungen 112 befördert werden zu können, von denen die Stückgutgebinde 116 und/oder Stückgutgebindestapel 102 zu den Sequenziervorrichtungen 113 befördert werden können, die beispielsweise anhand von Fig. 10 der Zeichnung ersichtlich sind und die die Sequenzierung der Stückgutgebinde 116 und/oder Stückgutgebindestapel 102 entsprechend den vorbestimmten Reihenfolgen vornehmen, die zur Bildung der Zielpaletten 111 mit den darauf angeordneten Stückgutgebinden 116 und/oder Stückgutgebindestapel 102 erforderlich sind.

Fig. 14 der Zeichnung zeigt die an einem Portal 144 angeordnete Palettiervorrichtung 110 beziehungsweise automatisierte Vorrichtung zur Palettierung 110.

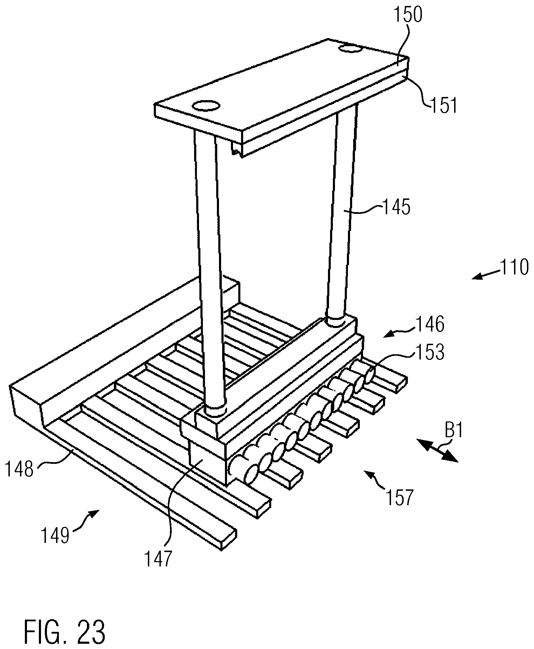

Die näher anhand von Fig. 23 der Zeichnung ersichtliche Palettiervorrichtung 110 weist Träger 145 auf, die an einer Aufnahme 146 angeordnet sind und außerdem besitzt die Palettiervorrichtung 110 eine Halteeinrichtung 147 und ein relativ zur Halteeinrichtung 147 bewegbar vorgesehenes Tragemittel 148, welches bei der dargestellten Ausführungsform in der Form einer gabelförmig ausgebildeten Trageplatte 149 ausgebildet ist.

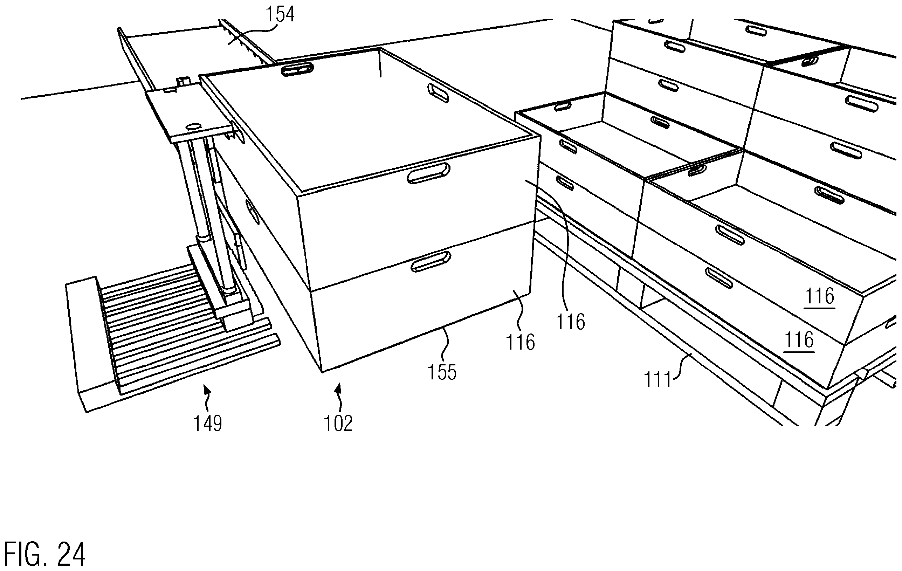

Die Trageplatte 149 ist relativ zur Halteeinrichtung 147 in Richtung des Doppelpfeils B1 bewegbar, wie sich dies anhand der weiteren Figuren 24 bis 32 der Zeichnung ergibt.

Am oberen Bereich der Träger 145 und im vorzugsweise rechten Winkel dazu ist ein Querträger 150 vorgesehen, an dem ein Haltemittel 151 in der Form einer streifenförmig oder leistenförmig ausgebildeten elastomeren Halteleiste 152 vorgesehen, mit deren Hilfe der obere Rand eines Stückgutgebindes 116 oder eines Stückgutgebindestapels 102 lösbar gehaltert werden kann.

An der Halteeinrichtung 147 ist darüber hinaus ein Saugmittel 153 vorgesehen, welches mit einer Seitenwand eines Stückgutgebindes 116 in lösbaren Eingriff gebracht werden kann, um das Stückgutgebinde 116 bei der Bewegung mit und durch die Palettiervorrichtung 110 lösbar halten zu können, wie dies nachfolgend noch näher erläutert werden wird.

Fig. 24 zeigt einen Stückgutgebindestapel 102, welcher zwei Stückgutgebinde 116 aufweist und der mittels der vorstehend erwähnten Stapeleinrichtung 125 bereitgestellt wurde.

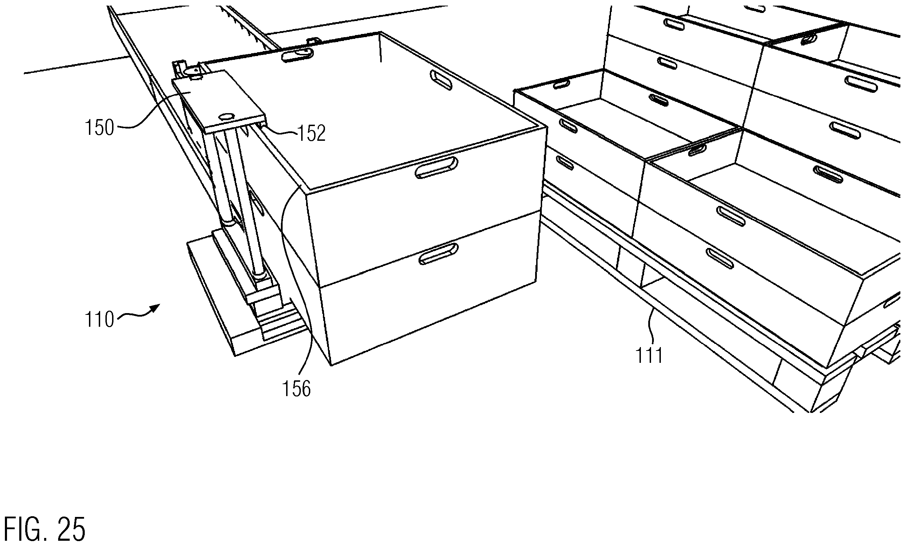

Mittels der ausgangsseitig der Sequenziervorrichtung 113 angeordneten Sequenziereinrichtung 114 ist der Stückgutgebindestapel 102 bereitgestellt worden, wie dies in Fig. 24 anhand des schematisch dargestellten Fördermittels 154 dargestellt ist. Die Palettiervorrichtung 110 ist an dem Stückgutgebindestapel 102 derart angeordnet, dass die Trageplatte 149 unter den unteren Auflagebereich 155 des Stückgutgebindestapels 102 geschoben werden kann, wie dies anhand von Fig. 25 der Zeichnung ersichtlich ist. In ähnlicher Weise kann die obere Halteleiste 152 der Palettiervorrichtungen oder Palettieranordnungen 110 auf den oberen Umfangsrand 156 des oberen Stückgutgebindes 116 des Stückgutgebindestapels 102 abgesenkt werden, sodass der Stückgutgebindestapel 102 zwischen der Trageplatte 149 und der Halteleiste 152 sicher gehaltert ist, wie dies anhand von Fig. 25 der Zeichnung ersichtlich ist.

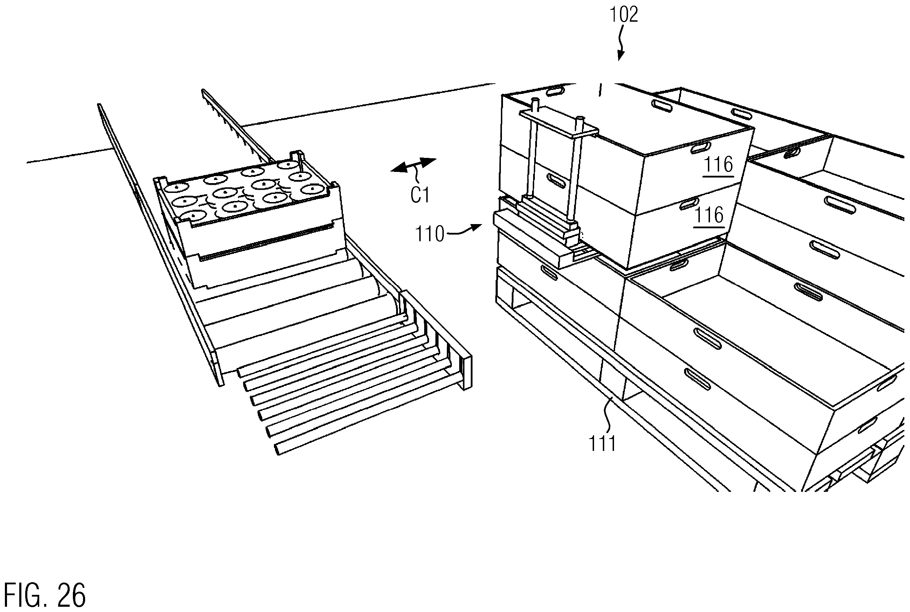

Fig. 24 und 25 der Zeichnung zeigen darüber hinaus eine Zielpalette 111, an der bereits einige Stückgutgebinde 116 mit der Palettiervorrichtung 110 automatisiert angeordnet wurden. Nachdem die Stückgutgebinde 116 beziehungsweise der Stückgutgebindestapel 102 zwischen der Trageplatte 149 und der Halteplatte oder Halteleiste 152 aufgenommen worden sind, kann die Palettiervorrichtung 110 am Portal 144 verfahren werden und zwar so, dass die Palettiervorrichtung 110 mit den beiden Stückgutgebinden 116 an der Oberseite eines bereits auf der Artikelpalette 111 angeordneten Stückgutgebindes 116 angeordnet wird, wie dies anhand von Fig. 26 der Zeichnung ersichtlich ist.

Fig. 26 der Zeichnung macht auch deutlich, dass an der Zielpalette 111 in Verfahrrichtung C1 der Palettiervorrichtung 110 hinteren halbseitigen Seite der Zielpalette 111 bereits Stückgutgebinde 116 von der Palettiervorrichtung 110 abgelegt worden sind, sodass ohne weiteres ersichtlich ist, dass mit der Palettiervorrichtung 110 der ganze von der Zielpalette 111 bereitgestellte Aufnahmeraum für Stückgutgebinde bedient werden kann.

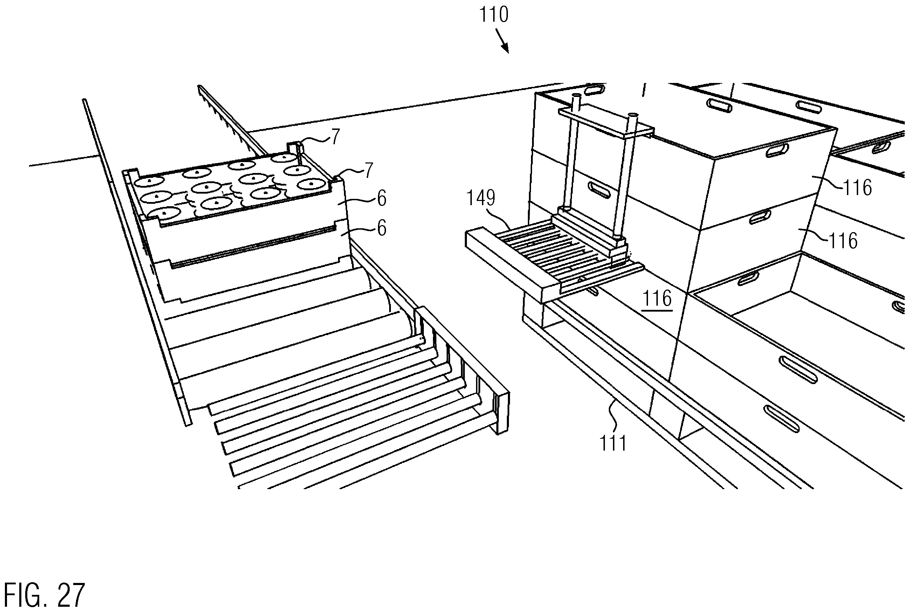

Wie dies anhand von Fig. 27 der Zeichnung ersichtlich ist, wird zur Ablage der Stückgutgebinde 116 an der Oberseite eines bereits palettierten, also an der Zielpalette 111 angeordneten Stückgutgebindes 116 die Trageplatte 149 der Palettiervorrichtung 110 unter dem Auflagebereich 155 des Stückgutgebindes 116 beziehungsweise Stückgutgebindestapels 102 herausgezogen und somit befindet sich der Stückgutgebindestapel 102 mit den beiden Stückgutgebinden 116 auf dem auf der Zielpalette 111 bereits angeordneten Stückgutgebinde 116 angeordnet und zwar an der Oberseite, sodass auf der Zielpalette 111 ein höherer Stückgutgebindestapel 102 entstanden ist.

Fig. 27 der Zeichnung zeigt auch, dass während des Palettiervorgangs mittels des Fördermittels 154 bereits ein nächster Stückgutgebindestapel 102 heran transportiert wurde, der zwei Stückgutgebinde 116 mit Einweggebinden 6 mit Stapelnasen 7 aufweist, wobei auch dieser Stückgutgebindestapel 102 mit den Einweggebinden 6 von der Stapeleinrichtung 125 bereitgestellt wurde, wie dies vorstehend erläutert wurde.

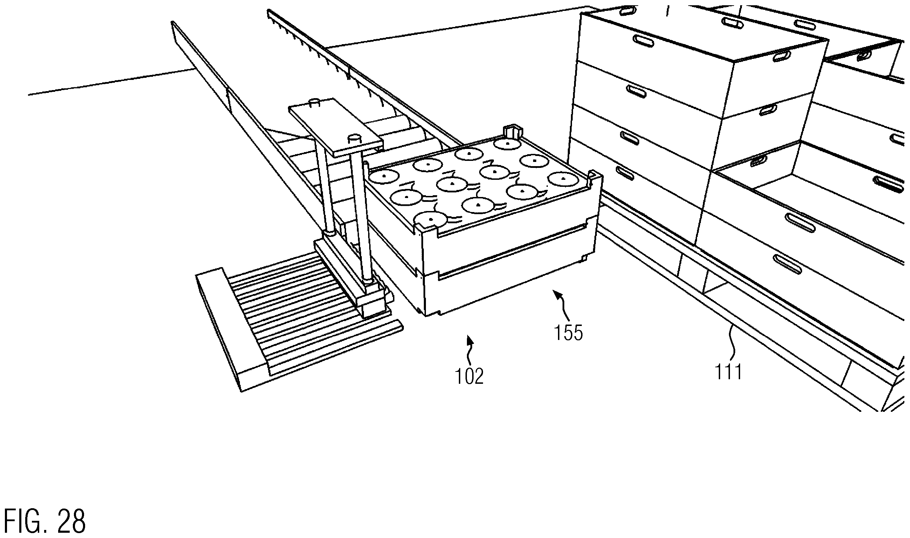

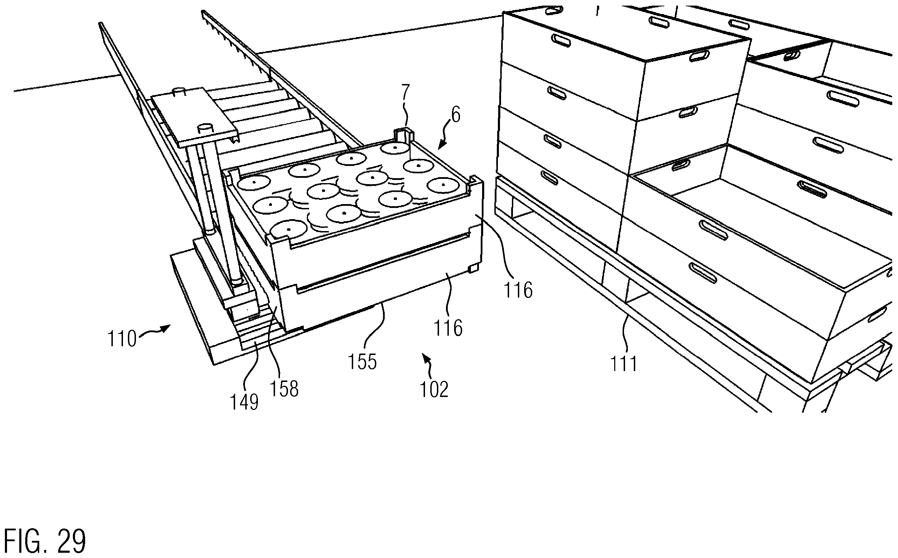

Die am Portal 144 in Richtung des Doppelpfeils C1 bewegbare Palettiervorrichtung 110 wurde, wie dies Fig. 28 der Zeichnung zeigt, in die Ausgangsstellung zum Stückgutgebindestapel 102 bewegt. Die Trageplatte 149 befindet sich noch nicht unterhalb des Auflagebereichs 155 des Stückgutgebindestapel 102 angeordnet und in einem nächsten Schritt wird dann, wie dies anhand von Fig. 29 Zeichnung ersichtlich ist, die Trageplatte 149 unter den Auflagebereich 155 des Stückgutgebindestapels 102 geschoben und dabei kommen auch die Saugmittel 153 in der Form einer Saugmittelleiste 157 mit einer Seitenwand 158 des unteren Stückgutgebindes 116 des Stückgutgebindestapel 102 nach Fig. 29 in Kontakt und durch die Aktivierung der Saugmittelleiste 157 wird dafür gesorgt, dass die Seitenwand 158 des Stückgutgebindes 116 und damit der gesamte Stückgutgebindestapel 102 von der Palettiervorrichtung 110 sicher gehaltert wird.

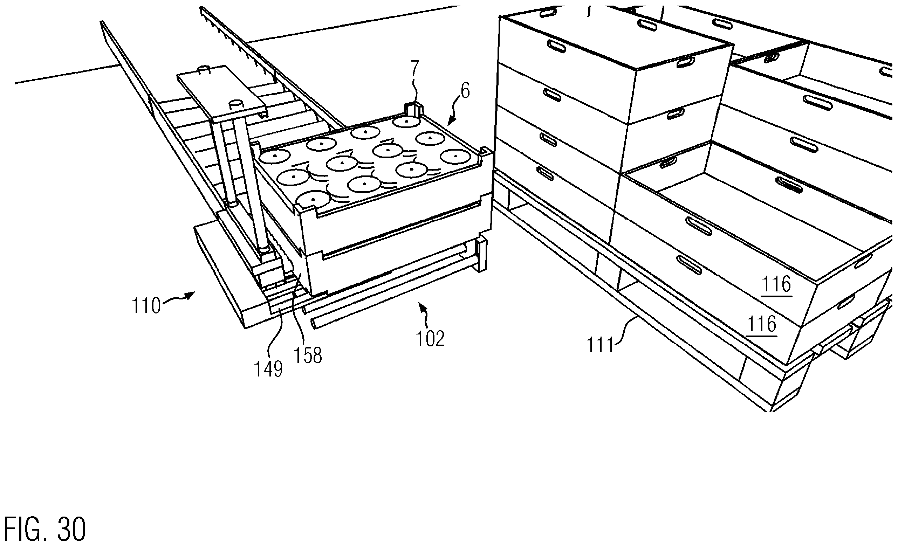

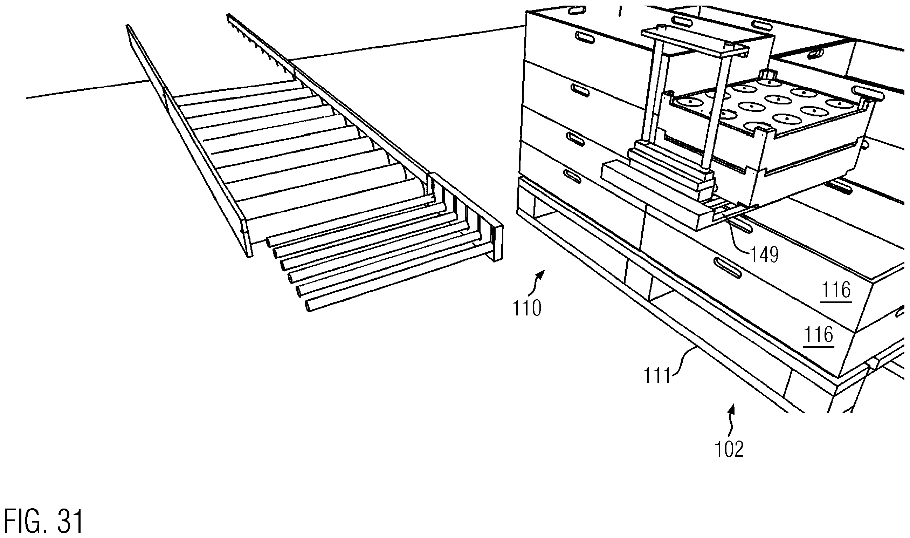

Der Querträger 150 wird bei den Stückgutgebinden mit den Stapelnasen 7 nicht abgesenkt, da die Kraftbeaufschlagung der Seitenwand 158 mit Unterdruck aufgrund der Aktivierung der Saugmittelleiste 157 ausreichend dafür ist, den Stückgutgebindestapel 102, der sich darüber hinaus auf der Trageplatte 149 abgestützt befindet, sicher zu halten, sodass die Bewegung des Portals 144 und/oder der daran angeordneten Palettiervorrichtung 110 zusammen mit dem Stückgutgebindestapel 102 zu dessen Ablage an der Oberseite des auf der Zielpalette 111 bereits angeordneten, wie dies anhand von Fig. 30 und 31 der Zeichnung der Fall ist, problemlos möglich ist und der Stückgutgebindestapel 102 sicher von der Palettiervorrichtung 110 an der Oberseite des bereits platzierten beziehungsweise palettierten Stückgutgebindes 116 möglich ist.

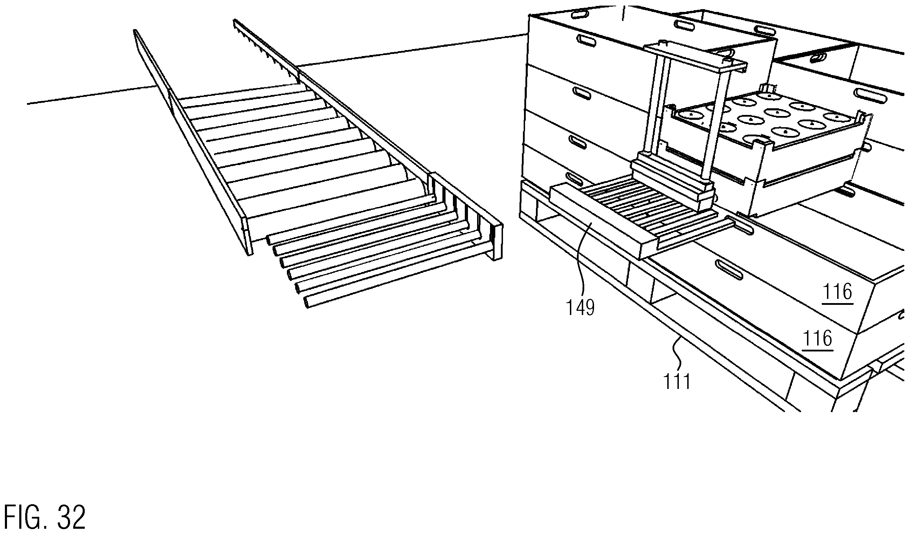

Fig. 31 der Zeichnung zeigt darüber hinaus, dass Stückgutgebinde unterschiedlicher Größe und Lageorientierung mittels der Palettiervorrichtung 110 automatisiert auf der Zielpalette oder Filialpalette 111 abgelegt werden können. Fig. 31 der Zeichnung zeigt dabei die Palettiervorrichtung 110 mit den beiden Einweggebinden 6 an der Oberseite des Stückgutgebindes 116 und Fig. 32 der Zeichnung zeigt, dass sodann die Trageplatte 149 der Palettieranordnungen 110 aus dem Auflageeingriff mit dem Auflagebereich 155 des unteren Einweggebindes 6 herausgezogen wird und somit das Einweggebinde 6 beziehungsweise der Stapel 102 aus den beiden Einweggebinden 6 sicher an der Oberseite des bereits palettierten Stückgutgebindes 116 abgelegt werden kann, wie dies auch noch anhand von Fig. 32 der Zeichnung ersichtlich ist.

Der vorstehend bereits erwähnte Vorstapler kann auch als automatisierte Stapeleinrichtung 115 benannt werden und umfasst einen Träger 126 und eine daran bewegbar angeordnete Hubfördereinrichtung 124, welche ein Förderband 128 umfasst, auf das das Stückgutgebinde 116 mittels eines Pushers 122 befördert werden kann.

Die Stapeleinrichtung 125 ist mit einem Zentrierwinkel 129 versehen, der gleichzeitig die Funktion einer Ausrichtleiste übernimmt und der Zentrierwinkel kann zwei Bestandteile aufweisen, nämlich eine hülsenförmige Aufnahme, welche innen hohl ausgebildet ist und einen in der Aufnahme verschiebbar angeordneten leistenförmigen Körper aufweist, der aus der Aufnahme herausbewegt werden kann, um als Anschlagleiste oder Ausrichtleiste zu dienen, um das Stückgutgebinde einerseits auf dem Förderband 128 zu halten und andererseits in einem rechten Winkel zum Träger 126 auszurichten und andererseits in die Aufnahme zurückgezogen werden kann, damit ein Stückgutgebinde oder ein Stückgutgebindestapel von Förderband 128 auf eine Fördereinrichtung 127 befördert werden kann.

Der Vorstapler oder Stapeleinrichtung weist auch die vorstehend bereits erwähnten ersten und zweiten Zentrierleisten 130, 131 auf, mittels deren das Stückgutgebinde hinsichtlich seiner vorbestimmten Lage ausgerichtet werden kann und zwar so, dass am Stückgutgebinde vorgesehene Zentrierlaschen in Zentrierausnehmungen eines anderen Stückgutgebindes in einen lösbaren Eingriff gebracht werden, sodass eine zentrierte Ausrichtung der Stückgutgebinde zueinander erreicht werden kann und diese zentrierte Ausrichtung auch noch aufrechterhalten ist bei der Handhabung des Stückgutgebindes durch die Palettiervorrichtung 110.

Die Halte- und Ausrichteinrichtung 132 umfasst die bereits erwähnten ersten und zweiten Zentrierleisten 130, 131 und den ebenfalls bereits erwähnten Zentrierwinkel 129 mit der in Fig. 15 der Zeichnung rechteckförmig ausgebildeten Aufnahme und dem in Fig. 15 der Zeichnung als leistenförmige Erstreckung des Zentrierwinkels 129 innerhalb der Aufnahme ausgebildeten leistenförmigen Körper, welche in Fig. 15. Zeichnung von der ersten Zentrierleiste 130 teilweise überdeckt oder abgedeckt dargestellt ist.

An der Zentrierleiste 130 ist eine Innenkante 133 vorgesehen, welche mit einer Seitenkante oder Seitenwand des Stückgutgebindes in einen lösbaren Eingriff gebracht werden kann und die Seitenwand und damit das Stückgutgebinde ausgerichtet werden kann und in ähnlicher Weise weist auch die Zentrierleiste 131 eine Innenkante 134 auf, welche mit einer Seitenwand des Stückgutgebindes in einen lösbaren Eingriff gebracht werden kann und damit die Seitenwand und somit das Stückgutgebinde ausgerichtet werden kann. Damit kann die vorstehend bereits erwähnte Ausrichtung des Stückgutgebindes relativ zu den am Förderband 128 dann darunter ausgerichtet positionierten Stückgutgebindes erreicht werden und das obere Stückgutgebinde auf das untere Stückgutgebinde abgesenkt werden, sodass die Zentrierlaschen des unteren Stückgutgebindes mit den Zentrierausnehmungen des oberen Stückgutgebindes in einen lösbaren Eingriff kommen und so für eine zentrierte Ausrichtung der Stückgutgebinde des Stückgutgebindestapels gesorgt wird.

Die vorstehend bereits erwähnte Palettiervorrichtung 110 umfasst ein Tragemittel 148 in der Form beispielsweise der in Fig. 23 der Zeichnung dargestellten gabelförmig ausgebildeten Trageplatte 149, welche zur Aufnahme der zu palettierenden Stückgutgebinde oder der zu palettierenden Stückgutgebindestapel vorgesehen ist.

Die Palettiervorrichtung umfasst eine Aufnahme 146 und eine Halteeinrichtung 147 und einen Querträger 150 und daran angeordnete Haltemittel 151 in der Form beispielsweise der Halteleiste 152. Der Querträger 150 mit dem Haltemittel 151 beziehungsweise der Halteleiste 152 kann an dem Träger 145 in Hochachsrichtung abgesenkt werden und angehoben werden, sodass die Halteleiste 152 beziehungsweise die Haltemittel 151 auf die Oberkante beziehungsweise den Umfangsrand 156 eines Stückgutgebindes 116 oder eines Stückgutgebindes eines Stückgutgebindestapels abgesenkt werden kann somit das Stückgutgebinde 116 beziehungsweise der Stückgutgebindestapel 102 zwischen der Trageplatte 149 oder den Tragemittel 148 und dem Querträger 150 oder dem Haltemittel 151 oder der Halteleiste 152 sicher gehaltert wird. Damit kann die Palettiervorrichtung 110 Stückgutgebinde oder den Stückgutgebindestapel sicher halten und in der vorbestimmten Weise sicher auf der Zielpalette 111 anordnen beziehungsweise auf einem dort bereits angeordneten Stückgutgebinde oder Stückgutgebinden oder einem Stückgutgebindestapel anordnen.

Hinsichtlich vorstehend im Einzelnen nicht näher erläuterter Merkmale der Erfindung wird in übrigen ausdrücklich auf die Patentansprüche und die Zeichnung verwiesen.

### Bezugszeichenliste

1. Palette
2. Mehrweggebinde
3. Längsseitenwand
4. Querseitenwand
5. Handgriffausnehmung
6. Einweggebinde
7. Stapelnase
8. Klappbox
9. Vorrichtung
10. Portalrobotersystem
11. Halteeinrichtung
12. Saugeinrichtung
13. Saugmittel
14. Trageplatte, Unterfahrplatte
15. Aufnahme
16. Träger
17. Querträger
18. Eingriffseinrichtung
19. Haltemittel
20. Seitenwand
21. Zwischenraum
22. Unterseite
23. Förderband
24. Greiffinger
25. Rand
26. Auflagemittel
27. Gummilippe
28. Schwenkhalter
29. Aktuator
30. Pneumatikzylinder
31. Schwenkachse
32. Doppelpfeil
33. Ausleger
34. Aufnahmeplatte
35. Federeinrichtung
36. Doppelpfeil
37. Raum
38. Depalettieranordnung
39. Portal, Tragstruktur
40. Manipulator
41. Drehaufnahme, Drehkopf
42. Regalreihe
43. Regalreihe
44. Palettenstapel
45. Lagergasse
46. Träger
47. Tragarm
48. erste Reihe
49. zweite Reihe

100. Verteilerzentrum
101. System
102. Stückgutgebindestapel
103. Mattenkette
104. Eingangsbereich
105. Gabelstapler
106. Hochregallager, Palettenlager
107. Artikelpalette
108. Ebene
109. Kommisionierbereichs
110. Palettiervorrichtung
111. Zielpalette
112. Fördereinrichtung
113. Sequenziervorrichtung
114. Sequenziereinrichtung
115. Sequenzierbahnen
116. Stückgutgebinde
117. Träger
118. Stapel
119. Klappbehälter
119a Klappbehälter
120. Fördereinrichtung
121. obere Lage, Zwischenlage
122. Pusher
123. Widerlager
124. Hubfördereinrichtung
125. Stapeleinrichtung
126. Träger
127. Fördereinrichtung
128. Förderband
129. Zentrierwinkel
130. erste Zentrierleiste
131. zweite Zentrierleiste
132. Halte- und Ausrichteinrichtung
133. Innenkante
134. Innenkante
135. Seitenwand
136. Seitenwand
137. Zentrierlaschen
138. Halteleiste
139. Halteleiste
140. Zentrierausnehmung
141. Oberseite
142. Fördereinrichtung
143. Hubeinrichtung
144. Portal
145. Träger,
146. Aufnahme
147. Halteeinrichtung
148. Tragemittel
149. Trageplatte
150. Querträger
151. Haltemitteln
152. Halteleiste
153. Saugmittel
154. Fördermittel
155. Auflagebereich
156. Umfangsrand
157. Saugmittelleiste
158. Seitenwand

Pfeil R Drehbewegung
Pfeil Z1 Verfahrbewegung in Z-Richtung
Pfeil Z2 Verfahrbewegung in Z-Richtung
Doppelpfeil A1
Doppelpfeil B1
Doppelpfeil C1

## Patentansprüche

1. Verfahren zur Kommissionierung von auf Artikelpaletten (107) in einem Palettenlager (106) in stapelbaren Stückgutgebinden (116) bereit gestellter Waren, bei dem Waren auf einer Zielpalette (11) in den stapelbaren Stückgutgebinden zusammengeführt werden, und die Stückgutgebinde (116) mit einem von einem Tragemittel (14) einer automatisierten Vorrichtung zur Depalettierung der Stückgutgebinde von einer Unterlage anhebbaren unteren Auflagebereich (155) und einer Seitenwand (158) versehen sind, **gekennzeichnet durch** die Schritte
- Herbeiführen eines lösbaren Eingriffs einer Halteeinrichtung (11) der Vorrichtung (9) zur Depalettierung mit einer Ausnehmung (5) der Seitenwand (158) des Stückgutgebindes (116)
- Anheben des Stückgutgebindes (116) mittels der Halteeinrichtung (11) zur Trennung des Auflagebereichs des Stückgutgebindes (116) zumindest entlang eines Teilbereichs von der Unterlage zur Herbeiführung eines Zwischenraums (21) zwischen dem Auflagebereich (155) und der Unterlage
- Einführen des Tragemittels (14) in den Zwischenraum (21)
- Trennen des angehobenen Stückgutgebindes (116) von der Unterlage mittels des in den Zwischenraum (21) eingeführten Tragemittels (14)
- Übergeben des getrennten Stückgutgebindes (116) von dem Tragemittel (14) an eine Fördereinrichtung (23)
- Transportieren des getrennten Stückgutgebindes (116) mittels der Fördereinrichtung (23) zu einer automatisierten Vorrichtung zur Palettierung (110) des Stückgutgebindes (116) in der Form eines getrennten Stückgutgebindes oder eines mindestens zwei Stückgutgebinde aufweisenden Stückgutgebindestapels (102)
- Positionieren des getrennten Stückgutgebindes (116) und/oder des Stückgutgebindestapels auf der Zielpalette (111) mittels der automatisierten Vorrichtung zur Palettierung (110) des Stückgutgebindes (116) als Stückgutgebinde oder Stückgutgebindestapel (102).

2. Verfahren nach Anspruch 1, **dadurch gekennzeichnet, dass** das getrennte Stückgutgebinde (116) von der Fördereinrichtung (23) zu einer automatisierten Stapeleinrichtung (115) befördert wird, welche mittels einer an einem Träger (116) bewegbar angeordneten Hubfördereinrichtung (124) das getrennte Stückgutgebinde (116) aufnimmt und das getrennte Stückgutgebinde (116) mittels der Hubfördereinrichtung (124) in eine Höhe angehoben wird, welche ausreichend ist, dass unter das getrennte Stückgutgebinde (116) ein weiteres getrenntes Stückgutgebinde (116) plazierbar ist, und das angehobene Stückgutgebinde (116) mittels einer am Träger (126) bewegbar angeordneten Halte- und Ausrichteinrichtung (132) im Bereich des Auflagebereichs (155) lösbar gehalten wird und die Hubfördereinrichtung (124) abgesenkt wird und das weitere getrennte Stückgutgebinde (116) aufnimmt und das lösbar gehaltene Stückgutgebinde mittels der Halte- und Ausrichteinrichtung (132) in einer zum plazierten, weiteren getrennten Stückgutgebinde (116) ausgerichteten Lage an der Oberseite des weiteren getrennten Stückgutgebindes (116) zur Bildung eines Stückgutgebindestapels (102) angeordnet wird.

3. Verfahren nach Anspruch 1 oder 2, **dadurch gekennzeichnet, dass** der Stückgutgebindestapel (102) angehoben und an eine Fördereinrichtung (127) übergeben wird.

4. Verfahren nach einem der vorstehenden Ansprüche, **dadurch gekennzeichnet, dass** getrennte Stückgutgebinde (116) und/oder Stückgutgebindestapel (102) mittels der Fördereinrichtung (23, 127) zu einer Sequenziervorrichtung (113) befördert werden, welche mindestens zwei Sequenzierbahnen (115) und eine Sequenziereinrichtung (114) aufweist, welche eingangsseitig der Sequenzierbahnen (115) vorsehbar ist und Stückgutgebinde (116) und/oder Stückgutgebindestapel (102) mittels der Sequenziereinrichtung (114) in einer vorbestimmten Reihenfolge auf den Sequenzierbahnen (115) angeordnet werden.

5. Verfahren nach Anspruch 4, **dadurch gekennzeichnet, dass** auf den Sequenzierbahnen (115) angeordnete Stückgutgebinde (116) und/oder Stückgutgebindestapel (102) mittels einer Sequenziereinrichtung (114), welche ausgangsseitig der Sequenzierbahnen (115) vorsehbar ist, in einer vorbestimmten Reihenfolge auf die Fördereinrichtung abgegeben werden und die Fördereinrichtung die Stückgutgebinde (116) und/oder Stückgutgebindestapel (102) zur automatisierten Vorrichtung zur Palettierung (110) des Stückgutgebindes (116) als Stückgutgebinde (116) oder Stückgutgebindestapel (102) befördert.

6. Verfahren nach einem der vorstehenden Ansprüche, **dadurch gekennzeichnet, dass** die automatisierte Vorrichtung zur Palettierung (110) die Stückgutgebinde (116) und/oder Stückgutgebindestapel (102) in einer vorbestimmter Reihenfolge auf der Zielpalette (111) anordnet.

7. Verfahren nach einem der vorstehenden Ansprüche, **dadurch gekennzeichnet, dass** die automatisierte Vorrichtung zur Palettierung (110) die Stückgutgebinde (116) und/oder Stückgutgebindestapel (102) beim Transport von der Fördereinrichtung zur Zielpalette (111) mittels eines den Auflagebereich (155) des Stückgutgebindes (116) und/oder Stückgutgebindestapels (102) halternden Tragemittels (149) aufnimmt und mittels eines zum lösbaren Saugeingriff mit der Seitenwand des Gebindes (2, 6) ausgebildeten Saugmittels (153) haltert.

8. Verfahren nach einem der vorstehenden Ansprüche, **dadurch gekennzeichnet, dass** die automatisierte Vorrichtung zur Palettierung (110) an der Oberseite eines Stückgutgebindes (116) und/oder Stückgutgebindestapels (102) einen Klappbehälter (119) mit Boden und klappbaren Seitenwänden im zusammengeklappten Zustand positioniert, wobei auf dem Klappbehälter (119) Stückgutgebinde (116) und/oder Stückgutgebindestapel (102) positionierbar sind.

9. Verfahren nach einem der vorstehenden Ansprüche, **dadurch gekennzeichnet, dass** die Stückgutgebinde (116) und/oder Stückgutgebindestapel (102) mittels einer eine Mattenkette (103) als Fördermittel aufweisenden Fördereinrichtung (112) befördert werden und die Position der auf der Mattenkette (103) positionierten Stückgutgebinde (116) und/oder Stückgutgebindestapel (102) bei der jeweiligen Positionierung des Stückgutgebindes (102) und/oder Stückgutgebindestapels (102) auf die Mattenkette (103) erfasst wird.

10. Verfahren nach einem der vorstehenden Ansprüche, **dadurch gekennzeichnet, dass** Stückgutgebindestapel (102) aus Stückgutgebinden (116) mit gleichen Waren gebildet werden und die Position der auf der Fördereinrichtung übergebenen Stückgutgebinde (116) mit gleichen Waren erfasst wird.

11. System (101) zur Kommissionierung von auf Artikelpaletten (107) in einem Palettenlager (106) in stapelbaren Stückgutgebinden (116) bereit gestellter Waren, bei dem Waren auf einer Zielpalette (111) in den stapelbaren Stückgutgebinden (116) zusammengeführt werden, zur Durchführung des Verfahrens nach einem der Ansprüche 1 bis 10, **gekennzeichnet durch** eine automatisierte Vorrichtung zur Depalettierung (9, 38) der Stückgutgebinde von der Artikelpalette (107), wobei die Vorrichtung eine Eingriffseinrichtung (18) aufweist, die zum lösbaren Eingriff mit einer Ausnehmung einer Seitenwand des Stückgutgebindes (116) ausgebildet ist, und die Vorrichtung ein Tragemittel (14) zur Aufnahme des Stückgutgebindes aufweist, und das System eine Fördereinrichtung (127) zur Beförderung des depalettierten Stückgutgebindes zu einer automatisierten Stapeleinrichtung (125) zur Bildung von Stückgutgebindestapel (102) sowie eine automatisierte Vorrichtung zur Palettierung (110) des depaletierten Stückgutgebindes in der Form eines getrennten Stückgutgenbindes oder eines mindestens zwei Stückgutgebinde aufweisenden Stückgutgebindestapels auf der Zielpalette (111) besitzt.

12. System nach Anspruch 11, **gekennzeichnet durch** eine Sequenziervorrichtung (113) und eine Stückgutgebinde (116) und/oder Stückgutgebindestapel (102) von der Vorrichtung zur Depalettierung (9, 38) oder der Stapeleinrichtung (125) zur Sequenziervorrichtung (113) befördernde Fördereinrichtung.

13. System nach Anspruch 11 oder 12, **gekennzeichnet durch** eine Fördereinrichtung (127), welche depalletierte Stückgutgebinde (116) und/oder Stückgutgebindestapel (102) zwischen der Vorrichtung zur Depalettierung (9, 38) oder der Stapeleinrichtung (125) und/oder der Sequenziervorrichtung (113) befördert.

14. System nach einem der Ansprüche 11 bis 13, **dadurch gekennzeichnet, dass** die Fördereinrichtung eine Stückgutgebinde (116) und/oder Stückgutgebindestapel (102) aufnehmende Mattenkette (102) als Fördermittel aufweist und das System eine Steuervorrichtung (159) aufweist, welche zur Erfassung der jeweiligen Position der Stückgutgebinde und/oder Stückgutgebindestapels auf der Mattenkette eingerichtet ist und die Steuervorrichtung zur Überwachung der Position der Stückgutgebinde und/oder Stückgutgebindestapel von der Übergabe des getrennten Stückgutgebindes von der Trageplatte an die Fördereinrichtung bis zur Positionierung auf der Zielpalette eingerichtet ist.

## Claims

1. Method for commissioning goods provided on article palettes (107) in a palette warehouse (106) in stackable piece goods containers (116), in which goods on a target palette (11) are combined to form the stackable piece goods containers, and the piece goods containers (116) are provided with a lower abutment region (155) that can be raised by a support means (14) of an automatic device for de-palletising the piece goods containers from an underlay and a side wall (158), **characterised by** the steps of:
- causing a detachable engagement of a holding device (11) of the device (9) for de-palletising with a recess (5) of the side wall (158) of the piece goods container (116)
- raising the piece goods container (116) by means of the holding device (11) for separating the abutment region of the piece goods container (116) at least along a partial region from the underlay for causing an intermediary chamber (21) between the abutment region (155) and the underlay
- introducing the support means (14) into the intermediary chamber (21)
- separating the raised piece goods container (116) from the underlay by means of the support means (14) introduced into the intermediary chamber (21)
- delivering the separated piece goods container (116) from the support means (14) to a conveying device (23)
- transporting the separated piece goods container (116) by means of the conveying device (23) to an automatic device for palletising (110) the piece goods container (116) in the form of a separated piece goods container or a piece goods container stack (102) having at least two piece goods containers
- positioning the separated piece goods container (116) and/or the piece goods container stack on the target palette (111) by means of the automatic device for palletising (110) the piece goods container (116) as a piece goods container or piece goods container stack (102).

2. Method according to claim 1, **characterised in that** the separated piece goods container (116) is conveyed by the conveying device (23) to an automatic stacking device (115), which receives the separated piece goods container (116) by means of a lifting conveying device (124) moveably arranged on a support (116), and the separated piece goods container (116) is raised by means of the lifting conveying device (124) to a height which is sufficient for a further separated piece goods container (116) to be able to be placed below the separated piece goods container (116), and the raised piece goods container (116) is releasably held in the region of the abutment region (155) by means of a holding and aligning device (132) moveably arranged on the support (126), and the lifting conveying device (124) is lowered and receives the further separated pieces goods container (116), and the releasably held piece goods container is arranged in a position aligned for placing further separated piece goods containers (116) on the upper side of the further separated piece goods container (116) by means of the holding and aligning device (132) for forming a piece goods container stack (102).

3. Method according to claim 1 or 2, **characterised in that** the piece goods container stack (102) is raised and delivered to a conveying device (127).

4. Method according to one of the preceding claims, **characterised in that** separated piece goods containers (116) and/or piece goods container stacks (102) are conveyed to a sequencing device (113) by means of the conveying device (23, 127), said sequencing device having at least two sequencing tracks (115) and a sequencing device (114), which can be provided on the input side of the sequencing tracks (115), and piece goods containers (116) and/or piece goods container stacks (102) are arranged in a predetermined sequence on the sequencing tracks (115) by means of the sequencing device (114).

5. Method according to claim 4, **characterised in that** piece goods containers (116) arranged on the sequencing tracks (115) and/or piece goods container stacks (102) are output in a predetermined sequence onto the conveying device by means of a sequencing device (114), which can be provided on the output side of the sequencing tracks (115), and the conveying device conveys the piece goods containers (116) and/or piece goods container stacks (102) to the automatic device for palletising (110) the piece goods container (116) as piece goods containers (116) or piece goods container stacks (102).

6. Method according to one of the preceding claims, **characterised in that** the automatic device for palletising (110) arranges the piece goods containers (116) and/or piece goods container stacks (102) in a predetermined sequence on the target palette (111).

7. Method according to one of the preceding claims, **characterised in that** the automatic device for palletising (110) receives the piece goods containers (116) and/or piece goods container stacks (102) during transportation from the conveying device to the target palette (111) by means of support means (149) holding the abutment region (155) of the piece goods container (116) and/or piece goods container stack (102) and holds them by means of suction means (153) formed for the releasable suction engagement with the side wall of the container (2, 6).

8. Method according to one of the preceding claims, **characterised in that** the automatic device for palletising (110) positions a folding container (119) with a base and foldable side walls in the collapsed state on the upper side of a piece goods container (116) and/or piece goods containers stack (102), wherein piece goods containers (116) and/or piece goods container stacks (102) can be positioned on the folding container (119).

9. Method according to one of the preceding claims, **characterised in that** the piece goods containers (116) and/or piece goods container stacks (102) are conveyed by means of a conveying device (112) having a modular chain (103) as the conveying means, and the position of the piece goods containers (116) and/or piece goods container stacks (102) positioned on the modular chain (103) is detected when respectively positioning the piece goods container (102) and/or piece goods container stacks (102) on the modular chain (103).

10. Method according to one of the preceding claims, **characterised in that** piece goods container stacks (102) are formed from piece goods containers (116) with the same goods, and the position of the piece goods containers (116) delivered on the conveying device with the same goods is detected.

11. System (101) for commissioning goods provided on article palettes (107) in a palette warehouse (106) in stackable piece goods containers (116), in which goods are combined on a target palette (111) in the stackable piece goods containers (116), for carrying out the method according to one of claims 1 to 10, **characterised by** an automatic device for de-palletising (9, 38) the piece goods containers from the article palette (107), wherein the device has an engagement device (18), which is formed for the releasable engagement with a recess of a side wall of the piece goods container (116), and the device has support means (14) for receiving the piece goods container, and the system has a conveying device (127) for conveying the de-palletised piece goods container to an automatic stacking device (125) for forming piece goods container stacks (102) and an automatic device for palletising (110) the de-palletised piece goods container in the form of a separated piece goods container or a piece goods container stack having at least two piece goods containers on the target palette (111).

12. System according to claim 11, **characterised by** a sequencing device (113) and a conveying device conveying piece goods containers (116) and/or piece goods container stacks (102) from the device for de-palletising (9, 38) or the stacking device (125) to the sequencing device (113).

13. System according to claim 11 or 12, **characterised by** a conveying device (127), which conveys de-palletised piece goods containers (116) and/or piece goods container stacks (102) between the device for de-palletising (9, 38) or the stacking device (125) and/or the sequencing device (113).

14. System according to one of claims 11 to 13, **characterised in that** the conveying device has a modular chain (102) receiving piece goods containers (116) and/or piece goods container stacks (102) as the conveying means, and the system has a control device (159), which is set up to detect the respective position of the piece goods containers and/or piece goods container stack on the modular chain, and the control device is set up to monitor the position of the piece goods containers and/or piece goods container stacks from the delivery of the separated piece goods container from the support plate to the conveying device until positioning on the target palette.

## Revendications

1. Procédé de préparation de commandes concernant des marchandises disposées dans des bacs de marchandise de détail (116) gerbables, sur des palettes d'articles (107), dans un entrepôt de palettisation (106), dans le cadre duquel des marchandises sont réunies sur une palette cible (11) dans les bacs de marchandise de détail gerbables, et les bacs de marchandise de détail (116) sont pourvus d'une paroi latérale (158) et d'une zone d'assise inférieure (155) susceptible d'être soulevée d'un support par un organe porteur (14) d'un dispositif automatisé de dépalettisation des bacs de marchandise de détail, **caractérisé par** les étapes consistant à :
- entraîner une mise en prise réversible d'un dispositif de retenue (11) du dispositif de dépalettisation (9) avec un évidement (5) de la paroi latérale (158) du bac de marchandise de détail (116),
- soulever le bac de marchandise de détail (116) au moyen du dispositif de retenue (11) afin de séparer du support la zone d'assise du bac de marchandise de détail (116), au moins le long d'une zone partielle, afin de produire un interstice (21) entre la zone d'assise (155) et le support,
- introduire l'organe porteur (14) dans l'interstice (21),
- séparer du support le bac de marchandise de détail (116) soulevé, au moyen de l'organe porteur (14) introduit dans l'interstice (21),
- transférer le bac de marchandise de détail (116) séparé, de l'organe porteur (14) à un convoyeur (23),
- transporter le bac de marchandise de détail (116) séparé, au moyen du convoyeur (23), vers un dispositif automatisé de palettisation (110) du bac de marchandise de détail (116) sous la forme d'un bac de marchandise de détail séparé ou d'un empilement de bacs de marchandise de détail (102) présentant au moins deux bacs de marchandise de détail,
- disposer le bac de marchandise de détail (116) séparé et/ou l'empilement de bacs de marchandise de détail sur la palette cible (111) au moyen du dispositif automatisé de palettisation (110) du bac de marchandise de détail (116) sous forme de bac de marchandise de détail ou d'empilement de bacs de marchandise de détail (102).

2. Procédé selon la revendication 1, **caractérisé en ce que** le bac de marchandise de détail (116) séparé est convoyé par le convoyeur (23) vers un dispositif de gerbage automatisé (115) qui reçoit le bac de marchandise de détail (116) séparé, au moyen d'un convoyeur élévateur (124) agencé mobile sur un dispositif support (116), et le bac de marchandise de détail (116) séparé est soulevé au moyen du convoyeur élévateur (124) à une hauteur suffisante pour pouvoir placer un autre bac de marchandise de détail (116) séparé sous ledit bac de marchandise de détail (116) séparé, et ledit bac de marchandise de détail (116) soulevé est retenu de façon réversible au niveau de sa zone d'assise (155) au moyen d'un dispositif de retenue et d'orientation (132) agencé mobile sur le dispositif support (126) et le convoyeur élévateur (124) est abaissé et reçoit l'autre bac de marchandise de détail (116) séparé, et le bac de marchandise de détail retenu de façon réversible est agencé, au moyen du dispositif de retenue et d'orientation (132), selon une position orientée par rapport à l'autre bac de marchandise de détail (116) séparé placé, sur le dessus de l'autre bac de marchandise de détail (116) séparé afin de former un empilement de bacs de marchandise de détail (102).

3. Procédé selon la revendication 1 ou 2, **caractérisé en ce que** l'empilement de bacs de marchandise de détail (102) est soulevé et transféré à un convoyeur (127).

4. Procédé selon l'une des revendications précédentes, **caractérisé en ce que** des bacs de marchandise de détail (116) séparés et/ou des empilements de bacs de marchandise de détail (102) sont convoyés au moyen du convoyeur (23, 127) vers un dispositif de séquençage (113) présentant au moins deux voies de séquençage (115) et un organe de séquençage (114) susceptible d'être prévu côté entrée des voies de séquençage (115), et des bacs de marchandise de détail (116) et/ou des empilements de bacs de marchandise de détail (102) sont agencés sur les voies de séquençage (115) au moyen de l'organe de séquençage (114) selon un ordre prédéterminé.

5. Procédé selon la revendication 4, **caractérisé en ce que** des bacs de marchandise de détail (116) et/ou des empilements de bacs de marchandise de détail (102) agencés sur les voies de séquençage (115) au moyen d'un organe de séquençage (114) susceptible d'être prévu côté sortie des voies de séquençage (115), sont délivrés sur le convoyeur selon un ordre prédéterminé, et le convoyeur convoie les bacs de marchandise de détail (116) et/ou les empilements de bacs de marchandise de détail (102) vers le dispositif automatisé de palettisation (110) du bac de marchandise de détail (116) sous forme de bacs de marchandise de détail (116) ou d'empilements de bacs de marchandise de détail (102).

6. Procédé selon l'une des revendications précédentes, **caractérisé en ce que** le dispositif automatisé de palettisation (110) agence les bacs de marchandise de détail (116) et/ou les empilements de bacs de marchandise de détail (102) selon un ordre prédéterminé sur la palette cible (111).

7. Procédé selon l'une des revendications précédentes, **caractérisé en ce que** le dispositif automatisé de palettisation (110) reçoit les bacs de marchandise de détail (116) et/ou les empilements de bacs de marchandise de détail (102), dans le cadre du transport depuis le convoyeur vers la palette cible (111), au moyen d'un organe porteur (149) retenant la zone d'assise (155) du bac de marchandise de détail (116) et/ou de l'empilement de bacs de marchandise de détail (102), et il les retient au moyen d'un organe à effet ventouse (153) conçu pour un contact réversible par effet ventouse avec la paroi latérale du bac (2, 6).

8. Procédé selon l'une des revendications précédentes, **caractérisé en ce que** le dispositif automatisé de palettisation (110) dispose un conteneur à rabats (119) doté d'un fond et de parois latérales rabattables, à l'état rabattu, sur le dessus d'un bac de marchandise de détail (116) et/ou d'un empilement de bacs de marchandise de détail (102), des bacs de marchandise de détail (116) et/ou des empilements de bacs de marchandise de détail (102) pouvant être disposés sur ledit conteneur à rabats (119).

9. Procédé selon l'une des revendications précédentes, **caractérisé en ce que** les bacs de marchandise de détail (116) et/ou les empilements de bacs de marchandise de détail (102) sont convoyés au moyen d'un convoyeur (112) présentant un tapis modulaire (103) servant de moyen de convoyage, et la position des bacs de marchandise de détail (116) et/ou empilements de bacs de marchandise de détail (102) disposés sur le tapis modulaire (103) est détectée lors de la disposition respective du bac de marchandise de détail (102) et/ou de l'empilement de bacs de marchandise de détail (102) sur le tapis modulaire (103).

10. Procédé selon l'une des revendications précédentes, **caractérisé en ce que** des empilements de bacs de marchandise de détail (102) sont constitués à partir de bacs de marchandise de détail (116) comportant des marchandises identiques et la position des bacs de marchandise de détail (116) comportant des marchandises identiques, qui sont transférés sur le convoyeur, est détectée.

11. Système (101) de préparation de commandes concernant des marchandises disposées dans des bacs de marchandise de détail (116) gerbables, sur des palettes d'articles (107), dans un entrepôt de palettisation (106), dans le cadre duquel des marchandises sont réunies sur une palette cible (111) dans les bacs de marchandise de détail (116) gerbables, en vue de la réalisation du procédé selon l'une des revendications 1 à 10, **caractérisé par** un dispositif automatisé de dépalettisation (9, 38) des bacs de marchandise de détail hors de la palette d'articles (107), ledit dispositif présentant un dispositif de mise en prise (18) conçu pour la mise en prise réversible avec un évidement présent dans une paroi latérale du bac de marchandise de détail (116), et ledit dispositif présentant un organe porteur (14) destiné à recevoir le bac de marchandise de détail, et ledit système possédant un convoyeur (127) destiné à convoyer le bac de marchandise de détail dépalettisé vers un dispositif de gerbage automatisé (125) servant à former des empilements de bacs de marchandise de détail (102) ainsi qu'un dispositif automatisé de palettisation (110), sur la palette cible (111), du bac de marchandise de détail dépalettisé sous la forme d'un bac de marchandise de détail séparé ou d'un empilement de bacs de marchandise de détail présentant au moins deux bacs de marchandise de détail.

12. Système selon la revendication 11, **caractérisé par** un dispositif de séquençage (113) et un convoyeur convoyant des bacs de marchandise de détail (116) et/ou des empilements de bacs de marchandise de détail (102) depuis le dispositif de dépalettisation (9, 38) ou le dispositif de gerbage (125) vers le dispositif de séquençage (113).

13. Système selon la revendication 11 ou 12, **caractérisé par** un convoyeur (127) qui convoie des bacs de marchandise de détail (116) et/ou des empilements de bacs de marchandise de détail (102) dépalettisés entre le dispositif de dépalettisation (9, 38) ou le dispositif de gerbage(125) et/ou le dispositif de séquençage (113).

14. Système selon l'une des revendications 11 à 13, **caractérisé en ce que** le convoyeur présente, comme moyen de convoyage, un tapis modulaire (102) recevant des bacs de marchandise de détail (116) et/ou des empilements de bacs de marchandise de détail (102), et le système présente un dispositif de commande (159) agencé pour détecter la position respective des bacs de marchandise de détail et/ou des empilements de bacs de marchandise de détail sur le tapis modulaire, et le dispositif de commande est agencé pour surveiller la position des bacs de marchandise de détail et/ou des empilements de bacs de marchandise de détail depuis le transfert du bac de marchandise de détail, séparé de la plaque de support, au convoyeur jusqu'à leur disposition sur la palette cible.
